# EUROPÄISCHE PATENTSCHRIFT

(11) **EP 3 723 961 B1**
(45) Veröffentlichungstag und Bekanntmachung des Hinweises auf die Patenterteilung: **09.10.2024**
(21) Anmeldenummer: 18806974.4
(22) Anmeldetag: 01.11.2018
(51) Int. Cl.: B29C 48/44, B29C 48/76, B29C 48/80, B29C 48/82, B29B 7/48, B29B 7/74, B29B 7/82

(54) **EXTRUDER ZUM EXTRUDIEREN VON STOFFEN, VORZUGSWEISE VON KUNSTSTOFFEN**
EXTRUDER FOR THE EXTRUSION OF MATERIALS, PREFERABLY OF PLASTICS
EXTRUDEUSE POUR L'EXTRUSION DE MATIÈRES, DE PRÉFÉRENCE DE MATIÈRES PLASTIQUES

(30) Priorität: 11.12.2017 DE 102017011371; 07.02.2018 DE 102018001263; 22.02.2018 DE 102018001412
(43) Veröffentlichungstag der Anmeldung: 21.10.2020
(73) Patentinhaber: ENTEX RUST & MITSCHKE GMBH, 44805 Bochum (DE)
(72) Erfinder: RUST, Harald, 44805 Bochum (DE)
(74) Vertreter: Kaewert, Klaus
(86) Internationale Anmeldenummer: PCT/EP2018/000496
(87) Internationale Veröffentlichungsnummer: WO 2019/115002

(56) Entgegenhaltungen:
- WO-A2-2008/058609
- WO-A2-2013/158291
- DE-A1- 10 351 973
- DE-A1- 102009 038 280
- DE-A1- 19 518 255
- DE-A1- 19 539 203
- DE-C1- 4 231 232
- JP-U- S53 160 470

## Beschreibung

Extruder werden immer wieder zur Bearbeitung Stoffen, vorzugsweise von Kunststoffen eingesetzt, die mindestens teilweise in einem schmelzflüssigen Zustand sind oder in einen schmelzflüssigen Zustand gebracht werden können. Bei diesen Stoffen handelt es sich häufig um Polymere , Copolymere und Elastomere. Im Extruder können Stoffe unterschiedlichster Art verarbeitet werden, auch Feststoffe mit schmelzflüssigen Stoffen, auch Polymermischungen, auch Copolymermischungen, auch Elastomere, auch in Mischungen mit anderen zusätzlichen Stoffen, auch mit Gasen.

Die Stoffe können zum Beispiel sein:
Acrylnitril (ABAK), Acrylnitil/Budadien/Styrol (ABS), ABS mit Polycarbonat (ABS+PC), Acrylat-Kautgschuk (ACM ), Ethylen-Acrdylesstrer-Kautschuk (AEPCMS), Acrylnitril/Ethylen-PLropylen-Dien/Styrol (AES), Nitroso-Kautschuk (AFMU), Acrylnitrilmetacrylat (AMAK), Acrylnitril/Methylmethacrylat (AMMA), Acrylnitril/Butadien/Acrylat(ANBA), Acrylnitril/Methacrylat) ANMA), Aromatische Polyester (APE), Acrylnitril/chloriertes Polyetrhylen/Sstryrol (APE-CS), Acylnitil/Styrol/Acrylester(ASA), TPE, Basis Aliphatisches Polyurethan(ATPU) Urethan-Kautschuk, Polyester (AU), Benzylcellulose (BC) Butadien-Kautschuk (BR), Cellulosesacetat (CA), Celluloseacetobutyrat (CAB), Celluloseacetopropionat (CAP), Kresol-Formaldehyd (CF), Hydratisierte Cellulose, Zellglas (CSH), Chlorierter PE-Kautschuk (CM), Carboxymethylcellulose (CMC), Cellulosenitrat, Celluloid /CN), Epichlorhydrin-Kautschuk (CO), Cyclopolyolefinpolymere, Topas (COC), Cellulosepropionat (CPL), Chloropren-Kautschuk (CR), Casein-Kunststoffe (CS), Casein-Formaldehyd, Kunsthorn (CSF), Chlorsulfonierter PE(-Kautschuk) (CSM), Cellulosetriacetat (lCTA), Dicyclopentadien(DCP), Ethylen/Methacrylsäure (EAA), EthylenVinylacetat-Kautschuk (EAM), Ethylen/Butylacrylat (EBA), Ethylcellulose (EC), Ethylencopolymer-Bitumen-Blend(ECB), Epicchlorhydrin-Kautschuk(ECD), Ethylen/Chortrifluorethylen (ECTFE), Ethylen/Ethylacrylat (EEA), Polyethylen Ionomere (EIM), Ethylen/Methacrylsäure(EMAK), exo-Metehylenlaton (EML), Ethylidennorbornen (EN), Ethylen-Acrynitril-Kautschuk (ENM), Epoxidierter Naturkautschuk (ENR), Ethylen/Propylen (EP), EpoxidHarze, Polyadditions-Harze (EP), Ethylen/Propylen/(Dien)/-Kautschuke (EP(D)M, Epichlorhydrin-Kautschuk(ETER), Ethylen/Tetrafluorethylen (ETFE), Urethan-Kautschuk, Polyether (EU), Ethylen/Vinylacetat (EVA), Ethylen/Vinylalkohol, EVOH (EVAL), TPE, Basis Ethylen/Vinylacetat+Polyvinylidenchlorid (EVAPVDC), Ethylen/Vinylalkohol, EVAL(EVOH), Tatrafluorethylen/Hexafluorpropylen (FEP), Furan/Formaldehyd (FF), Perfluor-Kautschuk (FFKM), Fluor-Kautrschuk(FKM), Propylen/Tetrafluorethylen-Kautschuk (FPM) Phospazen-Kautschuk mit Fluoralkyl- oder Fluorozyalkyl-gruppen(FZ), Proplenoxid-Kautschuk (GPO), Halogenierter Butyl-Kautschuk (HIIR), Hydrierter NBR-Kautschuk HNBR), höhere alpha-Olefine (HOA), Pyrrone, Plycyclone, Leiterpolymere (HAT-P), Polycyclone, Leiterpolymere(HT-PP), Polytrriazine, Leiterpolymere (HAT-PT), Butryl-Kajutrschuk (CIIR, BIIR) (IIR), Isopren-Kautschuk (IR), Kohlenwasserstoffharz (KWH), Liquid Christal Polymere (LCP), Methylmethacrylat/Acrylnitril/Butadien/Styrol (MABS), Methacrylat/Butadien/Styrol (MBS), Methylcellulose (MC), Melamin/Formaldehyd (MF), Melamin/UFormaldehy+ungesättigter Polyester (MF+UP), Melamin/Phenol-Formaldehyd(MPF), Methyl/Phenyl/Silicon-Kautschuk(MPQ), Methylmethacrylat/exo-Methylenlacton (MMAEML), Melamin/Phenol-Formaldehyd(MPF), Methyl/Silicon-Kautschuk (MQ), alpha-Methylstyrol (MS), Melamin/Harnstoff/-Formaldehyd (MUF) Melamin/HamstoffZPhenol/Formaldehyd(MVFQ), Polyacrylnitril (PAN), Polybuten-I (PB), Polybutylacrylat (PBA), Polybenzimidazol, Triazinpoloymer (PBI), Polybismaleinimid (PBMI), Polybutylennaphthalat (PBN), Polyoxadiabenzimidazol (PBO), Polybutylenterephthalat (PBT), Polycarbonat (PC) mit ABS oder AES, ASA, oder PBT oder PE-HD oder PEET oder PMMA oder PS oder PPE oder SB oder HI oder SMA oder TPU oder BPA, oder TMBPA oder TMC, Poly-3,3-bis-chlormethylpropylenoxid (PCPO), Polycyclohexandimethylterephthalat (PCT), Polychlortrifluoretrhylen (PCTFE), Polydiallylphthalat(PDAP), Polydicyclopentadien (PDCPD), Polyethylen (PE), Polyesteramid (PEA), Polyestercarbonat (PEC), Polyetherketon (PEK), Polyethylennaphthalat (PEN), Polyenthylenoxid (PEOX), Polyethersulfone (PES), Polyesterimid (PESI), Polyethlenterephathalat (PET) mit Elastomer oder mitr MBS oder PBT oder PMMA oder Pmma oder PSU, Phenol/Formaldehyd (PF), Phenol/Formaldehyd +Epoxid (PF+EP), PTFE/Perfluoralcylvinylether, Perfluoralkoxy (PFA), Phenol/Formaldehyd/Melamin (PFMF), Polyperfluortrimethyltriazin-Kautschuk PFMT), PTFE-Copolymerisat (PFTEAF), Polyhydroxylalkalin (PHA), Polyhydroxybenzoat (PHBA), Polyimidimid (PI), Polyisobutylen (PIB), Polyimidsulfon (PISO), Aliphatisches Polyketon (PK), Polylactid (PLA), Polymethylacrylat (PMA), Polymethhacrylimid (PMI), Polymethylmethacrylat (PMMA), Polyacrylesterimid (PMMI), Poly-4-methylpenten-1 (PMP), Poly-Alpha-methylstyrol (PMS), Fluor/Phosphazen-Kautschuk (PNF), Polynorbornen-Kautschuk (PNR), Polyolefine, Polyolefin-Derivate und Polyolefin-Copolymerisate (PO), Poly-p-hydroxy-benzoat (POB), Polyoxymethylen (Polyacetalharz, Polyformaldehyd) (POM), POM mit PUR-Elastomer oder Homopolymerisat oder Copolymerisat, Polyphthalat (PP), PP-Carbonat, PP mit Block-Copolymere oder chloriert oder mit Homopolymerisat oder mit Metallocen hergestellt, Polyamid (PPA), Polyphenylenether (PPE), PPE mit PA oder mit PBT oder mit PS, Polydphenyloxidpyrronellithimid U(PPI), Polyparamethylstyrol (PPMS), Polyphenylenoxid (PPO), Polypropylenoxid (PPOX), Poly-p-Phenylen (PPP), Polyphenylensulfid (PPS), Polyphenulensulfon (PPSU), Poly-m-Phenylen/Terephthalamid (PPTA), Polyphenylvinyl (PPV), Polypyrrol (PPY), Polystryrol (PS), PS mitr PC oder PE oder PPE, Polysaccharide (PSAC), Polysulfone (PSU), Polytetrafluorethylen (PTFE), Polytetrahydrofuran (PTHF), Polybutrylenterephthalat (PTMT), Polyester (PTP), Polytrimethyleterephthalat (PTT), Polyurethan (PUR), Polyvinylacetat (PVAC), Polyvinylalkohol (PVAL), Polyvinylbutyral (PVB), Polyvinylisobutylether (PVBE), Polyvinylchlorid (PVC). Polyvinylidenchlorid (PVDC), Polyvinylidenfluorid (PVDF), Polyvinylfluorid (PVF), Polyvinylformal (PVFM), Polyvinylcarbazol (PVK), Polyvinylmethylether (PVME), Polyvinylcyclohexan (PVZH), Phosphazen/Kautschuk mit Phenoygruppen (PZ), Resorrcin/Formaldehyd (RF), Stryrol/Acrylnitril (SAN), Stryrol/Butadien(SB), Styrol/Butadien/Methylmethacrylat (SBMMA), StyrolButadien-Kautschuk (SBR), Styrol/Butadien/Styrol (SBS), Styrol-Ethenbuten/Stryrol (SEBS), Styrol/Ethylen/Propylen/Dien-Kautschuk (SEPDM), Silicon (SI), Styrol/Isopren/Maleinsäureanhydrid (SIMA), Isopren/Styrol-Kautschuk (SIR), Styrol/Isopren/Styrol (SIS), Styrol/Maleinsäureanhydrid(SAM), Styrol/Maleinsäureanhydrid/Butadien(SMAB), Styrol/Methylmethacrylat (SMMA), Stryrol-alpha-Methylstyrol (SMS, Polyester (SP), Thiocarbonyldifluorid-Copolymer-Kautschuk (TCF), TPE mit EPDM+PP oder PBBS+PP, TPE mit PEBBS+PPE oder PEBS+PP oder mit PESST oder PESTRUR oder mit PESTEST oder mit PESTUR oder mit PEUR oder mit SBS+PP, Thermoplastische Elastomere (TPE), Thermoplastische Stärke (TPS), Harnstoff/Formaldehyd (UF), Vinylchlorid (VC), Vinylchlorid/Ethylen(VCE), Vinylchlorid/Maleinsäureanhydrid(VCMA), Vinylester (VE),

Die vorstehenden Stoffe können auch in Mischungen miteinander und mit anderen Stoffen vorkommen. Oder es kommen Derivate von vorstehenden Stoffen allein oder in Mischungen mit anderen Stoffen vor.

Die gewählten Stoffe können auch
- Wirkungen verstärken
- zusätzliche Wirkungen entfalten, zum Beispiel die Warmfestigkeit oder die Verschleißfestigkeit erhöhen oder die Säurefestigkeit erhöhen oder UV-Beständigkeit oder die Festigkeit oder die Nachgiebigkeit erhöhen oder eine Vernetzung der Moleküle bewirken oder eine Reaktion der Polymere bewirken oder eine Verfärbung der Polymere bewirken oder die Farbbeständigkeit der Polymere erhöhen oder den Schmelzpunkt verändern oder die Dispergierung und Homogenisierung erleichtern oder zu einer Schaumbildung führen oder die Schaumbildung erleichtern oder das Extrudieren erleichtern oder die Reibungswerte verändern
- Füllstoffe sein

Die Extruder können beim Extrudieren verschiedene Aufgaben erfüllen.

Zu den Aufgaben gehören beispielsweise
- die Mischung mit anderen Stoffen und/oder
- die Reaktion mit anderen Stoffen und/oder
- die Umformung der Stoffe
- die Abtrennung flüchtiger Bestandteile durch Entgasen

Für die Extrusion finden neben den Polymeren noch diverse andere Materialien Verwendung. Dazu gehören Füllstoffe, Farbstoffe, Weichmacher, Stabilisatoren und andere Zusatz- und Hilfsstoffe bzw. Additive. Alle Stoffe werden im Folgenden als Einsatzstoffe bezeichnet. Die Einsatzstoffe kommen in fester Form oder in flüssiger Form vor.

Bei einer Benutzung der Extruder zum Polymerisieren werden Monomere mit Polymerisationsmitteln zusammen gebracht.

Der Extruder kann auch genutzt werden. um sonstige Reaktion herbeizuführen. Das gilt sowohl für die Schaffung neuer, zum Beispiel größerer Moleküle, als auch für die Aufhebung! Aufbrechen von Molekülen.

Unterschiedliche Polymere und deren Bearbeitung in einem Extruder sind beispielsweise in folgenden Druckschriften beschrieben:
DE112014001304, DE102013224774, DE102012212883, DE69922626, DE69832493, DE69806358, DE69614012, DE69521056, DE69422704, DE69225962, DE68912741, DE19609715, DE10156088, DE10029553, DE4340887, DE4340136.

Bei den Extrudern werden folgende Hauptgruppen unterschieden:
Einschneckenextruder, Doppelschneckenextruder, Planetwalzenextruder.

Einschneckenextruder bestehen aus einer umlaufenden Schnecke und einem umgebenden Gehäuse. Mit Einschnecken läßt sich ein hoher Druckaufbau und eine große Förderwirkung erzielen. Jedoch ist die Homogenisierung und Dispergierung im Einschneckenextruder schwach. Gleichwohl sind Einschneckenextruder immer noch die meistbenutzten Extruder.

Doppelschneckenextruder bestehen aus zwei parallel zueinander und miteinander kämmenden Schnecken und einem umgebenden Gehäuse. Mit Doppelschnecken läßt sich gleichfalls ein hoher Druckaufbau und eine hohe Förderwirkung erzielen. Die Mischwirkung des Doppelschneckenextruders ist um vieles größer als bei einem Einschneckenextruder, Jedoch erfahren die Polymere aufgrund der mechanischen Belastung im Doppelschneckenextruder eine mehr oder weniger große Veränderung ihrer Molekülketten. Es gibt Anwendungen, bei denen das dahinstehen kann. Für andere Anwendungen ist die Erhaltung der Molekülketten wichtig. Es gibt auch Anwendungen, bei denen ein gezieltes Aufbrechen von Molekülketten gewünscht ist.

Zur schonenden Bearbeitung der Polymere bietet sich der Planetwalzenextruder an. Überraschenderweise können Molekülketten auch mit einem Planetwalzentextruder aufgebrochen werden.

Planetwalzenextruder bestehen aus einer mehren Teilen, nämlich einer
- umlaufenden Zentralspindel,
- einem die Zentralspindel im Abstand umgebenden Gehäuse mit einer Innenverzahnung und
- Planetspindeln, welche in dem Hohlraum zwischen Zentralspindel und innen verzahntem Gehäuse wie Planeten um die Zentralspindel umlaufen.

Soweit im Folgenden von einer Innenverzahnung des Gehäuses gesprochen wird, so schließt das auch ein mehrteiliges Gehäuse mit einer Buchse ein, welche die Innenverzahnung des Gehäuses bildet.

Im Planetwalzenextruder kämmen die Planetspindeln sowohl mit der Zentralspindel als auch mit dem innen verzahnten Gehäuse.

Zugleich gleiten die Planetspindeln mit dem in Förderrichtung weisenden Ende an einem Anlaufring.

Die Planetwalzenextruder besitzen im Vergleich zu allen anderen Extruderbauarten eine extrem gute Mischwirkung, jedoch eine geringere Förderwirkung.

Für eine kontinuierliche Aufbereitung bzw. Bearbeitung von Polymeren ist seit einigen Jahrzehnten bekannt, Planetwalzenextruder zu verwenden. Solche Verfahren und entsprechende Planetwalzenextruder sind insbesondere in folgenden Druckschriften beschrieben:
DE202016101935, DE 19939075A1, CA 69.8518, DE19653790A, DE 19638094A1, DE 19548136A1, DE1954214A, DE3908415A, DE19939077A, EP1078968A1,EP1067352A, EP854178A1, JP3017176, JP11080690, JP9326731, JP11-216754, JP11-216764, JP10-235713, WO2007/0874465A2, WO2004/101627A1, WO2004/101626A1, WO 2004/037941A2, EP1056584, PCT/EP99//00968, WO 94/11175, US6780271B1, US7476416.

Von Planetwalzenextruderabschnitten/Modulen wird dann gesprochen, wenn ein Extruder sich aus mehreren Abschnitten/Modulen zusammensetzt. Die Bezeichnung Abschnitt impliziert eine Länge, welche der betreffenden Bearbeitungsstrecke im Extruder angepaßt ist. Die Bezeichnung Modul weist dagegen auf einheitliche Längen hin. Trotz der einheitlichen Länge lassen sich auch längere Verarbeitungsstrecken darstellen. Dann werden verschiedene Module aneinander gesetzt.

Zumeist erfolgen in den Abschnitten/Modulen unterschiedliche Verarbeitungsschritte. Seit Jahren hat es sich als günstig erwiesen, Planetwalzenextruderabschnitte/Module mit Abschnitten/Module anderer Bauart zu kombinieren. Insbesondere werden Planetwalzenextruderabschnitte/Module mit einem als Einschneckenextruderabschnitt/Modul ausgebildeten Füllteil kombiniert. Über das Füllteil werden die Einsatzmaterialien für die Extrusion aus einem Fülltrichter abgenommen und in die nachgeordneten Planetwalzenextruderabschnitte/Module gedrückt um dort bearbeitet zu werden.

Soweit flüssige Treibmittel oder andere flüssige Stoffe in die Planetwalzenextrudserabschnitte/Module eingetragen werden sollen, hat es sich bewährt, diese Flüssigkeiten über Injektionsringe in die Anlage einzuspritzen, die zwischen jeweils zwei Planetwalzenextruderabschnitten/Modulen angeordnet sind.

Es ist auch bekannt, Schmelze über einen Seitenarmextruder oder eine Pumpe unmittelbar in einen Planetwalzenextruderabschnitt/Modul einzutragen.

Wegen der Einzelheiten und Variationen bekannter Planetwalzenextruder bzw. Abschnitten/Modulen wird Bezug genommen auf folgende Druckschriften:
DE 102005007952A1, DE102004061068A1, DE102004038875A1, DE102004048794A1, DE102004048773A1, DE102004048440A1, DE102004046228A1, DE102004044086A1, DE102004044085A1, DE102004038774A1, DE102004034039A1, DE102004032694A1, DE102004026799B4, DE102004023085A1, DE102004004230A1, DE102004002159A1, DE19962886A1, DE19962883A1, DE19962859A1, DE19960494A1, DE19958398A1, DE19956803A1, DE19956802A1, DE19953796A1, DE19953793A1.

Bei den Extrudern können zum Beispiel vorkommen: Füllzone, Aufschmelzzone, Mischzone/Dispergierzone/Homogenisierungszone und Austragzone. Die Austragzone kann umfassen, das Kühlen und Austragen. Kühlen und Austragen können jedoch auch als getrennte Zonen angesehen werden. Es kommen auch noch weitere Zonen vor.

Von einer Entgasungszone wird gesprochen, wenn flüchtige Bestandteile aus dem geschmolzenen oder plastifizierten Extrusionsgut entfernt werden sollen. Zu den flüchtigen Bestandteilen kann Luft gehören, die mit den Einsatzstoffen in den Extruder eingetragen wird.

Zu den flüchtigen Bestandteilen können andere Gase als Luft gehören.

Die flüchtigen Bestandteile können unter den im Extruder herrschenden Drücken in dem geschmolzenen oder plastifizierten Extrusionsgut verteilt sein, sogar in der Schmelze gelöst sein. Die Gase können auch durch Verdampfen bestimmter Fraktionen des Extrusionsgutes entstehen. Die Gase können sich auch schon von der Schmelze abgesetzt haben.

An zeitgemäßen Extrudern ist zumeist jeder Zone ein Extruderabschnitt/Modul zugeordnet. Das heißt, diese Extruder sind aus Abschnitten/Modulen zusammen gesetzt. In obigem Sinne sind die Abschnitte an einer der Verarbeitungsstrecke angepassten Gehäuselänge erkennbar, das heißt, an unterschiedlichen Gehäuselängen erkennbar. Ein modular aufgebauter Extruder besitzt vorzugsweise gleich lange Gehäuse.

Die DE19539203 zeigt, daß bei abschnittsweisem oder modulweisem Aufbau eines Extruders jeder Abschnitt mit eigenen Planetspindeln versehen ist. verschiedene Abschnitte/Module in Planetwalzenextruderbauweise können jedoch eine gemeinsame Zentralspindel besitzen. Nach der DE19539203 wird der abschnittsweise/modulweise Aufbau darüber hinaus genutzt, um am Ende jeden Abschnittes den unmittelbaren Schmelzedurchtritt von einem

Abschnitt/Modul in den anderen zu verhindern und die Schmelze zu zwingen am Ende eines Abschnitts vertikal oben aus dem Gehäuse auszutreten und anschließend wieder vertikal nach unten am Anfang des nach nachfolgenden Abschnitts/Moduls in dessen Gehäuse einzutreten. Nach der DE19539203 wird das durch Pumpen in den Schmelzeleitungen von einem Abschnitt/Modul in den anderen unterstützt.

Aus der DE 19539203 ist auch bekannt, den Durchmesser des Planetwalzenextruderteils zu vergrößern, um die Kühlung zu vergrößern.

Jedes Gehäuse ist an jedem Ende mit einem Flansch versehen, so daß jedes Gehäuse an einem Flansch mit seinem benachbarten Gehäuse verbunden werden kann. Zum Verspannen dienen in der Regel Spannschrauben. Für die Spannschrauben sind dann in den Gehäuseflanschen entsprechende Öffnungen vorgesehen.

Wenn ein Gehäuse am Austrag zugleich eine Düse bildet, so hat dieses Gehäuse nur an einem Ende einen Flansch, nämlich dem Ende, welches den anderen Gehäusen zugewandt ist. Wenn dagegen keine Düse am Austragende des Extruders vorgesehen ist, so kann es von wirtschaftlichem Vorteil sein, austragseitig auch ein Gehäuse mit einem Flansch an jedem Gehäueseende zu verwenden, obwohl der austragseitige Gehäuseflansch keine Befestigungsfunktion hat. Der wirtschaftliche Vorteil ist bei modular aufgebautem Extruder mit gleichen Gehäusen für alle Planetwalzenextrudermodule gegeben, weil für das austragseitige Gehäuse keine Sonderfertigung erforderlich wird.

Die aneinander befestigten Gehäuse umschließen üblicherweise Schnecken bzw. Zentralspindeln, welche sich durch alle Module erstrecken.
so miteinander verbunden sind, daß überlange Planetspindeln sich durch mehr als ein Gehäuse erstrecken können. In der DE 102010026535, DE10201600242 und der DE20 2010017571 ist zu den überlangen Planetspindeln ausgeführt:
Überlange Planetspindeln sind Spindeln, die sich über mehr als einen Planetwalzenextrudermodul erstrecken. Bei überlangen Planetspindeln ergibt sich eine reduzierte Zahl von Anlaufringen. Zugleich ist es von Vorteil, zwischen den Planetwalzenextrudermodulen, in denen die überlangen Planetspindel angeordnet sind, Zwischenringe anzuordnen, welche mit einer gleichen Innenverzahnung wie die Gehäusestücke versehen sind, so daß die Innenverzahnung sich auch zwischen den Planetwalzenextrudermodulen in den Zwischenringen fortsetzt. Um dabei auch gleiche Temperaturbedingungen wie an den Innenverzahnungen der Planetwalzenextrudermodulen zu erzeugen, ist es von Vorteil, auch die Zwischenringe zu temperieren. Das kann mit dem Heiz-Kühlkreis eines angrenzenden Planetwalzenextrudermoduls erfolgen.

Mit dieser Bauweise läßt sich ein Planetwalzenextruderabschnitt aus mehreren Planetwalzenextrudermodulen mit ähnlicher Qualität wie ein als Sonderstück gefertigter längerer Planetwalzenextruderabschnitt herstellen. Dabei ist weniger der Arbeitsaufwand entscheiden. Immerhin gibt es noch mit dem Zwischenstück, dessen Verbindung mit beiden benachbarten Planetwalzenextrudermodulen und der Sonderanfertigung von überlangen Planetspindeln einigen Aufwand, bei dem offen ist, inwieweit er durch den Rationalisierungsaufwand der Fertigung einer kleinen Modulserie kompensiert werden kann. Es ist auch offen, ob der nach dieser Technik entstehende Planetwalzenextrudermodul die passende Länge für ein oder mehrere in diesem Extruderabschnitt ablaufenden Bearbeitungen des Einsatzgutes erlangt. Eine zu große Länge kann ebenso nachteilig sein wie eine zu kleine Länge. Diese Technik kann jedoch vorteilhaft sein, wenn bei dem betreffenden Hersteller die Fertigungsmöglichkeiten auf kleine Modullängen beschränkt sind oder wenn ein Umbau einer Extrusionsanlage in Anpassung an ein geändertes Verfahren gewünscht ist. Bei dem Umbau einer Anlage ist allerdings zu berücksichtigen, daß die Verwendung unveränderter Planetwalzenextrudermodule fraglich wird, wenn dann die bisherige Zentralspindel nicht mehr brauchbar ist oder zur Erhaltung der Zentralspindel wesentliche Änderungen an der Zentralspindel oder an einem Gehäuse erforderlich werden.

Extruder mit gemischter Bauart kommen insbesondere vor in der Kombination von Planetwalzenextruderabschnitten -modulen mit Füllteilen/Füllmodulen, die als Einschneckenextruderabschnitte -module ausgebildet sind.

Bei solcher Extruderbauart ist das Füllteil/Füllmodul eine Spindel vorgesehen, die sich durch deren ganzes Gehäuse erstreckt. Diese Spindel setzt sich in den Bereich der Planetwalzenextrudermodulen als Zentralspindel fort.

Die Entgasung der Schmelze ist für die Bearbeitung diverser Stoffe unverzichtbar. Größte Bedeutung hat die Entgasung bei der Herstellung bzw. Verarbeitung von Kunststoffen, insbesondere von Polymeren und Copolymeren. Beispielhaft wird dazu auf folgende Druckschriften Bezug genommen:
DE112009001885, DE112007002171, DE112005002824, DE102013204312, DE102013108369, DE102013101997, DE102013007132, DE102013006667, DE102013000596, DE102013319966, DE102012217383, DE102012217383, DE102012212675, DE102012208778, DE102012202005, DE102012107430, DE102012100710, DE102012022346, DE102012020011, DE102012019908, DE102012008169, DE102012005450, DE102011102923, DE102011088959, DE102011083988, DE102011082441, DE102011076993, DE102011076257, DE102011050314, DE102011011202, DE102011011202, DE102011007425.

Je schwieriger das Herstellungsverfahren bzw. das Bearbeitungsverfahren ist, desto größer wird die Bedeutung der Entgasung. Im Wege der Entgasung werden gasförmige Bestandteile entfernt, welche die Herstellung oder Bearbeitung der Stoffe bzw. deren Qualität beeinträchtigen.

Das gilt besonders für dünne Folien und noch mehr für transparente Folien/Materialschichten. In dünnen Folien/Materialschichten zeigen sich schon kleinste Einschlüsse als Blasen. Kleinste Einschlüsse/Blasen können dünne Folien und dergleichen Schichten schon zum Ausschuß machen

Deshalb gehört die Entgasung von Polymeren und Copolymeren schon lange zum Standard der Verarbeitung von Polymeren und Copolymeren. Beispielhaft wird auf die Beschreibung in folgenden Druckschriften Bezug genommen:
WO 2015 189326; WO2013037685; WO2009138402; WO2006108744; WO2005047391; WO2005042639; WO2003020823; WO 2001018148; WO2009090119; WO2000050504; WO1999042276; EP80665; DE19815120.

Die Entgasung erfolgt am Extruder im einfachsten Fall durch eine Öffnung im Gehäuse, oben, wobei an der Öffnung atmosphärischer Druck anliegt. Wenn der Schmelzedruck in dem Extruder etwas höher als der Druck an der Gehäuseöffnung ist, tritt auch Schmelze mit aus. Die Schmelze wird dann in einem Dom/Behälter über der Gehäuseöffnung aufgefangen.

Der Wirkungsgrad solcher Entgasung ist gering. Besser ist es, wenn an der Gehäuseöffnung gegenüber dem Extruderinnenraum ein Unterdruck gegenüber dem Umgebungsdruck anliegt. Aufgrund der Druckdifferenz zwischen dem außen anliegenden Unterdruck und dem im Extruderinnenraum bestehenden Druck ergibt sich eine wesentliche bessere Entgasung. Es ist bekannt, ein Vakuum außen an die Öffnung anzulegen, vgl. zum Beispiel DE201026101935, DE202010017571, DE102014016380, DE102013225178, DE102011112081, DE102006001171, DE102008012185, DE10066229, DE10054854, DE10048028, EP2801461, WO00201461997, WO2013/189801, WO002009000408.

Unter Vakuum versteht der Fachmann einen unter wirtschaftlichen Bedingungen größtmöglichen Unterdruck gegenüber dem Umgebungsdruck. Wirtschaftlich ist in der Regel noch das Anlegen eines Unterdruckes von kleiner/gleich 20mbar, auch noch von 10mbar. Bekannt ist auch das Anlegen eines Unterdruckes von 5mbar, sogar das Anlegen eines Unterdruckes von 1mbar.

Bereits in der Vergangenheit ist festgestellt worden, daß es für die Entgasung auch auf die Stelle ankommt, an der sich die Entgasungsöffnung befindet. Bei einem Planetwalzenextruder ergeben sich sehr günstige Verhältnisse, wenn die Öffnung sich dicht am Anlaufring oder im Anlaufring befindet, und zwar an der Seite welche der Gleitfläche der Planetspindeln abgewandt ist. Der Anlaufring kann dabei einteilig oder mehrteilig sein und auch andere Funktionen als die eines bloßen Anlaufringes erfüllen. Dabei wird genutzt, daß die Planetwalzenextruder in der Regel nicht 100%ig gefüllt sind. Aufgrund der Förderwirkung des Extruders bildet sich bei nicht 100%iger Füllung vor den für die Absaugung vorgesehenen Anlaufring-Öffnungen ein Hohlraum, in den die Gase austreten können. Weil die Gase bei ihrem Absaugen aus diesem Hohlraum entgegen der Förderrichtung des Extruders gesaugt werden, wird dies als Rückwärtsentgasung bezeichnet.

Wichtige Merkmale einer Entgasung sind bereits in der PCT/EP2017/001372 zusammen gestellt worden.

Die Zusammenstellung geht von der Erkenntnis aus, daß für die Entgasung folgende Punkte berücksichtigt werden sollten
- welche flüchtigen Bestandteile zu entgasen sind

Öffnung sich dicht am Anlaufring oder im Anlaufring befindet, und zwar an der Seite welche der Gleitfläche der Planetspindeln abgewandt ist. Der Anlaufring kann dabei einteilig oder mehrteilig sein und auch andere Funktionen als die eines bloßen Anlaufringes erfüllen. Dabei wird genutzt, daß die Planetwalzenextruder in der Regel nicht 100%ig gefüllt sind. Aufgrund der Förderwirkung des Extruders bildet sich bei nicht 100%iger Füllung vor den für die Absaugung vorgesehenen Anlaufring-Öffnungen ein Hohlraum, in den die Gase austreten können. Weil die Gase bei ihrem Absaugen aus diesem Hohlraum entgegen der Förderrichtung des Extruders gesaugt werden, wird dies als Rückwärtsentgasung bezeichnet. Die Rückwärtsentgasung ist in der DE19518255 dargestellt.

Wichtige Merkmale einer Entgasung sind bereits in der PCT/EP2017/001372 zusammen gestellt worden.

Die Zusammenstellung geht von der Erkenntnis aus, daß für die Entgasung folgende Punkte berücksichtigt werden sollten
- welche flüchtigen Bestandteile zu entgasen sind
- ob die flüchtigen Bestandteile in dem geschmolzenen oder plastifizierten Extrusionsgut gelöst oder nur verteilt sind
- bei welcher Temperatur zu entgasen ist
- bei welcher Temperatur wesentliche andere Teile aus dem Extrusionsgut vergasen
- welche Zähigkeit das Extrusionsgut hat
- bei welchem Differenzdruck andere Teile des Extrusionsgutes in wesentlichem Umfang mitgerissen werden
- wie viel zu entgasen ist
- welche Entgasungsleistung zur Verfügung steht

Daraus folgend ist für die Entgasung
b) zumindest zwischen der Buchse und dem umgebenden Gehäuse eine Temperierung (Kühlung/Beheizung) vorgesehen ist, wobei das Temperierungsmittel in Kanälen geführt ist, welche wie Gewindegänge an der Buchsen-Oberfläche verlaufen und das Temperierungsmittel zugleich in axialer Richtung der Buchse führen.

Je genauer die Temperierung ist, desto besser läßt sich entgasen.

Nach der PCT/EP2017/001372 finden bei der Temperierung vorzugsweise Buchsen Anwendung,
c)die im Tiefsten zwischen ihren Zähnen der Innenverzahnung und dem Temperierungsmittel in Abhängigkeit von der Baugröße des Extruders folgende Materialdicke in Millimeter (mm) aufweisen

| Baugröße | Materialdicke | bevorzugte Materialdicke |
|---|---|---|
| 70 | kleiner/gleich 4,5 | kleiner/gleich 3 |
| 100 | kleiner/gleich 4,5 | kleiner/gleich 3 |
| 150 | kleiner/gleich 5 | kleiner/gleich 3,5 |
| 180 | kleiner/gleich 5,7 | kleiner/gleich 3,6 |
| 200 | kleiner/gleich 5,6 | kleiner/gleich 3,6 |
| 250 | kleiner/gleich 5,7 | kleiner/gleich 3,7 |
| 280 | kleiner/gleich 6 | kleiner/gleich 4 |
| 300 | kleiner/gleich 6 | kleiner/gleich 4 |
| 400 | kleiner/gleich 6,5 | kleiner/gleich 4,5 |

Zur Kennzeichnung der Baugröße eines Planetwalzenextruders wird der Teilkreisdurchmesser der Innenverzahnung im Gehäuse/Buchse verwendet. Jeder Baugröße sind üblicherweise ein bestimmter Verzahnungsmodul, bestimmte Planetspindeln und eine bestimmte Zentralspindel zugeordnet. Mehrere unterschiedliche Baugrößen bilden eine Baureihe.

Die vorstehenden Maße der Gehäusebuchse sollen vorzugsweise dann Anwendung finden,
- wenn die Kanäle in die Innenwand des Gehäuses eingearbeitet sind,
- als auch, wenn die Kanäle in die Außenfläche der Buchse eingearbeitete sind. Dann kommt es auf den geringsten Abstand zwischen dem Tiefsten zwischen den Zähnen und dem Tiefsten der Kanäle an.

Extrem dünne Buchsen sind durch Anwendung einer Funkenerosionstechnik bei der Herstellung der Innenverzahnung möglich, wie sie beschrieben ist in DE102013000708, DE102012006169, DE102010026535, DE102009059912, DE102007050466, DE102004048440, DE10354172.

Vorzugsweise sind die Buchsen außen mit Nuten versehen. Die Buchsen können ebenso wie die Innenverzahnung durch Funkenerosion mit den kanalbildenden Nuten versehen werden. Wenn die Nuten jedoch vor der Innenverzahnung hergestellt werden, lassen sich die Nuten an dünnwandigen Buchsen auch auf einer Drehbank oder Fräsbank einarbeiten.

In den kanalbildenden Nuten fließt das Temperierungsmittel von einem Buchsenende zum anderen Buchsenende. Die Nuten verlaufen vorzugsweise mit einer Steigung zur Buchsenmittelachse wie die Innenverzahnung. Die Steigung der Nuten kann die gleiche wie die der Innenverzahnung sein. Die Steigung kann jedoch auch größer oder kleiner sein. Die Nuten können auch gegenläufig zu der Innenverzahnung der Buchsen verlaufen.

Im Falle der in die Buchsenaußenfläche eingearbeiteten Kanäle bezieht sich die vorstehenden Dickenangaben auf die geringste Materialdicke zwischen dem Tiefsten der außen an den Buchsen vorgesehenen Nuten/Kanäle und dem Tiefsten zwischen zwei Zähnen der Innenverzahnung der Buchsen.

Mit den außen genuteten Buchsen korrespondieren Gehäuse mit einer glatten Innenbohrung zur Aufnahme der Buchsen. Nach der Montage der Buchsen im Gehäuse sind die Nuten außen geschlossen, so dass geschlossene Kanäle entstanden sind. Die Montage erfolgt vorzugsweise durch Aufschrumpfen der Gehäuse auf den Buchsen.

Die dünnen Buchsen haben für die Temperierung eine große Bedeutung. Sie verkürzen den Wärmefluß, so daß sich die Temperatur das zu entgasende Extrusionsgut schneller und damit genauer regeln läßt.

Für die Temperierung ist außerdem günstig, wenn eine Vielzahl von Kanälen sich an der Außenfläche der Buchsen entlang windet. Dadurch können die Buchsen gleichmäßig temperiert werden. Je größere die dabei zu transportierende Wärmemenge ist, desto größer wird der Temperaturunterschied zwischen dem Temperierungsmittel und dem Extrusionsgut im Extruder gewählt. Ferner kann mit der Fließgeschwindigkeit des Temperierungsmittels Einfluß auf die Temperierung genommen werden.

Mit der Temperierung können auch kleine Temperaturfenster für die Herstellung der Polymermischung und deren Verarbeitung eingehalten werden. Außerdem läßt sich mit der Temperierung an jeder gewünschten Stelle ein verarbeitungsgünstiger Zustand des Extrusionsgutes erzeugen.

In dem Sinne kann zweckmäßig sein, die Temperatur innerhalb eines Herstellungsfensters bzw. Verarbeitungsfensters einmal oder mehrmals zu erhöhen und/oder zu senken. Das gilt besonders für Polymere mit geringer, temperaturabhängiger Zähigkeit. Dann kann die Temperatur zum Beispiel im Bereich einer Dichtung zur Erhöhung der Zähigkeit reduziert werden. Dagegen kann die Temperatur in einem anderen Bereich mit gewünschter hoher Reaktionsfähigkeit des Extrusionsgutes zur Verringerung der Zähigkeit erhöht werden.

Als Temperierungsmittel wird vorzugsweise Wasser verwendet, soweit möglich. Bei höheren Temperaturen, für die Wasser als Temperierungsmittel nicht mehr geeignet ist, kommt Öl zum Einsatz.

Nach der PCT/EP2017/001372 wird dabei einer Temperaturänderung des Extrusionsgutes in der Entgasungszone vorzugsweise dadurch Rechnung getragen,
d)daß über die Länge der Entgasungsstrecke in der Entgasungszone mehrere Temperierungseinrichtungen in Extrusionsrichtung des Planetwalzenextruders hintereinander angeordnet sind. Dazu können die von einem Ende der Entgasungszone zum anderen Ende der Entgasungszone führenden Kanäle für die Temperierung in einzelne Kanalabschnitte unterteilt sein und ist jedem Kanalabschnitt ein eigenes Heiz/Kühlgerät zugeordnet, so daß die verschiedenen Kanalabschnitte unterschiedlich mit Temperierungsmittel beaufschlagt werden können. Dabei kann in jedem der Abschnitt mit einer anderen gewünschten Temperatur gearbeitet werden. Im Falle einer Temperierung mit Wasser, ist jede der Temperierungseinrichtungen mit einem eigenen Wasserkreislauf versehen. Im Falle von Öl als Temperierungsmittel hat jeder Abschnitt seinen eigenen Ölkreislauf.

Wahlweise wird die Kühlung genutzt,
e)um eintretendes Extrusionsgut von geringer Zähigkeit(zum Beispiel mit einem Verhalten wie Wasser) zu kühlen und dadurch deren Zähigkeit anzuheben. Das Anheben der Zähigkeit verringert an sich die Fähigkeit des Extrusionsgutes zu entgasen. Die PCT/EP2017/001372 hat jedoch erkannt, daß bei horizontal liegender Anordnung des Planetwalzenextruders und wasserähnlichem Zustand des Extrusionsgutes mit dem Planetwalzenextruder kein Druck auf das Extrusionsgut ausgeübt werden kann, der eine ausreichende Druckdifferenz für eine wirtschaftliche Entgasung ermöglicht. Die Reibung mit dem Planetwalzenextruder und den Polymeren ist dann zu gering, als daß eine nennenswerte Förderwirkung entsteht, die zu einem entsprechenden Druck des Extrusionsgutes führt.

Anstelle der Verringerung der Zähigkeit der Mischung ist eine Erhöhung der Zähigkeit auch aus anderen Gründen als oben erläutert möglich.

Nach der PCT/EP2017/001372 f)wird der Druck im Extruder in dem Fall durch Abkühlung des Extrusionsgutes und daraus folgender Erhöhung der Zähigkeit auf vorzugsweise mindestens 1 bar Überdruck, noch weiter bevorzugt auf mindestens 2bar und höchst bevorzugt auf mindestens 3bar Überdruck erhöht.

Bei einem solchen Überdruck findet schon eine Entgasung statt, wenn nur dem Gas Gelegenheit gegeben wird, durch eine Entgasungsöffnung zu entweichen.

Die Entgasung kann noch wesentlich gesteigert werden,
g)indem außen an die Entgasungsöffnung ein Unterdruck angelegt wird..

Dabei können sich verschiedene Fallkonstellationen ergeben.
h)bei relativ hohem Druck im Extruder wird mit Hilfe eines leer laufenden Seitenarmextruders dem Gas Gelegenheit gegeben, aus dem Entgasungsextruder zu entweichen, während der Seitenarmextruder das geschmolzene bzw. plastifizierte Extrusionsgut im Extruder zurück hält. Solche Seitenarmextruder sind vorzugsweise als Doppelschneckenextruder ausgebildet und zum Beispiel beschrieben in der WO2017/001048, DE 102012008169, DE102006001171. Sofern sich die Funktion des leer laufenden Doppelschneckenextruders auf das Zurückdrängen des geschmolzenen bzw. plastifizierten Extrusionsgutes beschränkt, können sehr kurze Schnecken Anwendung finden, zum Beispiel mit einer Länge von höchstens 150mm, vorzugsweise einer Länge von höchstens 100mm und noch weiter bevorzugt einer Länge von höchstens 50mm.

Der Seitenarmextruder ist für die Entgasung im berührten Bereich der Buchse von großem Vorteil. Der Seitenarmextruder kann auch in einem Bereich von Vorteil sein, in dem kein geschmolzenes bzw. plastifiziertes Extrusionsgut nach außen drückt.

Der Seitenarmextruder kann auch bei höherem Innendruck als 3bar im Extruder arbeiten, auch bei einem für die Entgasung vorteilhaften geringen Füllungsgrad des Extruders.

Außerdem ist von Vorteil, wenn der Hohlraum des Planetwalzenextruders/Planetwalzenextruderabschnitt/Moduls durch Reduzierung der Planetspindelzahl vergrößert wird. Das geschieht durch Herausnahme einer oder mehrerer Planetspindeln und neue gleichmäßige Verteilung der Planetspindeln am Umfang der Zentralspindel. Vorzugsweise werden dabei so viele Planetspindeln entfernt, daß mindestens ein Abstand von 1D, vorzugsweise von 1,5D und noch weiter bevorzugt von 2D zwischen den Planetspindeln entsteht. Durch die Reduzierung der Planetspindelzahl verringert sich die Förderwirkung des Planetwalzenextruders/Planetwalzenextruderabschnitts/Moduls. Desgleichen verringert sich die Förderwirkung des Planetwalzenextruders/Planetwalzenextruderabschnitts/Moduls durch Auswechselung der normal verzahnten Planetspindeln gegen Planetspindeln mit unterbrochener Verzahnung oder teilweise entfernter Verzahnung eingesetzt werden. Die bekanntesten Planetspindeln mit unterbrochener Verzahnung sind die Igelspindeln und die Noppenspindeln.

Die Igelspindeln entstehen, indem in normal verzahnte Planetspindeln in Abständen ringförmige Ausnehmungen in die Planetspindeln gearbeitet werden. Die Noppenspindeln entstehen nach normaler Verzahnung der Planetspindeln , wenn die Planetspindeln mit einer gegenläufigen Verzahnung versehen werden. Die bekanntesten Planetspindeln mit teilweise entfernter Verzahnung sind die Transportspindeln. Die Transportspindeln können gleichfalls aus normal verzahnten Planetspindeln entstehen, indem einer oder mehrere Zähne in Längsrichtung der Planetspindeln aus den Planetspindeln herausgearbeitet werden. Dabei bleibt mindestens ein Zahn vollständig erhalten. Vorzugsweise bleiben mindestens drei gleichmäßig am Umfang verteilte Zähne erhalten. Die Transportspindeln können auch spanabhebend nach einem vorstehend beschriebenen Muster hergestellt werden, zum Beispiel konturgefräst werden. Auch eine mehrstufige Herstellung kommt in Betracht, zum Beispiel durch grobes Fräsen und anschließendes Schleifen als Feinbearbeitung oder durch Funkenerodieren.

Bei der Entgasung kann das zu entgasende Extrusionsgut an einer zum Eintragen von Einsatzmaterial üblichen Stelle in den Extruder eingeführt werden. Soweit das Einfüllen plastifizierten bzw. flüssigen Extrusionsgutes gegen einen Innendruck im Extruder erfolgt, wird die Schmelze mit einer Pumpe in den Planetwalzenabschnitt/Modul gedrückt. Die Pumpe drückt das geschmolzene bzw. flüssige Extrusionsgut in Richtung des Extruderaustrages. Üblicherweise fördert der Planetwalzenextruder/Abschnitt/Modul auch in Richtung des Austrages. Dann addieren sich die Förderwirkungen.

Mit der Ausführung überlagern sich im Extruder verschiedene Strömungen. Die im die Zentralspindel umlaufenden Planetspindeln verursachen im Groben eine um die Zentralspindel umlaufende Strömung, sowie im Groben eine Strömung in Längsrichtung der Zentralspindel und entlang der Zentralspindel. Die Pumpe verursacht eine in Längsrichtung entlang der Gehäuseinnenwand verlaufende Strömung. Hinzu kommt die Verwirbelung des Extrusionsgutes um die Planetspindeln herum. Das Ergebnis ist ein extremer Austausch des Extrusionsgutes in allen Bereichen des Extruders. Dadurch wird dem Extrusionsgut extrem viel Gelegenheit zum Entgasen gegeben.

Nach der PCT/EP2017/001372 liegt es im Belieben der Bedienungsleute, welche Mengen geschmolzenen bzw. plastifizierten/flüssigen Einsatzmaterials zu- und abgeführt werden. Je geringer die Zu- und Abführung von Extrusionsgut ist, desto länger verbleibt das Extrusionsgut im Extruder und desto länger wirkt die Entgasung und desto stärker ist die Entgasung.

Der Seitenarmextruder ist nicht nur als Entgasungsmittel von Vorteil. Wahlweise erfolgt die Zuführung geschmolzenen bzw. plastifizierten/flüssigen Einsatzmaterials auch mit einem Seitenarmextruder.

Der Seitenarmextruder kann an verschiedenen Stellen des Extruders angeordnet werden, auch in einem Zwischenstück zwischen zwei benachbarten Extrudermodulen.

Der Seitenarmextruder beinhaltet in seiner Bezeichnung einen Hinweis auf seine seitliche Anordnung am Planetwalzenextruderabschnitt/Modul.

Nach der PCT/EP2017/001372 kann es von Vorteil sein, den Seitenarmextruder entgegen seiner Bezeichnung senkrecht auf dem Planetwalzenextruderabschnitt/Modul oder geneigt an dem Planetwalzenextruderabschnitt/Modul anzuordnen. Das erleichtert das Zurückhalten des heraus drängenden geschmolzenen bzw. plastifizierten Extrusionsgutes.
i)Bei geringem Druck im Extruder gegenüber dem Umgebungsdruck kann auch ohne Seitenarmextruder eine ausreichende Entgasung erfolgen. Dann kann zur Erzeugung des notwendigen Differenzdruckes ein Unterdruck/Vakuum an den Extruder angelegt werden.

Der Unterdruck kann das sein, was herkömmlich unter Vakuum verstanden wird, nämlich ein wirtschaftlich darstellbarer Unterdruck bis herunter auf 10mbar oder herunter bis auf 5mbar. Je nach Überdruck im Extruder kann auch ein Unterdruck von 0,5bar oder von 0,8bar gegenüber dem Umgebungsdruck ausreichen. Bei solchem Unterdruck beschränkt sich der Beitrag des Saugzuges im Wesentlichen auf das Abziehen bereits ausgetretenen Gases.

Wenn der Differenzdruck in die Nähe des Grenzbereiches kommt, bei dem Gefahr besteht, daß geschmolzenes oder plastifiziertes/flüssiges Extrusionsgut durch das austretende Gas mitgerissen wird, dann ist von Vorteil, über einen zwischenliegenden Entgasungsbehälter/Dom zu entgasen. Solche Behälter sind oben beschrieben.

Dabei ist von Vorteil, wenn die vorgesehenen Entgasungsleitungen isoliert und gegebenenfalls beheizt werden, um ein Verstopfen der Entgasungsleitung durch sich niederschlagendes geschmolzenes bzw. plastifiziertes Extrusionsgut zu verhindern.

Für eine Entgasung ohne Seitenarmextruder ist es zweckmäßig, die Entgasungsöffnung im Extruder in einem Bereich des Planetwalzenextruders anzuordnen, der möglichst wenig von dem Extrusionsgut berührt wird. Solch ein Bereich ist insbesondere einlaufseitig im Planetwalzenextruder gegeben. Dort bildet sich erfahrungsgemäß ein Hohlraum, weil Planetwalzenextruder nicht 100%ig gefüllt werden. Füllungsgrade von 70 bis 90% und weniger sind in der WO2013/159801 beschrieben.

Das Gas wird dabei mindestens teilweise entgegen der Extrusionsrichtung im Extruder abgezogen. Das wird als Rückwärtsentgasung bezeichnet. Dabei ist es von Vorteil, wenn das Gas über eine Ringkonstruktion abgezogen werden kann, die zwischen zwei benachbarten Modulenden/Gehäuseenden angeordnet ist. An der Stelle kann eine Leitung leicht zu der Ringkonstruktion geführt werden, die ein Entweichen des Gases oder ein Abziehen des Gases erlaubt.

Die Ringkonstruktion besitzt Entgasungsöffnungen, welche über innen liegende Kanäle mit der Leitung verbunden sind, durch die das Gas entweichen kann oder abgezogen werden kann.

Wenn dem für die Entgasung bestimmten Extruderabschnitt/Modul für andere Aufgaben ein anderer Planetwalzenextruderabschnitt/Modul in Extrusionsrichtung vorgeordnet ist, kann die Rinjgkonstruktion für die Entgasung vorteilhafterweise mit dem Anlaufring des vorgeordneten Planetwalzenextruderabschnitt/Moduls zusammen gefaßt werden. Es kann sich auch als ausreichend erweisen, die Ringkonstruktion für die Entgasung an den Anlaufring des vorgeordneten Planetwalzenextruderabschnitts/Moduls anzulegen.

Für eine Rückwärtsentgasung ist auch eine vertikale oder geneigte Anordnung des nach Art eines Planetwalzenextruders ausgebildeten Entgasungsabschnitts/Moduls geeignet. Dann bildet sich sogar bei wasserähnlich fließfähigen Einsatzstoff und bei geringer Förderwirkung der Planetenteile des Entgasungsabschnitts/Moduls ein Hohlraum am oberen Ende des Entgasungsabschnitts/Moduls, in den das zu entfernende Gas austreten kann und aus dem das zu entfernende Gas abgezogen werden kann. Bei einer vertikalen Anordnung des Extruders weist das Austrittsende senkrecht nach unten. Dann bildet sich ein mittiger, oben offener Hohlraum, in dem das Gas sich sammelt und aus dem das Gas sehr vorteilhaft nach oben entweichen bzw. abgezogen werden kann. Der Hohlraum läßt sich durch Änderung des Füllungsgrades, d.h. durch Zuführung mehr oder weniger Einsatzstoffe größer oder kleiner gestalten. Je größer der Hohlraum ist, desto einfacher wird das Anlegen eines größeren Unterdruckes an den Entgasungsabschnitt/Modul.

Der vertikale Extruder wird für einen Entgasungsextruder bevorzugt, bei dem eine Rückwärtsentgasung stattfinden soll. Zu den Einzelheiten von vertikalen Planetwalzenextrudern wird Bezug genommen auf DE10048028, DE 3725641.

Wenn der vertikale Extruder aufgrund seiner Bauhöhe keine Anwendung finden kann, kann ein geneigter Extruder als Entgasungsextruder geeignet sein.

Alternativ zur Rückwärtsentgasung kann in bekannter Weise an den Gehäusestellen, welche im Bereich der Gassansammlung im Extruder liegen, eine Entgasungsöffnung in das Gehäuse/Extrudermantel eingearbeitet werden. Allerdings ist damit einiger Aufwand verbunden, weil spürbar in die Temperierung im Extrudergehäuse/Extrudermantel eingegriffen wird.

Nach der PCT/EP2017/001372 ist bei Anwendung eines Unterdruckes zum Entgasen
j)an allen Leckstellen eine Dichtung vorgesehen, mit denen das Ansaugen von Umgebungsluft verhindert wird. Vorzugsweise findet als Dichtung eine Flüssigkeitsdichtung Verwendung. Die Flüssigkeitsdichtung basiert auf der Erkenntnis, daß die Dichtspalte sich mit einem zähflüssigen Schmiermittel gut gegen Luft und andere Gase sowie gegen leicht fließende Flüssigkeiten abdichten lassen. Bei der Abdichtung von Wellen und Achsen sind auf den Wellen und Achsen in den umgebenden Bohrungen zum Beispiel zwei voneinander beabstandete Ringe/Stopfbuchsen vorgesehen, wobei der Abstand zwischen den Ringen/Stopfbuchsen mit dem zähflüssigen Schmiermittel ausgefüllt ist. Wahlweise kann zugleich mit einer ringförmigen Feder Druck auf einen der Dichtungsringe/Stopfbuchse ausgeübt werden, so daß ständig eine vollständige Ausfüllung des Spaltes durch das zähflüssige Schmiermittel gewährleistet ist. Dazu ist vorzugsweise der zum Extruderinnenraum hin angeordnete Dichtungsring/Stopfbuchse unnachgiebig und der andere, federbelastete Dichtungsring/Stopfbuchse nachgiebig angeordnet.

Nach der PCT/EP2017/001372 wird bei der Entgasung im Planetwalzenextruder
k)vorzugsweise zum Extruderaustritt hin eine Abdichtung mit Extrusionsmaterial erzeugt. Das geschieht durch einen Stau des Extrusionsmaterials vor dem Anlaufring.

Der Stau am Ende des Entgasungsabschnitts/Moduls bewirkt also eine Abdichtung. Die Abdichtung an dem in Extrusionsrichtung vorderen Ende des Entgasungsabschnitts/Moduls kann mit einem anderen Abschnitt/Modul in Planetwalzenextruderbauweise bewirkt werden. Dann ist mit dem anderen Abschnitt/Modul dem Entgasungsabschnitt/Modul ein weiterer Anlaufring vorgeordnet, der einen Stau verursacht.

Zur Erzeugung des Staus helfen bei Planetwalzenextrudern neben dem vorstehend beschriebenen Anlaufring auch der Stauring sowie Planetspindeln mit hoher Förderwirkung sowie eine erhöhte Zahl von Planetspindeln. Dabei können die zusätzlich vorgesehenen Planetspindeln von kurzer Länge sein.

Der Stau kann zur Erzeugung einer Dichtwirkung auch an anderer Stelle erzeugt werden. Dazu eignen sich Stauringe im Extruder. Vorzugsweise werden die Stauringe zwischen den Modulen bzw. Extruderabschnitten angeordnet. Vorzugsweise wird bei einem Entgasungsmodul/Abschnitt mit in Förderrichtung des Extrusionsgutes vorgeordnetem weiteren Extruderabschnitt/Modul am Ende des vorgeordneten weiteren Extruderabschnitt/Moduls ein dichtender Stau erzeugt. Zwischen den Staus, dem Stau am Ende des Entgasungsmoduls/Abschnitts und dem Stau vor dem Entgasungsmodul/Abschnitt entsteht ein geschlossener Entgasungsraum.

Auf die Stauwirkung kann auch mit der Ausbildung der Planetspindeln Einfluß genommen werden.

Planetspindeln mit geringer Förderwirkung können nur einen geringen Druck verursachen; Planetspindeln mit hoher Förderwirkung dagegen einen höheren Druck.

Normal/Standardspindeln sind als Planetspindeln durchgängig von einem Ende zum anderen verzahnt. Andere Planetspindeln zeigen Ausnehmungen. Je nach Gestaltung der Ausnehmungen ergibt sich ein hoher Einfluß auf die Transportwirkung der Planetspindeln. Igelspindeln besitzen kreisförmig an den Spindeln umlaufende Ausnehmungen. Das verringert die Transportwirkung, erhöht aber die Mischwirkung der Spindeln und die Verweilzeit des Extrusionsgutes im Extruder.

Eine drastische Verringerung der Transportwirkung geht von den Noppenspindeln aus. Der drastischen Verringerung der Transportwirkung steht eine sehr viel größere Mischwirkung und Verweilzeit des Extrusionsgutes im Extruder gegenüber.

Noppenspindeln sind doppelt verzahnte Spindeln, von denen die eine Verzahnung gegenläufig zur anderen Verzahnung verläuft. Durch diese Bearbeitung verbleiben am Spindelkern nur noch Noppen.

Bei sogenannten Transportspindeln ist die Transportwirkung unterschiedlich.

Hinsichtlich der Einzelheiten der Transportspindeln wird auf die DE12006033089, EP1844917 Bezug genommen.

Je nach Beschaffenheit des Extrusionsgutes vergrößert sich die Transportwirkung oder verkleinert sich die Transportwirkung der Transportspindeln.

Gegebenenfalls wird bei unzulänglicher Transportwirkung auf das Extrusionsgut ein gewünschter Stau vor dem Austritt eines Planetwalzenextrudermoduls durch Verwendung eines zusätzlichen Stauringes erreicht. Der zusätzliche Stauring wird so angeordnet, daß seine Staufläche in Extrusionsrichtung hinter der Anlauffläche am Anlaufring liegt. Dann kann der Stauring die Planetspindeln nicht beim Umlaufen um die Zentralspindel behindern.

Der Stauring kann Teil einer Ringkonstruktion sein, welche zugleich den Anlaufring und den Stauring bildet. Dazu ist zum Beispiel ein Anlaufring mit einem innen liegenden Bund geeignet, der gegenüber der Anlauffläche am Anlaufring in Extrusionsrichtung versetzt ist.

Der Stauring kann auch ein separates Bauteil sein, das in Extrusionsrichtung hinter dem Anlaufring bzw. an dem Anlaufring anliegt und zusammen mit dem Anlaufring zwischen den Gehäusen zweier aneinander liegender Planetwalzenextruderabschnitte/Module liegt.

Vorteilhafterweise lassen sich solche Ringe und Ringkonstruktionen leicht zwischen den Gehäuseenden zweier aneinander stoßender/einander gegenüberliegender Planetwalzenextruderabschnitte/Module einspannen.

Zur Zentralspindel läßt der Stauring sowohl in der mit dem Anlaufring einteiligen Bauweise als auch in der in Bezug auf den Anlaufring separaten Bauweise einen Spalt, der dem durchströmenden Extrusionsmaterial einen solchen Widerstand entgegen setzt, daß sich vor dem Anlaufring der gewünschte Druck und eine gewünschte Materialschicht aufbaut, welche den Durchtritt von Luft bzw. Gas verhindert.

Der Stauring kann auch ein Ring sein, der in einer Nut der Zentralspindel sitzt, wobei seine Staufläche in Extrusionsrichtung hinter der Anlauffläche des Anlaufringes liegt. Der Stauring bildet dann mit dem Anlaufring einen gleichartigen Spalt wie in der zuvor beschriebenen Stauringanordnung. Vorzugsweise kommt dabei ein mehrteiliger, zum Beispiel zweiteiliger Stauring zum Einsatz, der bei der Montage um die Zentralspindel herum zusammen gesetzt werden kann, wenn die Zentralspindel schon im Extruder angeordnet ist.

Sofern dem für die Entgasung bestimmten Planetwalzenextruderabschnitt/Modul kein anderer Extruderabschnitt mit einem dichtenden Materialstau vor dem zur Entgasung bestimmten Planetwalzenextruderabschnitt/Modul vorgeordnet ist, kann am Eingang zu dem zur Entgasung bestimmten Planetwalzenextruderabschnitt gleichfalls mit einer vorstehend beschriebenen Ringkonstruktion ein dichtender Materialstau erzeugt werden.

Nach der PCT/EP2017/001372 kann der Stau von Extrusionsmaterial sehr wirkungsvoll durch eine vertikale oder stark geneigte Anordnung des zur Entgasung bestimmten Planetwalzenextrudermoduls gefördert werden. Dabei weist der Extruder mit seiner Spitze nach unten. Dann sammelt sich auch bei geringer Förderwirkung vor dem Anlaufring so viel Extrusionsgut, daß dieses Extrusionsgut eine Flüssigdichtung gegenüber einem in Extrusionsrichtung nachgeordneten Extruderabschnitt bildet.

Für den Einsatz eines Planetwalzenextruders für die Entgasung ist es aus der DE102006001171 bekannt, die Anzahl der um die Zentralspindel umlaufenden Planetspindeln so auszuwählen, dass sie geringer als die maximale Zahl der Planetspindeln ist. Dabei ergeben sich folgende Planetspindelzahlen

| Baugröße | Planetspindelzahl | Modullänge |
|---|---|---|
| 70 bis 100 | 6 bis 8 | bis 700mm |
| 120 bis 170 | 8 bis 10 | bis 1000mm |
| 180 | 9 bis 11 | bis 1000mm |
| 200 | 10 bis 12 | bis 1000mm |
| 250 | 13 bis 15 | bis 1000mm |
| 300 | 17 bis 19 | bis 1000mm |
| 400 | 23 bis 25 | bis 1200mm |

Als Baugröße wird der Teilkreisdurchmesser der Innenverzahnung im Planetwalzenextrudergehäuse bezeichnet.

Nach der PCT/EP2017/001372 kann
l)die Planetspindelzahl gegenüber der vorstehend genannten Planetspindelzahl noch um bis zu 10%, vorzugsweise um bis zu 20% und noch weitere bevorzugt um bis zu 30% und höchst bevorzugt bis auf drei Planetspindeln reduziert worden. Für die Planetspindeln ist bei reduzierter Planetspindelzahl eine gleichmäßige Verteilung am Umfang der Zentralspindel wichtig.

Die reduzierte Planetspindelzahl führt zu einer wesentlichen Vergrößerung des Hohlraumes im Extruder. Bei gleichbleibender Extrusionsgutmenge im Extruder entsteht eine größere Oberfläche, an der Gas austreten kann. Das erhöht die Entgasungsleistung.

Nach der PCT/EP2017/001372 kann auch
m)durch Vergrößerung der Länge des Entgasungsmoduls eine größere Oberfläche und größere Entgasungsleistung geschaffen werden.

Die Vergrößerung der Länge des Entgasungsmoduls ist nach der Erfindung möglich, weil sich mit der oben beschriebenen Funkenerosionstechnik ohne Weiteres auch Innenverzahnungen für überlange Planetwalzenextrudermodule herstellen lassen. Mit herkömmlicher Technik, bei der die Innenverzahnung gezogen wird, werden die Innengewinde mit zunehmender Länge immer schlechter. Mit solcher Technik lassen sich in der Praxis nur kurze Planetwalzenextruderabschnitte/Module mit ausreichender Qualität herstellen.

Nach der PCT/2017/1372 lassen sich
n)aus kurzen Planetwalzenextrudermodulen auch durch Aneinandersetzen mehrerer Module längere Entgasungsstrecken herstellen. Dabei können die Buchsen der Module mit Ihrer Verzahnung so ausgerichtet werden, daß eine überlange Planetspindel gleichzeitig mit der Innenverzahnung der einen Buchse und mit der Innenverzahnung der anderen Buchse kämmen kann.

Nach der PCT/EP2017/001372 wird dann vorzugsweise genutzt,
daß die Innenverzahnung der Buchsen eine ganze Zähnezahl besitzt (an der Innenfläche der Buchse sind umlaufend ganze Zähne nebeneinander angeordnet, die parallel zueinander von einem Buchsenende zum anderen Buchsenende verlaufen). Um einen einwandfreien Eingriff der Planetspindel in die Innenverzahnung benachbarter Buchsen zu bewirken, werden die Buchsen auf einen bestimmten Abstand gebracht, bei dem die Planetspindeln gleichzeitig in die Verzahnung beider Buchsen greifen. Ausgehend von einer immer gleicher Position der Buchsen in den Modulgehäusen kann der Abstand aus der Steigung der Zähne und deren Abmessungen berechnet werden kann.

Der Abstand läßt sich auch empirisch ermitteln, indem zum Beispiel
- zunächst die Zentralspindel am Extruderantrieb montiert wird,
- dann von den für die Entgasung bestimmten Planetwalzenextrudermodulen das in Extrusionsrichtung erste Gehäuse mit seiner Buchse montiert wird,
- dann das in Extrusionsrichtung nächste (zweite) Gehäuse mit seiner Buchse über die Zentralspindel geschoben und mit den Spannschraubenöffnungen in seinem Gehäuseflansch auf die Spannschraubenöffnungen in dem benachbarten Flansch des zuvor montierten Gehäuses ausgerichtet wird
- dann zwischen die Zentralspindel und das zweite Gehäuse mit seiner Buchse eine Planetspindel (besser mehrere, um die Zentralspindel gleichmäßig verteilte Planetspindeln) geschoben wird, bis die Planetspindel an die Buchse des zweiten Gehäuses stößt
- dann das zuletzt aufgeschobene Gehäuse unter Drehung der Planetspindel und unter Wahrung obiger Ausrichtung von dem vorher montierten Gehäuse wieder beabstandet (auf Abstand gebracht) wird, bis die Planetspindel in die Innenverzahnung der Buchse des ersten Gehäuses greift. Der sich ergebende Abstand ist maßgebend für die Fertigung eines Zwischenstückes zwischen beiden Gehäusen/Buchsen. Der Abstand bestimmt die axiale Länge des Zwischenstückes. Bei nachfolgender Montage des Zwischenstückes und der oben vorgesehenen Ausrichtung des zweiten Gehäuses lassen sich die Planetspindeln ohne weiteres durch den Zwischenraum zwischen der Zentralspindel und dem zweiten montierten Gehäuse in den Zwischenraum zwischen der Zentralspindel und dem ersten montierten Gehäuse schieben. Das geschieht unter gleichzeitigem Eingriff in die Außenverzahnung der Zentralspindel und in die Innenverzahnung der Gehäusebuchsen.
- in einem weiteren Beispiel kann das zuletzt aufgeschobene (zweite) Gehäuse mit seiner Buchse auf einen gewünschten Abstand von dem vorher montierten (ersten) Gehäuse gebracht werden und anschließend solange um seine Mitte gedreht werden, bis die Planetspindel in die Innenverzahnung der Buchse des ersten Gehäuses greift. Dann ist der gewählte Abstand zwischen den Gehäusebuchsen gleichfalls maßgebend für die Fertigung des Zwischenstückes. Bei der Montage muß das zweite Gehäuse mit seiner Buchse jedoch in die gleiche Drehstellung gebracht werden, die vorher ermittelt worden ist. Die Spannschraubenöffnungen in den Gehäuseflanschen, sind dann auf diese Drehstellung des zweiten Gehäuses gegenüber dem ersten Gehäuse ausgelegt.
- Das Zwischenstück kann in beiden Beispielen verzahnungsfrei die umlaufenden Planetspindeln umgeben. Das Zwischenstück kann aber wie die Buchsen innen verzahnt sein und die Lücke zwischen beiden Buchsen so überbrücken, daß eine Verzahnungslänge wie bei einer einteiligen Buchse entsteht, auf der die beiden oben beschriebenen Gehäuse aufgeschrumpft sind

In allen Beispielen mit berechneter axialer Länge des Zwischenstückes wie auch mit empirische ermittelter Länge des Zwischenstückes werden nach der Montage des Zwischenstückes und nach der Montage des zweiten Gehäuses mit Buchse die Gehäuseflansche an den einander gegenüberliegenden Enden beider Gehäuse an den Flanschen miteinander verspannt, so daß das Zwischenstück zwischen den einander gegenüber liegenden Gehäuseenden eingespannt wird.

Nach der PCT/EP2017/001372 kann auch zweckmäßig sein,
- zwei Modulgehäuse auf einer überlangen Buchse aufzuschrumpfen.

Das kann mit Zwischenstück oder ohne Zwischenstück erfolgen. Das Zwischenstück hätte dann vorzugsweise die Aufgabe, die Buchsen in der Lücke zwischen den aufgeschrumpften Gehäusen vor Biegelasten und anderen Lasten zu schützen.

Die vorstehende Verlängerung der Entgasungsstrecke wird empfohlen, wenn das Entgasungsergebnis als zu gering angesehen wird. Dabei ist unschädlich, wenn die Entgasungsstrecke durch die Nutzung eines weiteren Moduls für die Entgasung länger als erforderlich wird. Bei solcher Länge kann die größere Entgasungsstrecke genutzt werden, um zum Beispiel die Entgasung mit geringerem Unterdruck zu betreiben. Das kann von Vorteil sein.

Es kann aber auch von Vorteil sein, bei einer größeren Entgasungsstrecke mit gleichbleibendem Unterdruck zu arbeiten, um das Entgasungsergebnis zu verbessern.

Ein besseres Ergebnis kann auch durch Kombination verschiedener Entgasungseinrichtungen an einem Extruder erreicht werden.

Nach der PCT/EP2017/001372 sind
o)vorzugsweise im Verlauf der Entgasungsstrecke mehrere Entgasungsstellen vorgesehen.

Dabei können gleiche oder unterschiedliche Entgasungen Anwendung finden.

Die in Förderrichtung des Extrusionsgutes erste Entgasung kann zum Beispiel die vorstehende beschriebene Entgasung bei niedrigem Differenzdruck unter außen am Extruder anliegendem Unterdruck/Vakuum sein.

Die nachfolgende Entgasung kann eine Entgasung mittels eines oben beschriebenen, leer laufenden Seitenarmextruders sein, der in einem Bereich angeordnet ist, in dem bereits ein Druckaufbau in dem Extrusionsmaterial stattgefunden hat.

Nach der PCT/EP2017/001372 p)kann die mehrfache Entgasung an einem einzigen Planetwalzenextruderabschnitt/Modul stattfinden.

Die mehrfache Entgasung kann sich auch auf mehrere hintereinander angeordnete Planetwalzenextrudermodule verteilen.

Durch mehrfache Entgasung kann eine stufenweise Entgasung zur Entfernung des gleichen Gases stattfinden.

Die mehrfachen Entgasung kann auch dazu genutzt werden, verschiedene Gase zu entfernen, die in unterschiedlichen Verarbeitungsschritten im Extruder anfallen.

Mehrere hintereinander und fluchtend angeordnete Planetwalzenextrudermodule besitzen zwar separate Gehäuse und separate, die Innenverzahnung bildende Buchsen und in der Regel separate Planetspindeln, aber immer eine gemeinsame Zentralspindel. Die gemeinsame Zentralspindel bedingt eine gemeinsame Drehbewegung aller beweglichen Teile.

Mehrere, in Extrusionsrichtung hintereinander nicht fluchtend angeordnete Planetwalzenextudermodule besitzen separate Zentralspindeln. Solche Anordnung ergibt sich bei sogenannten Tandemanlagen mit Primärextruder und Sekundärextruder bzw. in Kaskadenanlagen, wenn in Extrusionsrichtung weitere Extruder nicht fluchtend hinder dem Sekundärextruder vorgesehen sind.

Sowohl bei den fluchten Planetwalzenextruderabschnitten/Modulen als auch bei den Abschnitten/Modulen einer Tandemanlage/Kaskadenanlage kann in jedem der Abschnitte/Module eine oben beschriebene Entgasung mit geringem Druckgefälle einschließlich außen anliegendem Unterdruck/Vakuum und/oder bei höheren Drücken eine oben beschriebene Entgasung mittels eines leer laufenden Seitenarmextruders zur Anwendung kommen.

Wahlweise läßt sich dies auch dadurch verwirklichen, daß anstelle eines für die Entgasung bestimmten langen Planetwalzenmoduls für die wiederholte Anwendung dieser Entgasungstechnik zwei oder mehr Planetwalzenextrudermodulen eingesetzt werden. Dabei kann schon allein die von dem Anlaufring ausgehende Stauwirkung ausreichen, um einen gewünschten Druck im Extruder zu erreichen.

Nach der PCT/2017/1372 kann eine vorstehend beschriebene Entgasung
- auch mit einer Entgasung kombiniert werden, die bei Tandemanlagen bekannt ist. Die Tandemanlagen bestehen aus einem Primärextruder und einem Sekundärextruder, der üblicherweise mit seinem Eintrittsende unter dem Austrittsende des Primärextruders angeordnet ist.

Seit langem ist bekannt, den Übergang vom Primärextruder in den Sekundärextruder einzuhausen, und das Gehäuse beim Austritt des Extrusionsgutes aus dem Primärextruder bis zum Eintritt in den Sekundärextruder zu entgasen. Dazu ist dann an das Gehäuse ein entsprechender Unterdruck angelegt.

Nach der PCT/EP2017/001372 kann in
q)jedem der Module auch eine zusätzliche Entgasung an einer Stelle mit höherem Druck im Extrusionsgut mittels eines oben beschriebenen Seitenarmextruder erfolgen. Dies kann einmal oder mehrmals erfolgen.

Die vorstehend beschriebenen Entgasungsmöglichkeiten können auf Schmelze bzw. plastifiziertes Extrusionsgut Anwendung finden, die in Extruderabschnitten erzeugt wird, die dem für die Entgasung bestimmten Planetwalzenextruderabschnitt/Modul vorgeordnet sind. Die vorstehend beschriebenen Entgasungsmöglichkeiten können auch Anwendung finden auf geschmolzenes bzw. plastifiziertes Extrusionsgut, das anders erzeugt wird als in vorgeordneten Extruderabschnitten/Modulen, und in den für die Entgasung bestimmten Extruder abschnitt (zum Beispiel mit einer Pumpe) eingetragen wird.

Die vorstehend beschriebene Entgasung im Planetwalzenextruder hat nicht nur den Vorteil des dünnen Auswalzens des Extrusionsgutes, sondern auch den Vorteil besonderer Mischung des Extrusionsgutes.

Die vorstehend beschriebenen Entgasungsmöglichkeiten können nicht nur auf Schmelze Anwendung finden, welche in einen zur Entgasung bestimmten Planetwalzenextruder eingetragen wird. Es ist auch eine Anwendung auf Einsatzgut möglich, das aus Partikeln besteht, die gar nicht oder nur an der Oberfläche eine Erwärmung erfahren haben oder nur an der Oberfläche geschmolzen sind. Dann dient die Entgasung dazu, die beim Eintragen in den zur Entgasung bestimmten Extruder mitgeführt Luft oder Trägergas ganz oder teilweise zu entfernen.

Überdies kann die Entgasung mit der Entgasung eines Partikelstromes kombiniert werden, der aus einem Schütt-Trichter oder mittels Druckluft oder mittels eines anderen Gas-Trägermediums dem Extruder zugeführt wird.

Dabei greift die PCT/EP2017/001372 auf eine Technik zurück, wie sie in der DE102015001167 und PCT/EP2016/000077 und dem darin aufgelisteten Stand der Technik beschrieben ist. Nach dem Stand der Technik wird die in der Schüttung befindliche Luft in dem zum Einfüllen des Extrusionsgutes dienenden Teil des Extruders (auch als Füllteil bezeichnet) über Filter abgezogen. Im Übrigen wird das so nicht schüttfähige Feingut (pulverförmige und staubförmige Partikel), das mit Druckluft oder anderem gasförmigen Trägermedium herangeführt wird, vor dem Eintritt in den Extruder möglichst weitgehend von der Druckluft und anderem Trägermedium getrennt. Dabei kommen vorzugsweise Filter und Stopfschnecken zur Anwendung. Noch weiter bevorzugt bestehen die Filter aus Sintermaterial und wird die Filterfläche durch eine Vielzahl von Filterscheiben gebildet. An den Filterscheiben wird eine Schicht angesaugten Extrusionsgutes gebildet, das mittels der Stopfschnecke fortlaufend abgearbeitet und der Einfüllöffnung des Extruders zugeführt wird. Die Stopfschnecke ist vorzugsweise wiederum nach Art eines Doppelschneckenextruders ausgebildet, wie sie auch für Seitenarmextruder verwendet wird.

Die Entgasung ist üblicherweise Bestandteil der Herstellung von Polymeren bzw. Polymermischungen und deren Verarbeitung. Dabei können zum Teil in großem Umfang Füllmittel und diverse Harze wie sie zum Beispiel in der DE 19939077 beschrieben sind, und Additive und andere Bestandteile Anwendung finden. Klassisch ist die batch-Weise Herstellung in Mischern. Auch aus dem Mischer können die Polymere und Polymermischungen einem Extruder zur Entgasung und Weiterverarbeitung zugeführt werden.

Vorteilhaft ist, bereits mit der Herstellung der Polymermischung im Extruder zu beginnen. Der Extruder erlaubt es sogar, mehrere Herstellungsschritte und Bearbeitungsschritte in einer Linie durchzuführen. Dann sollte die Entgasung im Planetwalzenextruder ein Teil der Extrusionslinie sein. Zu einer solchen Extrusionslinie gehört es, daß Einsatzstoffe in Granulatform oder feinkörnig oder auch flüssig zugegeben werden können. Das kann an einer einzigen Stellen oder an verschiedenen Stellen entlang der Extrusionsstrecke erfolgen. Dabei können die Bestandteile des Extrusionsgutes einzeln oder in Gruppen als Vormischung (Compound) zugegeben werden. Zum Stand der Technik der Verarbeitung von Polymeren im Extruder wird Bezug genommen auf:
DE112007002445, DE112005000058, DE 102015217860, DE102013017927, DE102012207801, DE102011089331, DE102011075313, DE102010038288, DE 102009046362, DE102008058537, DE102008019804, DE102008001431, DE102006043259.

Die Füllstoffe werden häufig in fester Form in den Extruder aufgegeben.

Die Zugabe der granulatförmigen festen Stoffe erfolgt durch Schüttung mit einer Volumendosierung und/oder einer Gewichtsdosierung. Die Zugabe pulverförmiger oder staubförmiger Stoffe erfolgt in der oben wieder gegebenen besonderen Weise. Die Zugabe fester Stoffe beinhaltet einen erheblichen baulichen Aufwand am Extruder. Deshalb ist es üblich, die Zugabe fester Stoffe soweit als möglich auf das Füllteil des Extruders zu beschränken. Wenn gleichwohl noch an anderer Stelle der Verarbeitungsstrecke feste Stoffe zugegeben werden müssen, erfolgt das vorzugsweise über Seitenarmextruder. Zur Bauart der Seitenarmextruder wird Bezug genommen auf DE202010017570, DE102012008169. Dabei können insbesondere die als Doppelschneckenextruder ausgebildeten Seitenarmextruder die Feststoffe auch gegen den Innendruck des Hauptextrudes eintragen.

Die flüssigen Stoffe (zum Beispiel Harze/Öle bzw. Treibmittel im Falle der Herstellung von Kunststoffschaum oder flüssige Reaktionspartner) werden eingespritzt. Die flüssigen Stoffe können unterschiedlichen Zwecken dienen. Der Zweck der flüssigen Reaktionspartner liegt auf der Hand.

Überschüssige flüssige Stoffe können durch Verdampfung und Entgasung entfernt werden. Der Grad der Entfernung ist von der Vollständigkeit der Verdampfung wie auch von der Vollständigkeit der Entgasung abhängig.

Die Verdampfung und Entgasung kann in einem Planetwalzenextruderabschitt/Modul oder mehreren Planetwalzenextruderabschnitten/Modulen erfolgen. Beim Einsatz mehrerer Planetwalzenextruderabschnitte/Module für die Verdampfung und Entgasung ist vorzugsweise für das Verdampfen mindestens ein separater Planetwalzenextruderabschnitt/Modul vorgesehen. Entsprechendes gilt für die Entgasung. Die separaten Extruderabschnitte/Module erleichtern die Temperierung.

Die Verdampfung und Entgasung kann in einer oder mehreren Stufen erfolgen.

Dabei ist wahlweise wiederum jeder Verdampfungszone und jeder Entgasungszone ein separater Extruderabschnitt/Modul zugeordnet.

Die Verdampfung erfolgt unter Temperaturerhöhung. Die Temperaturerhöhung kann durch Wärmezufuhrung von außen und/oder durch einen mechanischen Energieeintrag in das Extrusionsgut erfolgen. Der mechanische Energieeintrag erfolgt durch die Verformung des Einsatzgutes im Extruder.

Der flüssige Einsatzstoff kann auch ein Reaktionshilfsmittel sein. Das anschließend wieder entfernt werden soll. Für die Entfernung der flüssigen Reaktionspartner gilt das gleiche wie für die Entfernung anderer flüssiger Einsatzstoffe.

Durch eine gewünschte Reaktion im Extruder kann auch eine flüssige Phase im Extruder entstehen, die ganz oder teilweise entfernt werden soll. Für die zu entfernenden Flüssigprodukte gilt das gleiche wie für die Entfernung anderer flüssiger Einsatzstoffe.

Zum Einspritzen sind vorzugsweise Düsen in einer Ringkonstruktion vorgesehen, die mit dem Anlaufring eine Einheit bildet oder an dem Anlaufring anliegt. Dies hat den Vorteil, daß die Ringkonstruktion durch den Spalt zwischen den im Bereich des Anlaufringes aneinander stoßenden Modulenden/Gehäuseenden über eine Zuleitung mit den flüssigen Stoffen versorgt werden kann. In der Ringkonstruktion befinden sich eine entsprechende Leitung, welche von der Zuleitung zu den einzelnen Düsenöffnungen führt. Wenn der Bedarf an den flüssigen Stoffen sich bereits deutlich vor oder deutlich nach dem Modulende/Gehäuseende zeigt, können die zugehörigen Module in ihrer Länge so verändert werden, daß die Lage der Modulenden/Gehäusenden dem angepaßt ist und das Einspritzen der flüssigen Stoffe zumindest nahe der richtigen Stelle erfolgt.

Der notwendige Einspritzdruck läßt sich in verschiedener Form darstellen. Beliebt sind Pumpen zum Einspritzen. Aber auch Einschneckenextruder und Doppelschneckenextruder eignen sich zum Einspritzen, weil mit Ihnen auch hohe Einspritzdrücke darstellbar sind. Die Einschneckenextruder und Doppelschneckenextruder haben überdies den Vorteil, daß sie zugleich feste Kunststoffpartikel schmelzflüssig machen können. In dem Fall wird auch von einem Seitenarmextruder gesprochen. Anders als bei Pumpen muß deshalb kein flüssiges Ausgangsmaterial für die Seitenarmextruder vorliegen. Das einzutragende Material muß nur im Einschneckenextruder oder Doppelschneckenextruder verflüssigbar sein oder mit anderen Stoffen fließfähig gemacht werden können.

Wahlweise können auch Pumpen Verwendung finden, die mittels eines Einschneckenextruders oder eines Doppelschneckenextruders mit flüssigem Ausgangsmaterial gefüttert werden.

Wo keine sinnvolle Gelegenheit zum Eindüsen flüssiger Bestandteile mit einer Ring-Düsen-Konstruktion am Extruder zwischen zwei Extruderabschnitten/Modulen besteht, wird üblicherweise an der richtigen Stelle auf der Bearbeitungsstrecke des Extruders eine Bohrung eingebracht. Es können auch mehrere Bohrungen eingebracht werden, durch die dann eingedüst wird. Sofern mit einer Bohrung die Temperierung gestört wird, wird vorzugsweise am Umfang eine andere Stelle gewählt, an der die Bohrung ganz oder zumindest zu einem großen Teil innerhalb eines Steges zwischen zwei Kanälen für das Temperierungsmittel liegt.

Die Entgasung kann zum Beispiel genutzt werden, um
- eingeschlossene Luft aus dem Extrusionsgut zu entfernen
- eingeschlossene sonstige Gase aus dem Extrusionsgut zu entfernen
- Feuchtigkeit im Extrusionsgut zu verdampfen und zu entfernen
- sonstige unerwünschte flüssigen Bestandteile im Extrusionsgut zu verdampfen und zu entfernen, zum Beispiel Lösungsmittel zu verdampfen und zu entfernen
- unerwünschte feste Bestandteile im Extrusionsgut zu verdampfen und zu entfernen
- unverbrauchte Reaktionspartner/Reststoffe und Schleppmittel, welche vorher zugegeben worden sind, zu entfernen. Ein Beispiel ist die Polymerisation; durch Entgasen können unverbrauchte Monomere entfernt werden.
- aufgespaltene Anteile chemischer Verbindungen zu verdampfen und zu entfernen. Zum Teil gelingt die Aufspaltung chemischer Verbindung allein durch Temperatur und intensive Knetarbeit im Extruder. Zum Teil gelingt die Aufspaltung nur unter Anwendung von Hilfsmitteln
- dabei wird vorzugsweise mit Entgasungsringen zwischen aneinander stoßenden Gehäusen von Extruderabschnitten/Modulen bzw. mit einem Entgasungsring am Eintritt in einen als Entgasungsextruderabschnitt/Modul dienenden Planetwalzenextruderabschnitt/Modul gearbeitet
- wo darüber hinaus eine Entgasung zweckmäßig ist, findet vorzugsweise ein leer laufender Seitenarmextruder Anwendung.

Die flüchtigen Bestandteile in extrudierten Polymermischungen können zum Beispiel mehr als 5 Gew% von der Mischung betragen, während nur ein Anteil von 0,2Gew% oder weniger zulässig ist.

Die Gründe für die notwendige Reduzierung der flüchtigen Bestandteile können unterschiedlich sein. Dazu gehören
- Verbesserung der Produktqualität
- Vermeidung gesundheitlicher Schäden. Es wird eine spätere Ausgasung verhindert. Die Vermeidung gesundheitlicher Schäden kann im Übrigen die Kombination mit einer Gasabsaugung am Extruderaustritt zweckmäßig machen.
- Verringerung der Kosten
- Verhindern eines chemischen Abbaus
- Durchführung weiterer Verarbeitung

Die vorstehend beschriebene Entgasung ist praktisch anwendbar auf alle vorkommenden Polymere einschließlich der vernetzbaren Polymere und deren Verarbeitung.

Dabei können die Einsatzmassen eine geringe Zähigkeit eine mittlere Zähigkeit oder eine sehr hohe Zähigkeit haben, unabhängig davon, dass eine geringe Zähigkeit für eine Entgasung besonders vorteilhaft ist.

Die Scherfestigkeit der Einsatzmischung kann gering bis hoch sein, unabhängig davon, dass eine geringe Scherfestigkeit für die Entgasung besonders vorteilhaft ist.

Die Entgasungstemperatur kann im Rahmen der zulässigen Materialbelastung gering, mittel oder hoch sein, unabhängig davon dass eine höhere zulässige Entgasungstemperatur und eine damit verbundene geringere Zähigkeit für eine Entgasung vorteilhaft ist.

Vorzugsweise wird eine Temperatur gewählt, die noch mit einer Wasserkühlung des Extruders geregelt werden kann.

Eine der Industrien mit wichtiger Anwendung von Extrudern und Entgasung ist die Klebstoffindustrie. Das gilt insbesondere für die Herstellung von Kleber und Klebebändern unter Verwendung von thermoplastischen und nicht thermoplastischen Elastomeren, insbesondere von Kautschuk wie er in der DE 19939077 beschrieben ist, in Verbindung mit Zuschlägen und Verarbeitungsmittel. Desgleichen für die Herstellung von Klebern, auch von Acryl-Klebern, Epoxid-Klebern und Urethan-Kleber.

Die verschiedenen Bestandteile und Verarbeitungsmittel der Kleber können dabei ganz am Anfang der Bearbeitungsstrecke oder an verschiedenen Stellen des Extruders bzw. der Extrusionslinie zugegeben werden. Das kann erhebliche Verfahrensvorteile haben. Zum Beispiel kann beim Plastifizieren hilfreich sein, wenn zunächst eine Kunststoffmenge plastifiziert wird und bei nachfolgender Zugabe von Feststoffen eine Gleitwirkung entfaltet, die das weitere Extrudieren erleichtert.

Die Zugabe von Stoffen/Material erfolgt vorzugsweise vor und/oder nach dem Entgasen.

Dabei kann es sich um die Zugabe von flüssigen Mitteln oder Feststoffen in entsprechender Körnung handeln. Flüssige Mittel werden vorzugsweise eingespritzt. Feststoffe können nicht nur in der Füllstation am Anfang der Bearbeitungsstrecke im Extruder sondern auch im Nachhinein auf der Bearbeitungsstrecke zugegeben werden.

Das erlaubt es, die Zugabe von jedem Bestandteil zumindest annähernd dort vorzunehmen, wo die Zugabe optimal ist. Dass sich dabei über der Länge der Verarbeitungsstrecke mehrere Zugabestellen ergeben können, ist von Vorteil. Das gilt zum Beispiel für die Zugabe von Harzen, Ölen, Weichmachern, wie sie zum Beispiel in der DE 19939077 beschrieben sind, Klebrigmachern, wie sie zum Beispiel in der DE 19939077 beschrieben sind, Alterungsmittel. Stabilisatoren, Vernetzungsmittel, wie sie zum Beispiel in der DE 19939077 beschrieben sind, Farben, Füllstoffen, Treibmitteln, Reaktionsbeschleunigern und auch für andere vorkommende Mischungsanteile und Verarbeitungsmitteln. Die Zugaben und Zugabestellen ergeben sich aus den verschiedenen Rezepturen der Kleberhersteller. Die Einsatzstoffe können einzeln zudosiert werden oder in einer oder mehreren Vormischungen zudosiert werden.

Die Herstellungsmittel und Verarbeitungsmittel schließen über die Entgasungsextruder hinaus insbesondere ein:
- Silos und andere Vorratseinrichtungen für die festen Stoffe,
- Behälter für flüssige und gasförmige Stoffe
- Vorbehandlungseinrichtungen,
- Vormischungseinrichtungen
- Dosierungen
- Eintragvorrichtungen für feste Stoffe
- Pumpen zum Einspritzen der flüssigen Stoffe
- Druckbehälter mit einem Gasvorrat zum Eindüsen von Gas
- Entgasungsvorrichtungen
- Saugleitungen, Saugzüge, Filter für abgezogene Gase und Verbrennungseinrichtungen für abgezogene Gase
- Kühlzonen zur Abkühlung des bearbeiteten Extrusionsgutes, insbesondere von erzeugter Schmelze auf Austragtemperatur
- Nachverarbeitungseinrichtungen zum Beispiel zur Folienherstellung oder zur Herstellung von Formteilen oder Sandwichprodukten
- Nachbehandlungseinrichtungen, zum Beispiel zur Vernetzung der Polymere
- im Falle der Kleberherstellung Abfülleinrichtungen für Kartuschen, Tuben und anderen Kleberbehältern
- Auftragseinrichtungen/Beschichtungseinrichtungen zum Auftragen von Kleber auf Bänder zur Herstellung von Klebebändern, bspw. Düsen und Walzen, einschließlich einer vorgeschalteten Schmelzepumpe zu einer gegebenenfalls notwendigen Erhöhung des Schmelzedruckes für den Kleberauftrag
- Vorrichtungen zur Herstellung von Folien und Bahnen
- Wickeleinrichtungen, Verpackungseinrichtungen, Stapel- und Lagereinrichtungen
- Granuliervorrichtungen

Die Anwendung der Entgasungsextruder ist nicht daran gebunden, daß alle oder einzelne Herstellungsschritte oder Verarbeitungsschritte vor dem Entgasen in einem Extruder erfolgen und/oder daß plastische Polymere bzw. eine plastische Polymermasse von einem Extruder an die Entgasungsextruder übergeben wird.

Die Entgasungsextruder sind auch anwendbar auf beliebige Herstellungsverfahren und Bearbeitungsverfahren, in denen Polymere bearbeitet werden bzw. aus denen Polymere anfallen, auch in Mischung bzw. als Compound, auch plastisch oder schmelzflüssig.

Die vorliegende Erfindung setzt bei der Vergrößerung des Entgasungsraumes ein.

Die Erfindung hat sich die Aufgabe gestellt, die Entgasungsmöglichkeiten nach der PCT/EP2017/001372 noch weiter auszugestalten.

Das wird mit den Merkmalen des Hauptanspruches erreicht.

Die Unteransprüche beschreiben bevorzugte Ausführungsbeispiele.

Dabei ist anstelle oder zusätzlich zur Vergrößerung des Entgasungsraumes durch Reduzierung der Planetspindelzahl und/oder durch Verlängerung des Entgasungsraumes (axiale Vergrößerung) eine Vergrößerung des Moduldurchmessers (radiale Vergrößerung) vorgesehen.

Die radiale Vergrößerung kommt sowohl für den Neubau als auch für den Umbau einer vorhandenen Anlage in Betracht. Die radiale Vergrößerung ist beim Umbau einer bestehenden Extruder/Extrusionsanlage leicht zu erkennen. Während die Gehäuse aller Extruderabschnitte/Module üblicherweise alle den gleichen Durchmesser aufweisen, hat ein erfindungsgemäßer Umbau des zur Entgasung bestimmten Planetwalzenextruderaberschnitts/Moduls einen größeren Gehäuse-Innendurchmesser zur Folge. *Bei gleichbleibender oder vergrößerter Wandstärke ergibt sich auch eine augenfällige Vergrößerung des Gehäuse-Außendurchmessers. Bei gleichbleibender oder vergrößerter Wandstärke ist auch der Gehäuse-Außendurchmesser nach einer erfindungsgemäßen Vergrößerung des Gehäuse-Innendurchmessers vergrößert. Für die Beibehaltung oder Vergrößerung der Wandstärke kann es verschiedene Gründe geben. Es kann auch Gründe für eine Verringerung der Wandstärke geben, zum Beispiel im Falle einer Nutzung des Abschnittes*/*Moduls für eine Entgasung und eine damit verbundene geringere Belastung. Gleichwohl wird die erfindungsgemäße Vergrößerung des Gehäuse-Innendurchmessers in der Regel noch zu einer deutlich erkennbaren Vergrößerung des Gehäuse-Außendurchmessers führen.*

Nach der Erfindung geht die Erfindung *von einer handelsüblichen Baugröße*/*Baureihe aus. Alle Hersteller von Planetwalzenextrudern bieten bestimmte Baugrößen*/*Baureihen an,*
- *weil damit erheblicher konstruktiver Aufwand vermieden wird. Sonst würde jeder Neubau eine Sonderkonstruktion beinhalten und*
- *weil mit erprobten Baugrößen*/*Baureihen das Betriebsrisiko wesentlich reduziert wird*

*Beim Neubau mit einem erfindungsgemäß vergrößerten Planetwalzenextruder findet vorzugsweise*
- *eine Kombination von Abschnitten*/*Modulen aus einer vorhandenen Baugröße mit einem in Sonderkonstruktion hergestellten Abschnitt*/*Modul mit erfindungsgemäß vergrößertem Innendurchmesser*/*radial vergrößertem Innenraum statt oder*
- *eine Kombination von Abschnitten*/*Modulen aus einer vorhandenen Baugröße mit einem Abschnitt*/*Modul aus oder einer Baugröße Anwendung,*

Dadurch wird auch an Neubauten die erfindungsgemäße Gehäusevergrößerung augenfällig.

Wo keine üblichen anderen Gehäusegrößen den Vergleichsmaßstab liefern, ist die erfindungsgemäße radiale Vergrößerung auch an den Größenverhältnissen der Planetspindeln bei der Anwendung üblicher Zahnmodule erkennbar. Die Planetspindeln der erfindungsgemäß radial vergrößerten Gehäuse sind im Durchmesser um einiges größer als die Planetspindeln von Die Folge ist der erfindungsgemäß vergrößerte Hohlraum im Planetwalzenextruderabschnitt/Modul.

Hinsichtlich des Zahnmoduls gilt:
Die Zahnmodule bestimmen bei einer Verzahnung die Abmessungen der Zähne.

Das gilt auch für die hier bevorzugte Evolventen-Schrägverzahnung mit 45Grad Neigung des Schrägverlaufes zur Längsachse der verzahnten Spindeln.

Vorteilhafterweise erlaubt die erfindungsgemäße radiale Vergrößerung des Entgasungsraumes es, bei einem Umbau an der bis dahin in dem Extruder vorgesehenen Zentralspindel festzuhalten, die sich durch alle Extruderabschnitte/Module erstreckt. Bei der Kombination von Planetwalzenextruderabschnitten/Modulen mit einem Füllteil in Einschneckenextruderbauart setzt sich die Zentralspindel als Schnecke in dem Füllteil fort. Mit der "Fortsetzung der Zentralspindel" ist im vorliegenden Fall mitumfaßt, daß die Zentralspindel aus Abschnitten zusammengesetzt ist, wobei dem Füllteil ein entsprechender Schnecken-Abschnitt zugeordnet ist.

Desgleichen kann an der bisherigen Aufstellung des Extruders und an vorgeordneten und nachgeordneten Einrichtungen unverändert festgehalten werden.

Dadurch ist eine nachträgliche Vergrößerung des Gehäuseinnenraumes mit geringem baulichen Aufwand möglich.*Im Falle der Nutzung des radial vergrößerten Gehäuseinnenraumes als Entgasungsraum wird der Entgasungsraum bedeutend größer. Im Falle der Nutzung des radial vergrößerten Gehäuseinnraumes nimmt der Gehäuseinnenraum mehr Reaktionsmittel auf.*

Bei der erfindungsgemäßen radialen Vergrößerung des Gehäuseinnenraumes finden im Durchmesser größere Planetspindeln mit mehr Zähnen als bei den bisherigen Planetspindeln Anwendung, der Zahnmodul der größeren Planetspindeln bleibt jedoch der gleiche. Der Verzahnungsmodul (auch Zahnmodul genannt) ergibt sich in mm aus dem Quotienten von Teilkreisdurchmesser und Zähnezahl. Der Verzahnungsmodul könnte an sich frei gewählt werden. Um jedoch zu standardisierten Verzahnungswerkzeugen zu kommen, sind die Verzahnungsmodule nach DIN 780 genormt. Die hier vorkommenden Verzahnungsmodule finden sich in folgendem Ausschnitt von DIN 780 mit zusätzlichen Zwischengrößen:
1; 1,25; 1,5; 2; 2,5; 3; 3,5; 4; 5; 5,5; 6; 7; 8; 9; 10; 11; 12

Das die umlaufenden Planetspindeln umgebende Gehäuse wird in der Anpassung seiner Innenverzahnung bzw. der Anpassung der Innenverzahnung seiner Buchse an die umlaufenden Planetspindeln gleichfalls größer, aber der Zahnmodul bleibt gleich.

Wie oben ausgeführt werden die Abmessungen der Verzahnungen dabei durch den Teilkreisdurchmesser und den Zahnmodul bestimmt. Der Teilkreisdurchmesser der Innenverzahnung ergibt sich aus dem Teilkreisdurchmesser der Zentralspindel-Außenverzahnung und dem doppelten Teilkreisdurchmesser der Planetspindeln und dem gewünschten Spiel in der Verzahnung und gegebenenfalls aus einem Korrekturfaktor.

Die Vergrößerung der Planetspindeln ist bei vorgegebenem Verzahnungsmodul davon abhängig, daß eine ganzzahlige Zähnezahl am Planetspindelumfang wie auch bei der Innenverzahnung des Gehäuses bzw. der Gehäusebuchse entsteht.

Vorzugsweise wird bei der Vergrößerung der Planetspindeln neben dem Verzahnungsmodul auch die Zähnezahl vorgegeben. Nachfolgend sind verschiedene Baugrößen mit normaler Ausführung (nachfolgend BG genannt) oder in schwerer Ausführung (nachfolgend SBG genannt) mit Standard-Verzahnungsmodulen (nachfolgend SVM genannt) für eine Evolventen-Schrägverzahnung und Standardzähnezahlen (nachfolgend SZZ genannt) an den Planetspindeln sowie die Mindestzähnezahl bei erfindungsgemäßer Vergrößerung (nachfolgend MVG genannt), die bevorzugte Mindestzähnezahl (nachfolgend BMVG genannt), die weiter bevorzugte Mindestzähnezahl (nachfolgend WBMVG genannt) und die höchst bevorzugte Mindestzähnezahl (nachfolgend HBMVG genannt) an Planetspindeln bei erfindungsgemäßer Vergrößerung für die betreffende Baugröße unter Beibehaltung des Standardzahnmoduls wiedergegeben.

| BG | SVM | SZZ | MVG | BMVG | WMVG | HMVG |
|---|---|---|---|---|---|---|
| 30 | 1 | 5 | 6 | 7 | 8 | |
| 50 | 1,5 | 5 | 6 | 7 | 8 | |
| 70 | 2,5 | 5 | 7 | 8 | 9 | 10 |
| 100 | 3 | 6 | 7 | 8 | 10 | 11 |
| 120 | 3 | 7 | 8 | 9 | 10 | 11 |
| 150 | 3 | 7 | 8 | 9 | 10 | 11 |
| 180 | 3; 3,5 | 7 | 8 | 10 | 12 | 14 |
| 200 | 3; 3,5 | 7 | 8 | 10 | 12 | 14 |
| 250 | 3; 3,5 | 7 | 8 | 10 | 12 | 14 |
| 280 | 3,5 | 7 | 8 | 10 | 12 | 15 |
| 300 | 3,5 | 7 | 8 | 10 | 13 | 16 |
| 350 | 3,5 | 7 | 8 | 10 | 13 | 16 |
| 400 | 3,5 | 7 | 8 | 10 | 13 | 17 |
| 450 | | 7 | 8 | 10 | 14 | 18 |
| 500 | | 7 | 8 | 10 | 14 | 18 |
| 650 | | 7 | 8 | 10 | 15 | 20 |
| 800 | | 7 | 8 | 10 | 15 | 20 |
| 1000 | | 7 | 8 | 10 | 15 | 20 |
| 1200 | | 7 | 8 | 10 | 16 | 22 |

| SBG | SVM | SZZ | MVG | BMVG | WMVG | HMVG |
|---|---|---|---|---|---|---|
| 150 | 5,5 | 7 | 8 | 10 | | |
| 200 | 5,5 | 7 | 8 | 10 | | |
| 280 | 5,5 | 7 | 8 | 10 | | |
| 300 | 5,5 | 7 | 8 | 10 | | |
| 400 | 5,5 | 7 | | 8 | | 10 |
| 500 | 5,5 | 7 | | 8 | | 10 |

Die Übersicht zu Planetspindeln mit Standardzähnezahlen zeigt, daß die Vergrößerung der Zähnezahl auf 8 für alle vorkommenden Baugrößen in dem erfindungsgemäßen Bereich liegt. Lediglich bei kleineren Baugrößen von 70mm und 100 mm liegt schon eine Erhöhung der Planetspindelzähnezahl auf 7 im Bereich der Erfindung. Bei noch kleineren Baugrößen von 30 und 50 mm liegt sogar eine Erhöhung der Planetspindelzähnezahl auf 6 im Bereich der Erfindung.

Je geringer die Zähigkeit des zu entgasenden Materials ist, desto leichter erfolgt die Entgasung. Ein anderer Vorteil geringer Zähigkeit ist die geringe mechanische Belastung der bewegten Teile in dem zur Entgasung bestimmten Extruderabschnitt/Modul. Ideal zu entgasen sind Flüssigkeiten.

Die zu entgasenden Materialien sind jedoch relativ selten Flüssigkeiten. Zumeist müssen mehr oder weniger zähe Materialien entgast werden.

Vorzugweise erfolgt das Entgasen dann, wenn keine wesentliche Verformungsarbeit mehr zu leisten ist, um die zu entgasenden Stoffe in einen möglichst entgasungsfreundlichen Zustand zu bringen und zu halten. Die Verformungsarbeit wird wahlweise auch durch Wahl eines Verzahnungsmoduls reduziert, der unter dem Standard-Verzahnungsmodul für Planetwalzenextruderabschnitte/Module für Bereiche liegt, in denen das Aufschmelzen von Einsatzstoffen erfolgt und/oder eine Homogenisierungsarbeit bzw. Dispergierungsarbeit zu leisten ist.

Zum Beispiel können statt sonst üblicher Verzahnungsmodule von 5,5 und mehr auch Verzahnungsmodule von 3 oder 3,5 in erfindungsgemäßen Extruderarbschnitten/Modulen Anwendung finden.

Soweit die ursprünglichen Planetspindeln eine reduzierte Zähnezahl aufweisen, resultiert die Zähnezahlreduzierung aus einem Entfernen (ganz oder teilweise) von Zähnen an vorher vollverzahnten Planetspindeln bzw. aus einer anderen Herstellung von Planetspindeln, die zu einer Bauform wie bei einem Entfernen von Zähnen aus vorher vollverzahnten Planetspindeln führt.

Die Planetspindeln können die eingangs beschriebenen Igelspindeln oder Noppenspindeln oder Transportspindeln sein. Es kommen auch Planetspindeln in Betracht, die in einem Teil anders als im anderen Teil verzahnt worden sind, wobei in einem Teil auch eine Normalverzahnung vorgesehen ist.

Die unterschiedlich verzahnten Planetspindelteile können auch aus der gleichen Kategorie stammen.

Bei unterschiedlich verzahnten Planetspindelteilen der Kategorie Noppenspindel, bei denen die Noppen durch zusätzliche gegenläufige Verzahnung einer normal verzahnten Planetspindeln entstehen, ist die gegenläufige Verzahnung dann in einem Teil weniger tief als im anderen Teil vorgenommen worden. Das heißt, im einen Teil ist die gegenläufige Verzahnung zum Beispiel bis zum Zahngrund der Normalverzahnung vorgenommen worden, so daß voll ausgebildete Noppen entstehen. Im anderen Teil ist die gegenläufige Verzahnung weniger tief vorgenommen worden, so daß die Stege aus der Normalverzahnung teilweise erhalten geblieben sind und nur im oberen Bereich (Zahnkopf) Noppen entstanden sind. Der Teil mit der weniger tiefen gegenläufigen Verzahnung hat dann mehr Transportwirkung als der Teil mit der gegenläufigen Verzahnung bis auf den Zahngrund. Der Teil mit der weniger tiefen gegenläufigen Verzahnung ist dann auslaufseitig im Extruderabschnitt/Modul angeordnet.

Für die Entgasung eignen sich gleichfalls die oben beschriebenen Transportspindeln.

Die Transportspindeln gehören auch zur Kategorie zahnreduzierter Planetspindeln. Bei einer Verringerung der Zahnreduzierung werden weniger Zähne aus der Verzahnung von Normalspindel herausgearbeitet bzw. werden gleiche Planetspindeln nach anderem Verfahren hergestellt.

Gemäß obiger Lehre zur unterschiedlichen Zahnreduzierung erfolgt die Herausarbeitung von Zähnen unterschiedlich, zum Beispiel einlaüfseitig mehr als auslaufseitig. Der Übergang von einem weniger zahnreduzierten Bereich in einen mehr zahnreduzierten Bereich wird als Stufe bezeichnet, die Planetspindeln als gestufte Spindeln. Die Planetspindeln werden mit dem mehr zahnreduzierten Bereich einlaufseitig und mit dem weniger zahnreduzierten Bereich auslaufseitig angeordnet, so dass die Planetspindeln auslaufseitig eine höhere Förderwirkung und im Verfolg dessen eine höhere Stauwirkung aufweisen.

Für die Berechnung der Teilkreisdurchmesser der zahnreduzierten Planetspindeln ist von dem Teilkreisdurchmesser bei einer Vollverzahnung auszugehen - unabhängig von einer nachträglichen Zahnreduzierung oder anderer Planetspindelherstellung, die zum gleichen Ergebnis führt.

Vorzugsweise ist die Zahnreduzierung über der Länge der Planetspindeln in dem zur Entgasung bestimmten Planetwalzenextrudermodul unterschiedlich. Einlaufseitig kann die Zahnreduzierung am stärksten sein. Noch weiter bevorzugt ist die Zahnreduzierung an den Planetspindeln auslaufseitig am geringsten, gegebenenfalls ist dort gar keine Zahnreduzierung vorgesehen.

Die geringere auslaufseitige Zahnreduzierung bzw. die Normalverzahnung am auslaufseitigen Ende erhöht die Förderwirkung der Planetspindeln. Die Förderwirkung führt zu einem Materialstau am Auslaufende. Das Material entfaltet dadurch eine Dichtwirkung. Der Stau wird durch Wahl eines geringen Durchtrittsspaltes am auslaufseitigen Ende erreicht. Je zäher das Material ist, desto leichter kann der gewünschte Stau verursacht werden. Je weniger zäh das Material ist, des schwieriger ist die Erzeugung des notwendigen Staus.

Mit geringer werdender Zähigkeit wird der Spalt immer enger gewählt.

Bei ganz geringer Zähigkeit ist der Einsatz eines Dispergierringes vorgesehen, der im Gehäuse gehalten ist und in eine Nut der Zentralspindel greift. Zur Montage ist der Ring vorzugsweise aus zwei Hälften zusammengesetzt.

Zur Erhöhung der Stauwirkung vor dem auslaufseitigen Ende sind wahlweise zusätzliche Planetspindeln in dem relevanten Bereich vor dem auslaufseitigen Ende vorgesehen, Vorzugsweise haben die zusätzlichen Planetspindeln nur eine Länge, die kleiner als die halbe Länge der oben beschriebenen, sich üblicherweise über mehr als 90% in axialer Richtung durch den Entgasungsraum erstreckenden Planetspindeln. Noch weiter bevorzugt ist die Länge der zusätzlich zur Erhöhung der Förderwirkung eingesetzten Planetspindeln kleiner als 1/3 der Länge der anderen Planetspindeln. Höchst bevorzugt wird die Länge der zusätzlich zur Erhöung der Förderwirkung eingesetzten Planetspindeln in Abhängigkeit vom Füllungsgrad des durch den erfindungsgemäßen Planetwalzenextruderabschnitt/Modul gebildeten Entgasungsraumes gewählt, und zwar so, daß die zusätzlichen Planetspindeln während des Umlaufes in dem Gehäuse und um die Zentralspindel ganz von dem Einsatzmaterial bedeckt sind.

Vorteilhafterweise schließt die Erfindung auch eine radiale Vergrößerung des zur Entgasung bestimmten Extruderabschnitts/Moduls
- unter Neufertigung des Gehäuses und/oder der Buchse
- unter Verwendung eines vorhandenen Gehäuses bzw. einer vorhandenen innen verzahnten Buchse ein.

Vorhandene Gehäuse und Buchsen können
- aus der Ersatzteilbevorratung stammen oder
- eine größere Baugröße aus einer vorhandenen Baureihe sein.

Wahlweise werden auch Planetspindeln verwendet, die gegenüber den Planetspindeln im Durchmesser größer sind, welche zu der Baugröße des ausgewählten Gehäuses und Buchse gehören.

Dabei kann sogar die hinsichtlich des Verzahnungsmoduls an sich zu kleine vorhandene Zentralspindel weiterverwendet werden,
- wenn auf die an sich zu kleine Zentralspindel eine innen und außen verzahnte Hülse mit der Innenverzahnung aufschraubbar ist und
- wenn die Hülse mit ihrer Außenverzahnung mit der Außenverzahnung der Planetspindeln korrespondiert/kämmen kann.

Für die Bauweise "mit aufgeschraubter Hülse" ist unschädlich, ob und in inwieweit der Zahnmodul auf der Zentralspindel von dem Zahnmodul der Innenverzahnung abweicht. Die auf die Zentralspindel aufzuschraubende Hülse wird nach der Auswahl von Gehäuse, Buchse und Planetspindeln mit einer Dicke gefertigt, welche dem verbleibenden Spalt zwischen weiterverwendeter Zentralspindel und den Planetspindeln angepaßt ist.

Vorteilhafterweise ergibt sich mit den erfindungsgemäß größeren Planetspindeln eine bessere Abrollung der Planetspindeln in der Verzahnung der Zentralspindel und in der Innenverzahnung des Gehäuses. Das vereinfacht die Konstruktion. Außerdem reduziert sich die Drehzahl der Planetspindeln bezogen auf den Umlauf um die Zentralspindel.

Die geringere Drehzahl reduziert die Gefahr, dass aus der Schmelze austretendes Gas wieder eingemischt wird.

Außerdem bewirkt die geringer Drehzahl eine geringere Scherung des Materials Für viele Kunststoffe ist das von großem Vorteil.

Für die geringere Drehzahl ist eine geringere Antriebsenergie erforderlich. Damit wird weniger Energie in die Schmelze bzw. in das Einsatzgut eingetragen. Vorteilhafterweise entlastet das die Kühlung des Extruders.

Die geringe Umlaufgeschwindigkeit reduziert auch den Verschleiß.

Außerdem verteilt sich der Verschleiß an den größeren Planetspindeln auf mehr Zähne.

Beides verlängert die Standzeit der Planetspindeln.

Die im Durchmesser größeren Planetspindeln werden stabiler.

Das vergleichmäßigt den Verschleiß an den Planetspindeln, weil die Planetspindeln sich unter ungleichmäßiger Belastung weniger verwinden.

Das reduziert auch die Bruchgefahr bei einer Belastung, die bei herkömmlich verwendeten Planetspindeln schon eine Überlastung verursacht.

Die erhöhte Verschleißfestigkeit der Planetspindeln ist unabhängig von der Entgasung für alle Extruder wichtig, in den Einsatzgut mit hoher Verschleißwirkung verarbeitet wird. Das ist zum Beispiel bei der Verarbeitung von Altgummi im Planetwalzenextruder zum Zwecke der Devulkanisation der Fall.

Die erhöhte Bruchfestigkeit der Planetspindeln macht unabhängig von der Entgasung eine Anwendung der erfindungsgemäßen radialen Vergrößerung auch für Extrusionsabschnitte interessant, in denen das Extrusionsgut mit großem Energieaufwand plastifiziert werden muß. Das ist zum Beispiel bei der Plastifizierung von PET-Granulat der Fall.

Soweit bei einer erfindungsgemäßen radialen Vergrößerung der Außendurchmesser der umgebenden Gehäuse kleiner ist als der um den Kopfdurchmesser der Schrauben reduzierte Teilkreisdurchmesser der Schrauben (Durchmesser, auf dem die Schraubenmitten/Bohrungsmitten liegen), liegen die Bohrungen in den Befestigungsflanschen der benachbarten Extruderabschnitten/Modulen frei. Dann ist es von Vorteil, Bohrungen in den Befestigungsflanschen des größeren Gehäuses vorzusehen, welche mit den Bohrungen in den Befestigungsflanschen der benachbarten Gehäuse in Deckung gebracht werden können. Durch die miteinander fluchtenden Bohrungen können herkömmliche Schrauben geführt werden. Die Verspannung der Schrauben führt zu einer Verspannung der Befestigungsflansche.

Wenn noch größere erfindungsgemäße Planetspindeln und Gehäuse vorkommen, kann es von Vorteil sein, zur Verbindung der Befestigungsflansche der größeren Gehäuse mit den Befestigungsflanschen der benachbarten Extruderabschnitte/Module einen Adapter vorzusehen. Der Adapter hat vorzugsweise eine Ringform und wird zwischen den Flanschen eingesetzt. Zugleich hat der Adapter passende Anschlußflächen für die betreffenden Flansche. D.h. wenn der betreffende Flansch in seiner Anschlußfläche einen Vorsprung hat, so weist der ringförmige Adapter an seiner Anschlußfläche eine passende Vertiefung auf. Wenn der betreffende Flansch an seiner Anschlußfläche eine Vertiefung hat, so weist der ringförmige Adapter an seiner Anschlußfläche einen passenden Vorsprung auf. Vorzugsweise sind die Vorsprünge zylindrisch und die Vertiefungen von spiegelbildlicher Form. Das läßt sich einfach herstellen. Die Vorsprünge und Vertiefungen bewirken eine vorteilhafte Zentrierung der Extruderabschnitte/Module.

Vorzugsweise sind die Vorsprünge zylindrisch und umfassen die Vertiefungen die zylindrischen Vorsprünge mit kleinerem Spiel als für eine Zentriering erforderlich. Die Zentrierung kann bei üblichen Extrudern durchaus mehrere Zehntel Millimeter betragen. Noch weiter bevorzugt ist das Spiel kleiner/gleich 0,1mm und höchst bevorzugt kleiner/gleich 0,05mm. Das geringe Spiel bedingt zwar eine genauere Fertigung. Das geringe Spiel hat aber den wesentlichen Vorteil einer Dichtwirkung, die bei geringem Unterdruck schon ausreichend sein kann, um eine wesentliche Leckage an den Flanschen zu vermeiden. Bei stärkerem Unterdruck können zusätzliche Dichtmaßnahmen die Dichtwirkung des geringen Spieles ergänzen. Das kann bei Dichtringen und/oder Dichtscheiben und/oder Packungen beginnen bis zu den erläuterten Flüssigkeitsdichtungen gehen.

Soweit die zwischen den Flanschen vorgesehenen Adapter aus Festigkeitsgründen oder anderen Gründen aufgrund ihrer Dicke bei einer Nachrüstung einer Extrusionsanlage mit einem erfindungsgemäßen Entgasungsabschnitt/Modul nicht mehr ohne weiteres in den bestehenden Spalt zwischen den Flanschen verbaut werden können, läßt sich der Spalt im Falle einer Neuanfertigung des Gehäuses und der Planetspindeln auf ein gewünschtes Maß vergrößern.

Wenn sich aber ein Spaltweitenproblem auftut, weil ein vorhandenes größeres Gehäuse einer gängigen größeren Baugröße verwendet werden soll, so kann ein ringförmiger Adapter auch zunächst an einem der zugehörigen Befestigungsflansche, vorzugsweise an dem kleineren Befestigungsflansch an der Seite verschraubt werden, welche dem erfindungsgemäß vergrößerten Planetwalzenextruderabschnitt/Modul abgewandt ist. Noch weiter bevorzugt besteht der Adapter dazu aus verschiedenen Bogenstücken, die an den ursprünglichen Befestigungslöchern in den Flanschen verschraubt werden. Eine gewünschte Zentrierung läßt sich dabei
- mit einem zusätzlichen Zentrierring oder
- mit einem Entgasungsring oder
- mit einem für Druck- und/oder Temperaturfühler bestimmten Ring und/oder
- mit einer anderen Ringkonstruktion darstellen, zum Beispiel mit einem für die Schmelzeführung geformten Ring, der an der Einlaufseite des erfindungsgemäßen Planetwalzenextruderabschnitt/Modul an die Schmelzeaustrittsöffnung des benachbarten Extruderabschnitts anschließt und sich im Übergang zu SchmelzeeintrittsöffnunglEinlaßöffnung des erfindungsgemäßen Planetwalzenextruderabschnitts/Moduls erweitert, so daß Toträume vermieden werden, in denen sich Schmelze unkontrolliert aufhalten kann.

Soweit hinter dem radial vergrößerten Extruderabschnitt/Modul gleichfalls ein Extruderabschnitt mit einem Gehäuse, Planetspindeln und Zentralspindel aus der gleichen Baugrößé vorgesehen ist, ist eine Schmelzeführung von Vorteil, die sich zu dem nachgeordneten Abschnitt/Modul hin verjüngt. Wie am Einlauf in den erfindungsgemäß radial vergrößerten Abschnitt/Modul kann auch auslaufseitig zur Schmelzeführung ein Ring eingesetzt werden.

Das heißt, der Adapter kann allein oder mit anderen Teilen verschiedene Aufgaben erfüllen, insbesondere als Zentrierring, Entgasungsring, Anlaufring, Stauring, Ring für Meßstellen.

Von Vorteil ist auch, wenn der Teilkreisdurchmesser der erfindungsgemäßen Planetspindeln so gewählt wird, daß für die Buchse und das umgebende Gehäuse zumindest das gleiche Ausgangsmaterial wie für eine andere, größere, aber noch gängige Planetwalzenextruder-Baugröße gewählt werden kann. Durch Verwendung gleichen Ausgangsmaterials kann die Vorratshaltung erheblich vereinfacht werden.

Unabhängig von der Frage der Verwendung von Gehäusen und Buchsen einer anderen Baugröße sind das sich aus der Vergrößerung ergebende Gehäuse und die zugehörige Buchse vorzugsweise genauso rohrförmig (nur mit größeren Abmessungen) ausgebildet wie die Gehäuse der benachbarten Planetwalzenextruderaberschnitte/Module.

Das rohrförmige Gehäuse besitzt vorzugsweise ebenfalls außen angeordnete Flansche zur Verbindung mit Gehäusen von benachbarten Extruderabschnitten/Modulen.

Die zum größeren Gehäuse gehörige größere Buchse ist gleichermaßen mit der Innenverzahnung und den außen eingearbeiteten Kühlkanälen versehen.

Die größere Gehäuse/Buchsenkonstruktion kann auch gleichartige Ausnehmungen für einen Anlaufring und eine gegebenenfalls darüber hinausgehende Ringkonstruktion wie in der PCT/EP2017/001372 beschrieben besitzen, allerdings mit anderen Maßen.

Wie oben ausgeführt, kann zur Verbindung eines an einem erfindungsgemäßen, größeren Gehäuse außen sitzenden Flansches mit dem Befestigungsflansch eines benachbarten, kleineren Extruderabschnitts/Moduls ein Adapter vorgesehen sein. Vorzugsweise ist ein ringförmiger Adapter vorgesehen, der entweder vorher an dem Flansch des größeren Gehäuses verschraubt wird, um anschließend mit dem kleineren Gehäuseflansch des benachbarten Extruderabschnitts/Moduls verschraubt zu werden.

Oder der Adapter wird vorher mit dem kleineren Gehäuseflansch des benachbarten Exrtruderabschnitts/Moduls verschraubt, um anschließend mit dem Flansch des größeren Extruderabschnitts/Moduls verschraubt zu werden.

Wahlweise bildet der auslaufseitige Adapter zugleich
- ein Widerlager für den Anlaufring, an dem die Planetspindeln eines in Strömungsrichtung vorgeordneten Planetwalzenextruderabschnitts/Moduls gleiten,
- oder sogar ganz oder teilweise den Anlaufring für den in Strömungsrichtung vorgeordneten Planetwalzenextruderabschnitt/Modul
- oder einen Entgasungsring
- oder ein Widerlager für einen Stauring
- oder ganz oder teilweise den Stauring
- oder ein Widerlager für einen Dispergierring
- oder ganz oder teilweise einen Dispergierring
- oder ganz oder teilweise eine Ringkonstruktion mit obigen und auch mit weiter gehenden Aufgaben

Bei Anwendung einer in PCT/EP2017/001372 beschriebenen Rückwärtsentgasung ist der einlaufseitige Adapter vorzuweise mindestens teilweise Bestandteil des Gasabzuges. Dabei kann ein herkömmlicher Entgasungsring (wie in einem Planetwalzenextruderabschnitt/Modul oder größere Planetspindeln und größerem Gehäuse) für eine Rückwärtsentgasung Anwendung finden, der lediglich in dem Adapter gehalten ist. Es kann auch ein besonderer Entgasungsring vorgesehen sein, der an der Seite des Adapters angeordnet ist, welche den größeren Planetspindeln zugewandt ist, und an der Seite diverse Öffnungen zum Gaseinlaß besitzt. Diese Öffnungen können an einzelne Gaskanäle oder an einen gemeinsamen Gaskanal angeschlossen sein. Einzelne Gaskanäle erlauben eine gezielte Regelung des Gasabzuges über entsprechend separierte Gasabzugsleitungen. Vorzugsweise haben die Öffnungen für den Gaseinlaß im Vergleich zur herkömmlichen Bauweise einen größeren Abstand von dem Spalt, der die Zentralspindel umgibt und durch den die Schmelze in den für die Entgasung vorgesehenen Planetwalzenextruderabschnitt/Modul strömt. Vorzugsweise befinden sich die Öffnungen näher an der Innenverzahnung der Gehausebuchse als an der Außenverzahnung der Zentralspindel, noch weiter bevorzugt im äußeren Drittel des Hohlraumes zwischen der Innenverzahnung der Gehäusebuchse und der Außenverzahnung der Zentralspindel. Dabei ist nicht zu befürchten, daß Schmelze von den umlaufenden Planetspindeln in die Öffnungen für den Gaseinlaß gedrückt werden, weil die Planetspindeln an ihren Köpfen einen ausreichenden Abstand von dem Entgasungsring besitzen. Der optimale Abstand ist von verschiedenen Faktoren(Viskosität, Umlaufgeschwindigkeit der Planetspindeln, Größe der Planetspindeln usw.) abhängig und kann einfach empirisch bestimmt werden. Der Abstand kann zum Beispiel mit 10mm oder mehr beginnen und wird vergrößert, wenn die Schmelze in die Öffnungen dringt. Das Vergrößern des Abstandes geschieht durch Verkürzen der Planetspindeln.

Der einlaufseitige Adapter kann auch allein oder gemeinsam mit anderen Teilen den Entgasungsring für eine Rückwärtsentgasung bilden.

Außerdem kann der einlaufseitige Adapter wahlweise zugleich
- allein oder zusammen mit dem Gehäuse des benachbarten Extruderabschnitts/Moduls einen Sitz und/oder Widerlager für eine dortige andere Ringkonstruktion bilden
- allein oder zusammen mit mit anderen Teilen die dortige andere Ringkonstruktion bilden

Bei einer Rückwärtsentgasung durch eine einlaufseitige Ringkonstruktion (durch den Adapter hindurch oder durch eine übliche Ringkonstruktion hindurch) kann es von Vorteil sein, eine der umlaufenden Planetspindeln in dem zur Entgasung bestimmten Planetwalzenextruderabschnitt/Modul als Putzer auszubilden. Dazu ist diese Planetspindel dann aus mindestens zwei Planetspindelabschnitten zusammengesetzt, wobei der eine Planetspindelabschnitt an der Stoßstelle mit dem anderen Planetspindelabschnitt mit einem Zapfen in eine Bohrung des anderen Planetspindelabschnittes greift und im Tiefsten der Bohrung eine Tellerfeder vorgesehen ist. Die Tellerfeder ist so ausgelegt, daß sie den einlaufseitigen Planetspindelabschnitt mit der gegenüber liegenden Stirnwand in eine gleitende Berührung bringt. Dabei schiebt diese Planetspindel die Abzugsöffnungen in der Stirnwand bei jedem Umlauf frei. Die Tellerfedern geben der an beiden Enden im Gehäuse gleitenden Planetspindeln die Möglichkeit, sich einer Dehnung und eine Kontraktion der Konstruktion anzupassen.

Eine weitergehende Aufgabe des Adapters kann die Bildung einer Kühlfläche/Heizfläche sein. Vorzugsweise ist dazu ein mindestens zweiteiliger Adapter vorgesehen, von dessen Teilen ein Kanal für eine Temperierung (Kühlung/Beheizung) umschlossen wird. Durch die Zusammensetzung aus mehreren Teilen ergeben sich Fertigungsvorteile und Reinigungsvorteile.

Der Kanal ist darüber hinaus mit einem Anschluß für eine Leitung zum Abführen des anfallenden Gases versehen sein.

Für die Temperierung des Adapters gilt das gleiche wie für die Temperierung des Gehäuses.

Je genauer die zum Entgasen gewünschte Temperatur eingestellt und gehalten werden kann, desto besser ist die Entgasung. Die Temperatureinstellung kann am Anfang des Betriebes eine Beheizung erforderlich machen, um zu verhindern, daß austretendes Gas sich in der Absaugung/Gasabführung niederschlägt. Nach Erreichen der gewünschten Temperatur ist in der Regel eine Kühlung erforderlich, weil von den umlaufenden Teilen des Planetwalzenextruderabschnitts/Moduls mechanische Arbeit in die Schmelze und in das Gas eingetragen wird und damit mehr Wärme erzeugt wird als zum Entgasen erforderlich ist. Die überschüssige Energie wird dann der Schmelze und dem Gas durch Kühlung wieder entzogen.

Die Temperatur des Gases kann allerdings nach dem Austreten aus dem Gehäuse schnell so weit abfallen, daß eine Beheizung der Gasabzugsleitung zweckmäßig ist.

Bei der Temperierung des auslaufseitigen Adapters kann ein wesentlicher Teil des Adapter-Volumens für den Verlauf des Kühlkanals verplant werden.

Bei der Temperierung des einlaufseitigen Adapters sind im Falle der Rückwärtsentgasung zusätzlich ein Gaskanal und die Eintrittsöffnungen/Öffnungen für den Gaseinlaß zu berücksichtigen.

Vorzugsweise finden dazu mehrgängige Kanäle Anwendung. Solche Kanäle können zum Beispiel kreisförmig und mit unterschiedlichem Durchmesser ausgebildet sein, so daß der eine kreisförmige Kanal für den Gasabzug und der daneben liegende (innen oder außen liegende kreisförmige Kanal) für die Kühlung verwendet werden kann.

Anstelle zweier Kanäle können auch mehr kreisförmige Kanäle konzentrisch angeordnet werden.

Anstelle der kreisförmigen Anordnung kann auch ein spiralförmiger Verlauf beider nebeneinander liegenden Kanäle in Betracht kommen; desgleichen ein mäandernder Verlauf beider nebeneinander liegender Kanäle, wobei das Mäandern nicht in der üblichen Form auf einer Geraden, sondern auf einer Ringfläche stattfindet, so daß die beiden nebeneinander liegenden Kanäle ihre Richtung gemeinsam ändern von
radial - in Umfangsrichtung - in radial - in Umfangsrichtung usw.,
bis die Kanäle in Umfangsrichtung wieder an den Anfang kommen.

Der Adapter kann vorteilhafterweise auch Bohrungen zur Messung der Schmelzetemperatur und/oder der Gastemperatur und/oder dem Schmelzedruck und/oder dem Gasdruck aufweisen. Die Bohrungen dienen dem Einschrauben von Meßfühlern. Die Meßfehler können mittelbar über eine zwischenliegende Membran messen. Vorzugsweise ist eine unmittelbare Messung vorgesehen, bei der die Meßfühler unmittelbar in das zu messende Medium ragen.

Es ist günstig, die Messungen einlaufseitig und auslaufseitig vorzunehmen
Im Übrigen kann das größere Gehäuse auch andere Entgasungshilfen aufweisen, wie in der PCT/EP2017/001372 erläutert. Dazu gehört ein leer laufender Seitenarmextruder, vorzugsweise senkrecht auf dem Gehäuse des Planetwalzenextruders stehend. Der Seitenarmextruder kann in schmelzeberührten Bereichen des Gehäuses wie auch in Bereichen Gas absaugen, in denen keine oder wenig Schmelze an der Entgasungsöffnung ansteht. Das ist einlaufseitig der Fall, weil der zur Entgasung bestimmte Planetwalzenextruderabschnitt/Modul nur teilweise (70 bis 90% und weniger) gefüllt ist und die Schmelze durch die Planetspindeln in Austrittsrichtung gefördert wird. Dann hat der Seitenarmextruder bei relativ hohem Saugdruck/Saugzug Vorteile, weil die mitgerissenen Schmelzeteilchen durch die mit Ihrer Förderrichtung in das Gehäuse wirkenden Doppelschnecken zurück gedrängt werden. Wenn sich dadurch vor der Entgasungsöffnung eine Schmelzeschicht aufgebaut wird, so wird die Schicht beim nächsten Vorbeilauf einer Planetspindel abgeschoben.

Bei einer Entgasung mit einem einlaufseitig angeordneten Seitenarmextruder findet auch ohne den oben beschriebenen Entgasungsring eine Rückwärtsentgasung statt, weil Gas aus dem gesamten Hohlraum des zur Entgasung bestimmten Planetwalzenextruderabschnitt/Modul entgegen der Förderrichtung der Schmelze abgezogen wird.

Wie schon in der PCT/EP2017/001372 festgestellt, ist die Entgasung umso genauer durchführbar, je genauer die Temperierung erfolgt. Für eine genaue Temperierung waren bereits die dort angegebenen Abmessungen der Buchsen von Vorteil. Aufgrund der geringeren Belastung der Extruderabschnitte/Module bei erfindungsgemäßer radialer Vergrößerung können die Materialdicken an der Buchse im Tiefsten zwischen den sich in radialer Richtung erstreckenden Stegen bei den Baugrößen von 70 bis 280mm gegenüber den angegebenen Grenzen um mindestens 25% reduziert werden, bei den Baugrößen bis 180mm sogar um mindestens 40% reduziert werden. Gleichwohl bleiben den Buchsen aufgrund der sich in radialer Richtung und in Umfangsrichtung erstreckenden Stegen der Verzahnung und aufgrund der sich in radialer Richtung und in Umfangsrichtung erstreckenden Stegen zwischen den für die Temperierung vorgesehenen Kanäle noch ausreichende Festigkeiten.

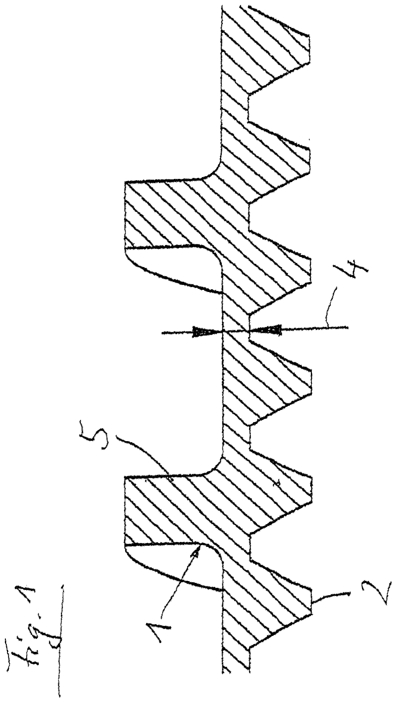

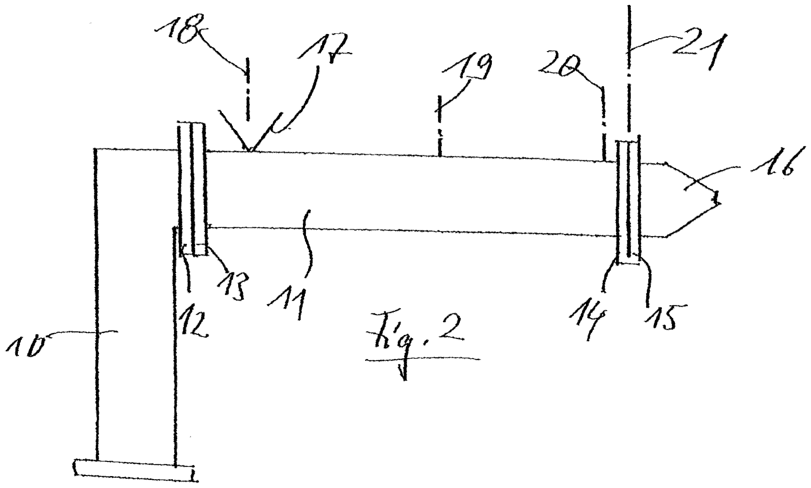

In der Zeichnung zeigen die Fig. 1 bis 3 verschiedene Einzelheiten der Entgasung nach der PCT/EP2017/001372.

Die Fig. 4 bis 9 zeigen Ausführungsbeispiele der Erfindung.

In Fig. 1 ist ein Ausschnitt einer Buchse 1 für einen zur Entgasung bestimmten Planetwalzenextruderabschnitt/Modul dargestellt. Innenseitig ist die Verzahnung 2 ersichtlich; außenseitig die Ausdrehungen/Ausfräsungen, welche Kanäle 3 bilden. Das Maß im Tiefsten zwischen den Zähnen und im Tiefsten der Kanäle ist mit 4 bezeichnet.

Fig. 2 zeigt einen Extruder mit einem als Planetwalzenextruder ausgebildeten Planetwalzenextruderabschnitt 11, einem Antrieb 10 und einem Austritt 16. Die Länge des Abschnittes 11 entspricht der gewünschten Länge der Entgasungsstrecke.

Das Gehäuse des Abschnittes 11ist an beiden Enden mit Flanschen 13 und 14 versehen. Mit dem Flansch 13 ist es an einem Flansch 12 des Antriebes verspannt und mit dem Flansch 14 an einem Flansch 15 des Austritts 16 verspannt.

Der Abschnitt 11 besitzt im Gehäuse eine nicht dargestellte, innen verzahnte Buchse, eine nicht dargestellte Zentralspindel, die von dem Antrieb in Drehbewegung gesetzt wird.

Um die Zentralspindel laufen im Ausführungsbeispiel vier Planetspindeln um. Die Planetspindeln sind gleichmäßig am Umfang der Zentralspindel verteilt und kämmen sowohl mit der Außenverzahnung der Zentralspindel als auch mit der Innenverzahnung der Buchse.

Am Gehäuse des Abschnittes sind drei Entgasungsstellen vorgesehen.

Die Entgasungsstelle 18 ist am Fülltrichter 17 vorgesehen. Dabei ist der Fülltrichter in nicht dargestellter Form gekapselt, so daß die mit dem Einsatzmaterial in den Fülltrichter gelangende Luft abgezogen werden kann. An den Stellen 19 und 20 erfolgt eine Entgasung mit Hilfe nicht dargestellter Seitenarmextruder, die oben auf dem Gehäuse sitzen und leer laufen. Die Seitenarmextruder sind als Doppelschneckenextruder ausgebildet und drücken die aus dem Abschnitt 11 heraus drängende Schmelze zurück. An den Seitenarmextrudern liegt zugleich ein Unterdruck an, der es dem im Abschnitt 11 frei werdenden Gas erleichtert aus dem Abschnitt 11 auszutreten.

In einem anderen Ausführungsbeispiel ist anstelle der Entgasung 20 bei 21 ein nicht dargestellter Entgasungsring vorgesehen, der zwischen den beiden Flanschen 14 und 15 angeordnet ist und mit dem Anlaufring für die Planetspindeln eine gemeinsame Ringkonstruktion bildet. Die Ringkonstruktion besitzt an der Seite, welche der Anlauffläche abgewandt ist, Entgasungsöffnungen, die in einen eingeschlossenen Ringkanal münden, der an eine Saugleitung angeschlossen ist.

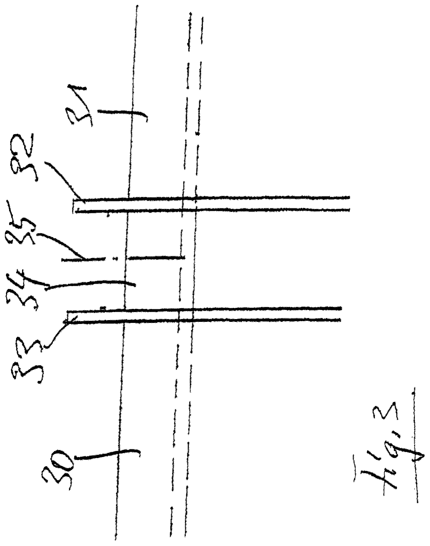

Fig. 3 zeigt ein Ausführungsbeispiel, bei denen die Entgasungsstrecke durch zwei Planetwalzenextrudermodule 30 und 31 gebildet wird, deren Gehäuse an Flanschen 32 und 33 miteinander verspannt sind und dabei ein Zwischenstück 34 einspannen. Die Gehäuse 30 und 31 sind mit einer Buchse versehen, die innen verzahnt ist und mit den Planetspindeln bzw. der Zentralspindel der Planetwalzenextrudermodule korrespondiert. Die Verzahnung beider Buchsen ist gleich.

Darüber hinaus ist das Zwischenstück 34 mit der gleichen Verzahnung versehen und so bemessen und angeordnet, daß überlange Spindeln durch beide Module hindurchragen.

In einem weiteren Ausführungsbeispiel ist an dem Zwischenstück 34 bei 35 eine Entgasungsstelle vorgesehen.

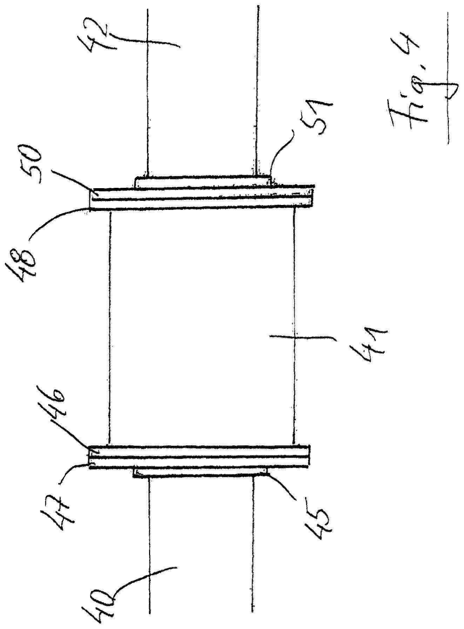

Fig. 4 zeigt eine Extruderanlage mit drei hintereinander angeordneten Planetwalzenextrudermodulen 40, 41 und 42. Von diesen Modulen besitzen die Planetwalzenextrudermodule 40 und 42 die gleiche Baugröße. Der Module 41 ist gegenüber den anderen Modulen radial vergrößert.

Alle Module 40,41 und 42 werden von derselben Zentralspindel durchdrungen.

Während in den Modulen 40 und 42 Planetspindeln mit gleichem Teilkreisdurchmesser und mit ihrer Außenverzahnung mit der Außenverzahnung der Zentralspindel kämmen, haben die Planetspindeln des Moduls 41 einen größeren Teilkreisdurchmesser. Aber auch diese Planetspindeln kämmen mit der gemeinsamen Zentralspindel. Das ist möglich, weil der Zahnmodul der Verzahnung der Zentralspindel der gleiche ist wie der Zahnmodul der Planetspindeln aller Planetwalzenextrudermodule 40,41 und 42. Die Anzahl der Zähne der Planetspindeln in dem Planetwalzenextrudermodul 41 ist allerdings größer als die der Planetspindeln in den anderen Planetwalzenextrudermodulen 40 und 42. Das bedingt einen größeren Teilkreisdurchmesser der Planetspindeln in dem Planetwalzenextrudermodul 41.

Alle Planetspindel kämmen mit ihrer Verzahnung darüber hinaus mit der Innenverzahnung einer Buchse, die in dem zugehörigen Gehäuse sitzt. Das ist möglich, weil auch die Innenverzahnungen mit dem gleichen Zahnmodul wie die Zentralspindel und die Planetspindeln gefertigt worden sind. Allerdings ist der Teilkreisdurchmesser der Innenverzahnung in dem Planetwalzenextruder 41 aufgrund des größeren Teilkreisdurchmessers der Planetspindeln wesentlich größer als der Teilkreisdurchmesser der Innenverzahnung in den anderen Planetwalzenextrudermodulen 40 und 42.

Die Gehäuse aller Planetwalzenextrudermodule sind mit Flanschen aneinander verschraubt.

Der radial vergrößerte Planetwalzenextrudermodul 41 besitzt ein rohrförmiges Gehäuse mit Flanschen 46 und 48 an beiden Enden.

Der einlaufseitige Flansch 46 ist über einen Adapterring 47 mit einem Flansch 45 des vorgeordneten Planetwalzenextrudermoduls 40 verschraubt. Dabei sind unterschiedliche Schraubverbindungen vorgesehen: eine Schraubverbindung zwischen dem Flansch 45 und dem Adapterring 47 und eine Schraubverbindung des Adapterringss 47 mit dem Flansch 46. Die Schraubverbindung besteht im Ausführungsbeispiel aus 6 Schrauben, In anderen Ausführungsbeispielen sind mehr Schrauben vorgesehen.

Im Ausführungsbeispiel bewirkt der Adapterring 47 zugleich eine Zentrierung der miteinander verbundenen Extruderteile. Dazu greift der Adapterring 47 mit einem Vorsprung in eine Ausnehmung des Flansches 45, während der Flansch 46 mit einem Vorsprung in eine Ausnehmung des Adapterrings 47 greift.

Der auslaufseitige Flansch 48 ist über einen Adapterring 50 mit dem Flansch 51 eines benachbarten Extruderabschnitts/Moduls verschraubt. Dabei sind wie an der zuvor erläuterten Verschraubung mehrere Schrauben vorgesehen. Außerdem bewirkt der Adapterring 50 eine Zentrierung der miteinander verbundenen Extruderabschnitte/Module. Der Adapterring 50 greift mit einem Vorsprung in eine Ausnehmung des Flansches 48, während der Flansch 51 mit einem Vorsprung in eine Ausnehmung des Adapterringes 50 greift.

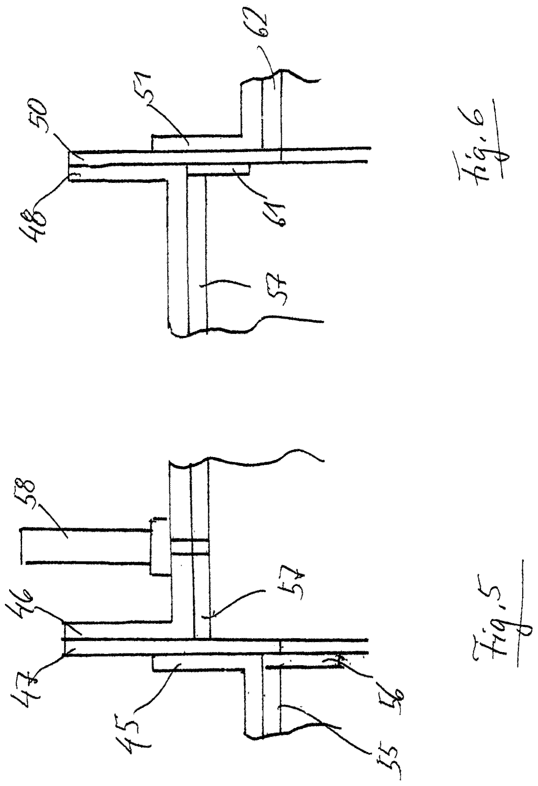

In Fig. 5 und 6 ist die Situation an der Verbindungsstelle der verschiedenen Planetwalzenextruderabschnitte/Module in einer Vergrößerung und im Ausschnitt dargestellt. Dabei ist die innen verzahnte Gehäusebuchse des Abschnitts/Moduls 40 mit 55 bezeichnet, die Gehäusebuchse des Abschnitts/Moduls 41 mit 57, die Gehäusebuchse des Abschnitt/Moduls 42 mit 62.

Zugleich ist der Anlaufring für den Abschnitt/Modul 40 mit 56 bezeichnet, der Anlaufring für den Abschnitt/Modul 41 mit 61. An dem Anlaufring 56 gleiten die in dem Abschnitt/Modul 40 umlaufenden Planetspindeln. An dem Anlaufring 57 gleiten die in dem Abschnitt/Modul 41 umlaufenden Planetspindeln.

Es bildet der Zwischenring 47 zugleich ein Widerlager für den Anlaufring 56, der Zwischenring 50 zugleich ein Widerlager für den Anlaufring 61.

Fig. 5 zeigt zugleich die Anwendung eines Seitenarmextruders 58 für die Entgasung in dem Abschnitt/Modul 41.

In den Fig. 5 und 6 weist die Anordnung der Anlaufringe 56 und 61 darauf hin, daß die Extrusionsrichtung in der Ansicht von links nach rechts verläuft.

In anderen Ausführungsbeispielen ist der erfindungsgemäße Entgasungsextruder zwischen Extruderabschnitten/Modulen anderer Bauart als der eines Planetwalzenextruders angeordnet.

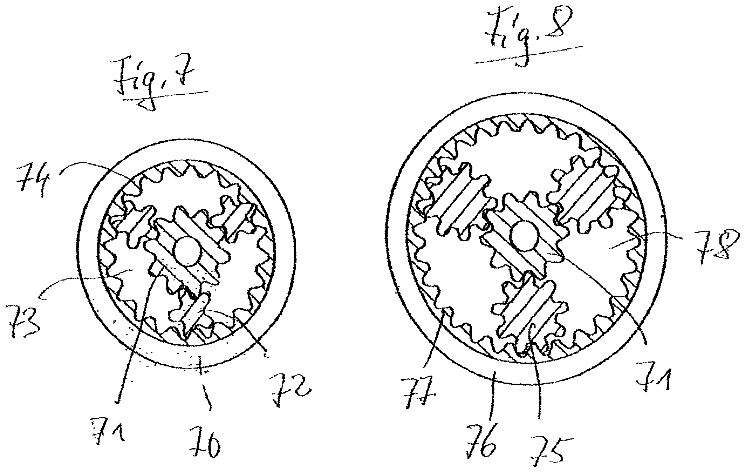

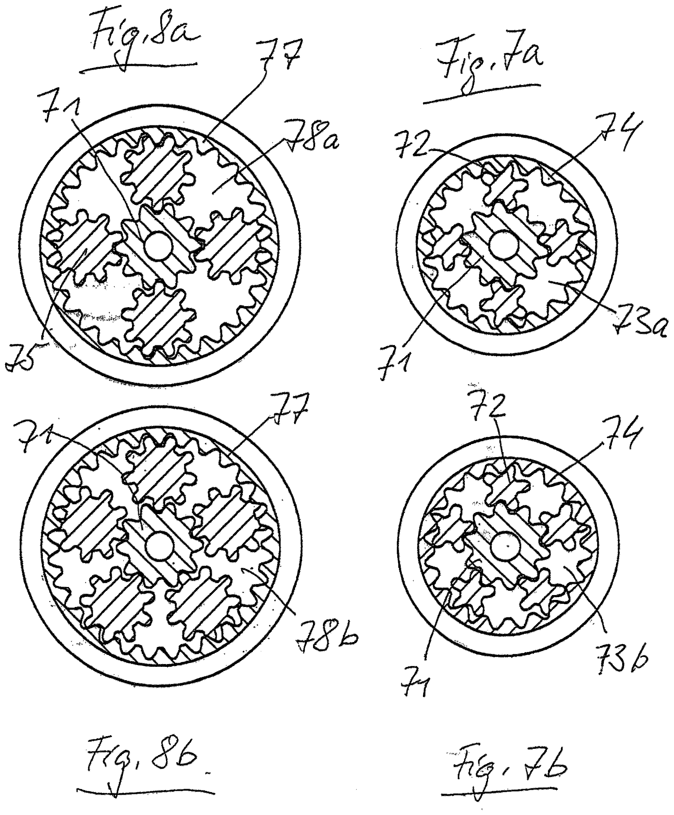

Die Fig. 7 und 8 zeigen die Vergrößerung des Entgasungsraumes bei erfindungsgemäßer radialer Vergrößerung.

Dabei ist in Fig. 7 ein herkömmlicher Planetwalzenextruder im Schnitt dargestellt. Darin ist mit 71 eine Zentralspindel, mit 72 drei Planetspindeln, mit 70 ein umgebendes, zylindrisches Gehäuse und mit 74 eine innen verzahnte Buchse bezeichnet. In dem Hohlraum der innen verzahnten Buchse 74 lassen die Zentralspindel 71 und die Planetspindeln 72 Hohlräume 73 frei. Die Planetspindeln 72 tragen an ihrem Umfang jeweils 5 Zähne. Im Ausführungsbeispiel ergibt sich dabei ein Hohlraumquerschnitt (quer zur Extruderlängsrichtung) mit einer Fläche von 2583 Quadratmillimeter.

In Fig. 8 ist eine radiale Vergrößerung des Planetwalzenextruder/Modul-Querschnittes dargestellt. Darin ist die Zentralspindel 71 in ihrer ursprünglichen Form erhalten. Die Planetspindel 75 besitzen jedoch bei gleichem Verzahnungsmodul im Unterschied zu den Planetspindeln 72 neun Zähne 75 mit entsprechend größerem Teilkreisdurchmesser.

Dieser Konfiguration sind das Gehäuse 76 und die innen verzahnte Buchse 77 durch entsprechende Vergrößerung angepaßt.

Der Hohlraum 78 ist evident etwa doppelt so groß wie der Hohlraum 73 nach Fig. 7. Im Ausführungsbeispiel ergibt sich bei vergleichbarem Hohlraumquerschnitt eine Fläche von 4960 Quadratmillimeter.

Die Fig. 7a und 8a zeigen Planetwalzenextruder/Modul-Querschnitte die mit den Querschnitten nach Fig. 7 und 8 bis auf die Anzahl der Planetspindeln identisch sind. Bei den vier statt drei eingesetzten Planetspindeln 72 bzw. 75. Dabei ergibt sich in Fig. 7a eine Querschnittsfläche von 2314 Quadratmillimeter und in Fig. 8a eine Querschnittsfläche von 4204 Quadratmillimeter.

Die Fig. 7b und 8b zeigen Planetwalzenextruder/Modul-Querschnitte die mit den Querschnitten nach Fig. 7 und 8 bis auf die Anzahl der Planetspindeln identisch sind. Bei den fünf statt drei eingesetzten Planetspindeln 72 bzw. 75. Dabei ergibt sich in Fig. 7a eine Querschnittsfläche von 2104 Quadratmillimeter und in Fig. 8a eine Querschnittsfläche von 3500 Quadratmillimeter.

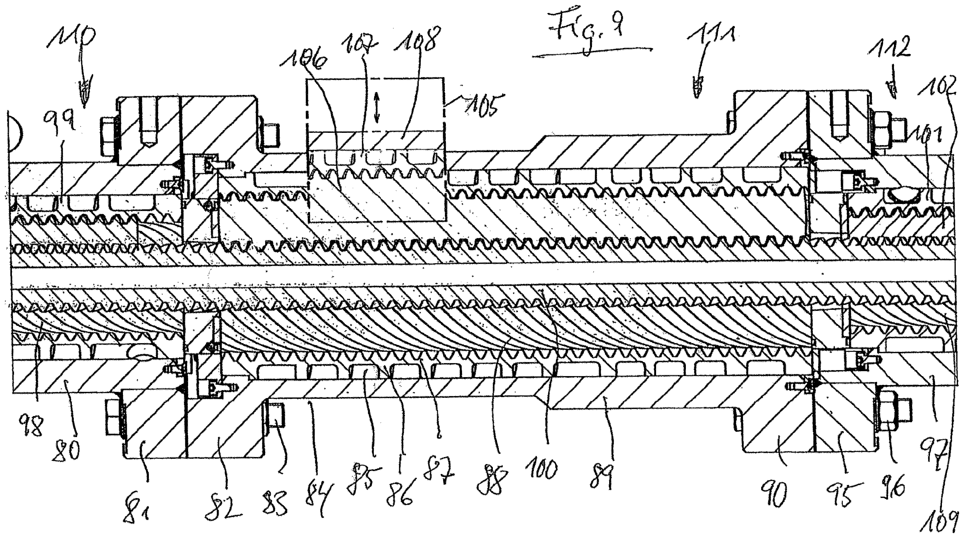

Fig. 9 zeigt einen Längsschnitt durch drei Planetwalzenextruderabschnitte/Module, von denen die Abschnitte/Module 110 und 112 den Abschnitt 111 zwischen sich einschließen. Alle drei Abschnitte haben eine gemeinsame Zentralspindel 100.

Zum Abschnitt 110 gehört ein Gehäuse 80 mit einer innen verzahnten Buchse 99. Die Buchse 99 ist außen mit Kühlkanälen versehen, durch die im Betriebsfall Wasser als Temperierungsmittel strömt.

Innen ist die Buchse mit einer Verzahnung versehen und umschließt die Buchse 99 drei Planetspindeln 98. Die Planetspindeln 98 kämmen mit ihrer Außenverzahnung mit der Innenverzahnung der Buchse 99. Darüber hinaus kämmen die Planetspindeln 98 mit ihrer Verzahnung mit der Verzahnung der Zentralspindel 100. In den Merkmalen entspricht der Abschnitt 110 der Darstellung nach Fig. 7.

Zum Abschnitt 111 gehört ein Gehäuse 97 mit einer innen verzahnten Buchse 101. Außen besitzt die Buchse 97 die gleichen Kühlkanäle und Kühlung wie der Abschnitt 110. Die Buchse 97 umschließt drei Planetspindeln 102.

Die Planetspindeln 102 kämmen mit der umgebenden Innenverzahnung und der Zentralspindel 100. Insoweit besteht Übereinstimmung mit dem Abschnitt 110.

Zum Abschnitt 111 gehören ein Gehäuse 89 mit einer Buchse 86. Außen besitzt die Buchse 86 Kühlkanäle 85, innen eine Verzahnung 87. Die Buchse 86 umschließt drei Planetspindeln 88, die ihrerseits die Zentralspindel 100 umschließen. Dabei kämmen die Planetspindeln 88 mit der Innenverzahnung 87 und der Außenverzahnung der Zentralspindel.

Im Unterschied zu den Planetspindeln 98 und 109 besitzen die Planetspindeln 88 des Abschnittes 111 aber mehr Zähne und bei gleichem Zahnmodul einen deutlich größeren Teilkreisdurchmesser. Dem ist die Innenverzahnung 87 der Buchse 86 angepaßt, so daß das Gehäuses 89 entsprechen größer ist.

Das Gehäuse 86 ist an einem Ende mit dem Gehäuse 80 des Abschnittes 110 und am anderen Ende mit dem Gehäuse 97 verschraubt. Zur Verschraubung sind am einen Ende Flansche 81 und 82 und am anderen Ende Flansche 90 und 95 vorgesehen. Die zugehörigen Schrauben sind mit 83 und 96 bezeichnet.

Der Rohrmantel des Gehäuses 89 besitzt im Bereich 84 in Anpassung an die geringere Belastung des Gehäuses bei einem Entgasungsbetrieb eine Verjüngung.

Die Fig. 9 zeigt zugleich strichpunktiert ein Fenster 105, in dem ersichtlich ist, welche Abmessungen das dort mit 108 bezeichnete Gehäuse hat, wenn Planetspindeln 106 zur Anwendung kommen, die aufgrund einer noch größeren Zähnezahl eine weitere radiale Vergrößerung verursachen. Die dabei entstehende Gehäusebuchse ist mit 107 bezeichnet.

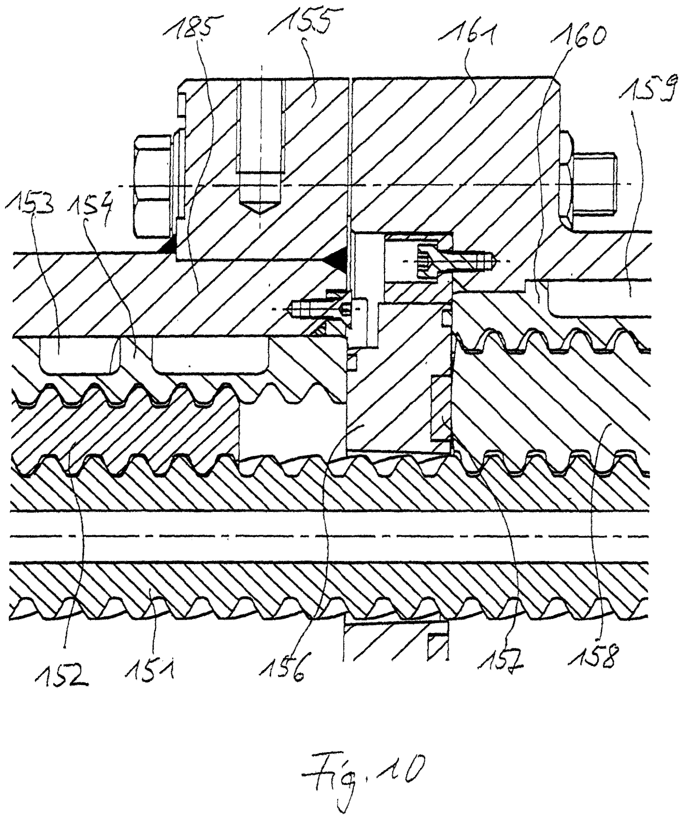

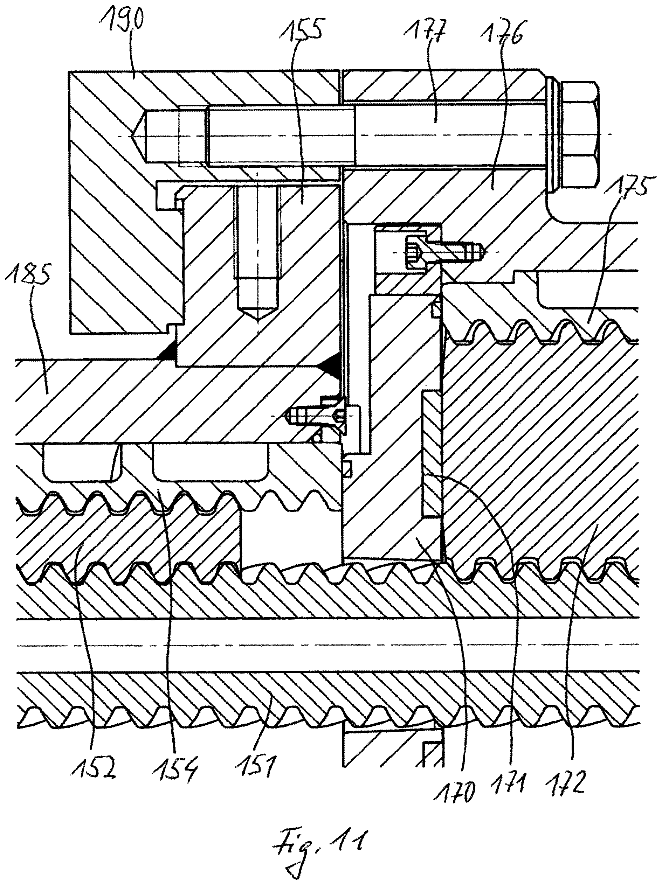

Die Fig. 10 und 11 beinhalten Varianten der in Fig. 5 und 6 dargestellten Bauweise. Im Unterschied zu den Fig. 5 und 6 verläuft die Extrusionsrichtung in den Ansichten nach Fig. 10 und 11 von rechts nach links. Das wird aus der Position des Anlaufringes 156 deutlich. Der Anlaufring 156 gehört zu einem radial vergrößerten Entgasungsmodul in Planetwalzenextruderbauwese, aus dem eine entgaste plastische Masse mit allen Bestandteilen für die Herstellung eines Haftklebers mit Ausnahme eines Vernetzungsmittels in einen normalen Planetwalzenextrudermodul übergegeben wird, der die Aufgabe hat, Vernetzungsmittel zuzumischen und die Masse auf Extrusionstemperatur zu temperieren.

Zwischen dem Anlaufring 156 und der Zentralspindel besteht nur ein geringer Spalt. Dadurch bildet der Anlaufring 156 einen Stauring. Schmelze staut sich vor dem Anlaufring und bildet eine natürliche Dichtung.

Wie in Fig. 4 und 5 ist auch nach Fig. 10 und 11 dem radial vergrößerten Entgasungsmodul nach ein anderer Planetwalzenextrudermodul vorgeordnet.

Dieser vorgeordnete Planetwalzenextrudermodul besitzt wie alle anderen Planetwalzenextruder einen Anlaufring. Auch dieser Anlaufring ist wie der Anlaufring 156 als Stauring ausgebildet, so daß sich Schmelze vor diesem Ring staut und gleichfalls eine natürliche Dichtung bildet.

Im Ergebnis ergibt sich am Ende des Entgasungsmoduls und vor dem Eintritt in den Entgasungsmodul ein Schmelzestau. Beide Staus dichten den Entgasungsraum ab.

Im Übrigen ist im Ausführungsbespiel zwischen den Flanschen der Gehäuse bzw. zwischen den Flanschen und dem Adapter eine Dichtung vorgesehen.

Der radial vergrößerte Entgasungsmodul besitzt ein sehr viel größeres Hohlraumvolumen als der nachgeordnete normale Planetwalzenextrudermodul. Das größere Hohlraumvolumen bietet bessere Entgasungsbedingungen als ein normaler Planetwalzenextrudermodul.

Der radial vergrößerte Entgasungsmodul besitzt ein Gehäuse mit einer Buchse 160, die außen mit Kanälen 159 für die Temperierung der plastischen Masse und innen mit der gleichen Verzahnung wie die Zentralspindel 151, aber mit anderem Teilkreisdurchmesser versehen ist. Der Teilkreisdurchmesser entspricht grob der Summe aus dem Teilkreisdurchmesser der Zentralspindel 151 und des doppelten Durchmessers von Planetspindeln 158. Grob heißt, dabei ist ein notwendiges Spiel in der Verzahnung berücksichtigt, damit die Planetspindeln einerseits mit der Zentralspindel 151 und andererseits mit der Buchse 160 kämmen können.

Im Betrieb laufen die Planetspindel 158 in der Buchse 160 um die Zentralspindel 158 um. Dabei gleiten die Planetspindeln 158 an einem Anlaufring 156. Zur Reduzierung des Verschleißes ist der Anlaufring 156 mit einer Hartmetall-Einlage 157 versehen.

*An dem Modul 111 ist ein nicht dargestellter Gasabzug vorgesehen.*

*Dabei handelt es sich im Ausführungsbeispiel um eine Rohrleitung, die an dem Gehäuse des Moduls 111 über einer Bohrung angeflanscht ist, welche das Gehäuse und die zugehörige verzahnte Buchse durchdringt. Im Betrieb wird anfallendes Gas aus dem Entgasungsmodul abgezogen. Dabei ist die Entgasung umso stärker, je größer der Unterdruck in der Rohrleitung ist.*

*Die Rohrleitung ist auch bei starker Saugleistung ausreichend, wenn die zu entgasende Schmelze eine hohe Zähigkeit hat. Das ist der Fall, wenn die Schmelze zu einem wesentlichen Teil aus Elastomeren für die Herstellung von Klebern besteht.*

*In anderen Ausführungsbeispielen mit einer weniger zähen Schmelze sitzt an dem Gehäuse des Moduls ein Doppelschneckenextruder, der leer läuft und gleichwohl anfallendem Gas Gelegenheit gibt, in die Rohrleitung zu entweichen. Leer Laufen heißt, daß der Doppelschneckenextruder so läuft, als würde er Material in den Extruder fördern. Das führt dazu, daß alle Schmelze, die vom Gas mitgerissen wird, von dem Doppelschneckenextruder zurück gedrängt wird, während das Gas infolge des Spiels zwischen den Schnecken und dem umgebenden Gehäuse Gelegenheit zum Entweichen hat. Der Doppelschneckenextruder in ein Seitenarmextruder. In anderen Ausführungsbeispielen sind Seitenarmextruder mit anderer Bauart vorgesehen.*

Der normale Planetwalzenextrudermodul besitzt Planetspindeln 152 mit etwa dem halben Teilkreisdurchmesser wie die Planetspindeln 158. Die zugehörige Buchse ist mit 154 bezeichnet und sitzt in einem Gehäuse 185 und besitzt Kühlkanäle 153. Das Gehäuse 185 setzt sich aus einem Rohr und einem angeschweißten Kragen 155 zusammen.

Das Gehäuse 161 des radial vergrößerten Entgasungsmoduls ist mit dem Kragen 155 verschraubt. Dazu sind entsprechende Durchgangslöcher in dem Kragen 155 und dem Gehäuse 161 vorgesehen, die mit Schrauben durchdrungen werden, so daß die Schrauben gegenüber am Gehäuse 161 vorragen und mit Muttern verspannt werden.

Der Anlaufring 156 umgibt die Zentralspindel 151 in einem Abstand, bei dem die plastische Masse aus dem Entgasungsmodul in den nachgeordneten Planetwalzenmodul strömen kann.

Fig. 11 zeigt einen Entgasungsmodul in Planetwalzenextruderbauart, der noch weitere radial vergrößert ist als der Entgasungsmodul nach Fig. 10. Der Entgasungsmodul besitzt ebenfalls umlaufende Planetspindeln 172, ein Gehäuse 176 und eine Buchse 175, einen Anlaufring 170 mit einer Hartmetalleinlage 171.

Der dem Entgasungsmodul nachgeordnete Planetwalzenextrudermodul ist der gleiche wie in Fig. 10. Alle Teile des nachgeordneten Planetwalzenextrudermoduls tragen die gleichen Bezeichnungen wie in Fig. 10.

Der weiter vergrößerte Entgasungsmodul besitzt noch bessere Entgasungsvoraussetzungen.

Durch die weitere Vergrößerung des Entgasungsmoduls ist eine andere Verbindung des Entgasungsmoduls mit dem nachgeordneten Planetwalzenextruder vorgesehen.

Zwar ist in dem Ausführungsbeispiel nach Fig. 11 für die Verbindung auch eine Verschraubung vorgesehen. Dazu befinden sich entsprechende Durchgangslöcher in dem Gehäuse 176. Die Verbindung mit dem Kragen 155 erfolgt nach Fig. 11 über einen Adapter 190. Der Adapter 190 ist ein Ring mit einem Innenkragen. Mit dem Innenkragen greift der Adapter 190 in eine Nut des Kragens 155, die den Adapter zentriert und auch ein Fluchten beider Gehäuse 176 und 185 sicherstellt.

## Patentansprüche

1. Extruder zur Herstellung und Verarbeitung von Polymeren und Polymermischungen oder anderen Stoffen,
mit mindestens einem Planetwalzenextruder oder Planetwalzenextruderabschnitt (11, 30, 31, 40, 41, 42, 50, 55, 61, 62. 158) oder Planetwalzenextrudermodul,
wobei der Planetwalzenextruder/Abschnitt/Modul (11, 30, 31, 40, 41, 42, 50, 55, 61, 62. 158) ein Gehäuse besitzt, in dem eine außen verzahnte Zentralspindel (71, 100, 151) und verschiedene außen verzahnte Planetspindeln (72, 88, 98, 102, 106, 152, 172) umlaufen, die zugleich mit der Verzahnung der Zentralspindel (71, 100, 151) und einer Innenverzahnung einer Buchse kämmen, welche in dem Gehäuse (74, 76 80,89,108, 176, 185) sitzt,
wobei zwischen der Buchse (1, 77, 86, 97, 99, 107, 154, 160, 175) und dem umgebenden Gehäuse (74, 76 80,89,108, 176, 185)eine Temperierung vorgesehen ist,
insbesondere mit einer Temperierungsmittel mittels Kanälen, welche wie Gewindegänge an der Buchsenaußenfläche verlaufen und das Temperierungsmittel in axialer Richtung führen,
wobei die Polymere und Polymermischungen in dem Extruder schmelzen und anschließend in dem Planetwalzenextruderabschnitt (11, 30, 31, 40, 41, 42, 50, 55, 61, 62. 158) oder Planetwalzenextrudermodul entgast werden,
- wobei dem zur Entgasung bestimmten Planetwalzenextruderabschnitt(11, 30, 31, 40, 41, 42, 50, 55, 61, 62. 158) ein Planetwalzenextruderabschnitt (11, 30, 31, 40, 41, 42, 50, 55, 61, 62. 158) vorgeordnet ist und beide Planetwalzenextruderabschnitte (11, 30, 31, 40, 41, 42, 50, 55, 61, 62. 158)eine gemeinsame Zentralspindel besitzen,
- wobei zur Entgasung ein Unterdruck an eine Entgasungsöffnung des Planetwalzenextruderabschnitt (11, 30, 31, 40, 41, 42, 50, 55, 61, 62. 158)oder des Planetwalzenextrudermodulos angelegt wird,
- mit einem Planetwalzenextruder oder Planetwalzenextruderabschnitt (11, 30, 31, 40, 41, 42, 50, 55, 61, 62. 158), der höchstens zu 70 bis 90% oder weniger mit zu entgasendem Material gefüllt ist,
- wobei der mit Material gefüllte Hohlraum des zur Entgasung bestimmten Planetwalzenextruderabschnitts (11, 30, 31, 40, 41, 42, 50, 55, 61, 62. 158) vergrößert ist,
**gekennzeichnet durch**
- eine radiale Vergrößerung des Hohlraumes des zur Entgasung bestimmten Planaetwalzenextruderabschnitts (11, 30, 31, 40, 41, 42, 50, 55, 61, 62. 158),
- wobei sich am Ende des zur Entgasung bestimmten
Planetwalzenextruderabschnitts (11, 30, 31, 40, 41, 42, 50, 55, 61, 62. 158) und vor dem Eintritt in den zur Entgasung bestimmten
Planetwalzenextruderabschnitts (11, 30, 31, 40, 41, 42, 50, 55, 61, 62. 158)ein Schmelzestau ergibt,
- wobei die Schmelzstaus durch Stauringe verursacht werden,
- wobei jeder Stauring zur Zentralspindel (71, 100, 151) einen Spalt bildet, der dem durchströmenden Extrusionsmaterial einen solchen Widerstand entgegensetz, daß sich eine Materialschicht aufbaut, welche den Durchtritt von Luft bzw. Gas verhindert.

2. Extruder nach Anspruch 1, **dadurch gekennzeichnet, daß** bei einer radialen Vergrößerung die Zentralspindel(71, 100, 151) beibehalten wird und die Planetspindeln (72, 88, 98, 102, 106, 152, 172) und das Gehäuse (74, 76 80,89,108, 176, 185)mit der Gehäusebuchse (1, 77, 86, 97, 99, 107, 154, 160, 175) radial vergrößert werden, wobei die Planetspindeln (72, 88, 98, 102, 106, 152, 172) und die Gehäusebuchse (1, 77, 86, 97, 99, 107, 154, 160, 175) unter Beibehaltung des Verzahnungsmoduls der Zentralspindel (71, 100, 151) mit größeren Zähnezahlen versehen werden.

3. Extruder nach Anspruch 2, **dadurch gekennzeichnet, daß** die Planetspindeln (72, 88, 98, 102, 106, 152, 172) für Zentralspindeln(71, 100, 151) aus einer Baugröße von mindestens 120mm eine Zähnezahl von mindestens 8, vorzugsweise von mindestens 9, noch weiter bevorzugt von mindestens 10 und höchst bevorzugt von mindestens 11 aufweisen

4. Extruder nach Anspruch 2, **dadurch gekennzeichnet, daß** die Planetspindeln (72, 88, 98, 102, 106, 152, 172) für Zentralspindeln aus einer Baugröße von höchstens 100mm eine Zähnezahl von
mindestens 7, vorzugsweise von mindestens 8, noch weiter bevorzugt von mindestens 9 und höchst bevorzugt von mindesten 10 aufweisen.

5. Extruder nach Anspruch 2, **dadurch gekennzeichnet, daß** die Planetspindeln (72, 88, 98, 102, 106, 152, 172) für Zentralspindeln (71, 100, 151) aus einer Baugröße von höchstens 70mm eine Zähnezahl von mindestens 6, vorzugsweise von mindestens 7, noch weiter bevorzugt von mindestens 8 und höchst bevorzugt von mindestens 9 aufweisen.

6. Extruder nach einem der Ansprüche 2 bis 5, **dadurch gekennzeichnet, daß** die Planetspindeln (72, 88, 98, 102, 106, 152, 172) der größeren Baugröße unmittelbar mit der Zentralspindel(71, 100, 151) der kleineren Baugröße kämmen oder mit einer innen und außen verzahnten Hülse kämmen, die auf der Zentralspindel (71, 100, 151) aufgeschraubt ist.

7. Extruder nach Anspruch 2, **dadurch gekennzeichnet, daß**
- bei radialer Vergrößerung die Zentralspindel (71, 100, 151) beibehalten wird und
- ein Gehäuse und eine Buchse einer größeren Baugröße mit anderem Verzahnungsmodul verwendet werden und
- die Planetspindeln (72, 88, 98, 102, 106, 152, 172) unter Beibehaltung des Verzahnungsmoduls der Buchse (1, 77, 86, 97, 99, 107, 154, 160, 175) radial vergrößert werden und
- auf die Zentralspindel (71, 100, 151) eine innen und außen verzahnte Hülse aufgeschraubt wird,
- wobei die Planetspindeln (72, 88, 98, 102, 106, 152, 172) mit der Außenverzahnung der aufgeschraubten Hülse kämmen.

8. Extruder nach einem der Ansprüche 2 bis 7, **dadurch gekennzeichnet, daß** die Zentralspindel (71, 100, 151) und/oder die Planetspindeln (72, 88, 98, 102, 106, 152, 172) und/oder die Buchse (1, 77, 86, 97, 99, 107, 154, 160, 175) aus folgender Baureihe ausgewählt sind:
| BG | SVM |
|---|---|
| 30 | 1 |
| 50 | 1,5 |
| 70 | 2,5 |
| 100 | 3 |
| 120 | 3 |
| 150 | 3 |
| 180 | 3; 3,5 |
| 200 | 3; 3,5 |
| 250 | 3; 3,5 |
| 280 | 3,5 |
| 300 | 3,5 |
| 350 | 3,5 |
| 400 | 3,5 |
| SBG | SVM |
|---|---|
| 150 | 5,5 |
| 200 | 5,5 |
| 280 | 5,5 |
| 300 | 5,5 |
| 400 | 5,5 |
| 500 | 5,5 |
wobei mit BG Baugrößen in Standardausführung bezeichnet sind und mit SBG Baugrößen in schwerer Ausführung bezeichnet sind und die Zahlenangaben für die gleich dem Teilkreisdurchmesser der Innenverzahnung der Buchse (1, 77, 86, 97, 99, 107, 154, 160, 175) bzw. der Innenverzahnung des Gehäuses sind und SVM den Verzahnungsmodul bezeichnet.

9. Extruder nach einem der Ansprüche 1 bis 8, **dadurch gekennzeichnet, daß** der radial vergrößerte Extruderabschnitt/Modul (11, 30, 31, 40, 41, 42, 50, 55, 61, 62. 158)bei einem vorgeordneten Extruderabschnitt mit einem Gehäuse (74, 76 80,89,108, 176, 185), zu der die verwendete Zentralspindel (71, 100, 151) gehört, einlaufseitig mit einer sich erweiternden Öffnung versehen ist.

10. Extruder nach einem der Ansprüche 1 bis 9, **dadurch gekennzeichnet, daß** der radial vergrößerte Extruderabschnitt/Modul(11, 30, 31, 40, 41, 42, 50, 55, 61, 62. 158) bei einem nachgeordneten Extruderabschnitt mit einem Gehäuse(74, 76 80,89,108, 176, 185), zu der die verwendete Zentralspindel (71, 100, 151) gehört, auslaufseitig mit einer sich verjüngenden Öffnung versehen ist.

11. Extruder nach Anspruch 9 oder 10, **dadurch gekennzeichnet, daß** Einlauföffnung und/oder die Auslauföffnung durch einen Ring gebildet wird.

12. Extruder nach Anspruch 11, **dadurch gekennzeichnet, daß** in dem einlaufseitigen Ring Entgasungsöffnungen vorgesehen sind, die über mindestens einen Kanal mit mindestens einer Entgasungsleitung verbunden sind.

13. Extruder nach Anspruch 12, **dadurch gekennzeichnet, daß** die Entgasungsöffnungen auf dem Ring näher an der Buchse (1, 77, 86, 97, 99, 107, 154, 160, 175) als an der Zentralspindel(71, 100, 151) liegen, vorzugsweise auf einer Ringfläche im äußeren Drittel des Hohlraumes zwischen der Zentralspindel und der Buchse (1, 77, 86, 97, 99, 107, 154, 160, 175) liegen.

14. Extruder nach einem der Ansprüche 1 bis 13, **dadurch gekennzeichnet, daß** eine der Planetspindeln (72, 88, 98, 102, 106, 152, 172) als Putzer ausgebildet ist.

15. Extruder nach Anspruch 14, **dadurch gekennzeichnet, daß** die als Putzer dienende Planetspindel (72, 88, 98, 102, 106, 152, 172) aus zwei Teilen besteht, wobei der eine Teil mit einem zentrischen Zapfen in eine Bohrung des anderen Teiles greift und wobei sich in der Bohrung eine Feder befindet.

16. Extruder nach einem der Ansprüche 1 bis 15, **gekennzeichnet durch** die Verwendung von Adaptern (47,50) zwischen dem erfindungsgemäß radial vergrößerten Abschnitt/Modul (11, 30, 31, 40, 41, 42, 50, 55, 61, 62. 158)und einem vorgeordneten, im Durchmesser kleineren AbschnittlModul(11, 30, 31, 40, 41, 42, 50, 55, 61, 62. 158)und/oder einem nachgeordneten, im Durchmesser kleineren Abschnitt/Modul.

17. Extruder nach Anspruch 16, **gekennzeichnet durch** einen einteiligen oder mehrteiligen Adapter(47,50).

18. Extruder nach Anspruch 16 oder 17, **gekennzeichnet durch** einen ringförmigen Adapter(47,50).

19. Extruder nach einem der Ansprüche 16 bis 18, **gekennzeichnet durch** einen zwischen den Befestigungsflanschen an Extruderabschnittsgehäusen angeordneten Adapter(47,50).

20. Extruder nach einem der Ansprüche 16 bis 18, **dadurch gekennzeichnet, daß** der Adapter(47,50) zumindest das kleinere Gehäuse (74, 76 80,89,108, 176, 185) außen umfaßt.

21. Extruder nach einem der Ansprüche 16 bis 20, **dadurch gekennzeichnet, daß** die Adapter (47,50) und die Flansche zentrierend ineinander greifen, wobei das eine Teil vorzugsweise mit einer zylindrischen Erhebung und das korrespondierende andere Teil mit einer entsprechenden Vertiefung versehen sind.

22. Extruder nach einem der Ansprüche 1 bis 21, **gekennzeichnet durch** eine Dichtung an der Verbindung zwischen dem zur Entgasung bestimmten Extrudermodul bzw. Extruderabschnitt (11, 30, 31, 40, 41, 42, 50, 55, 61, 62. 158)und einem vorgeordneten und/oder nachgeordneten Extrudermodul bzw. Extruderabschnitt (11, 30, 31, 40, 41, 42, 50, 55, 61, 62. 158).

23. Extruder nach Anspruch 22, **gekennzeichnet durch** eine Dichtung an der Verbindung der zugehörigen Gehäuse(74, 76 80,89,108, 176, 185) und einen Materialstau vor dem Einlauf des zur Entgasung bestimmten Extrudermoduls bzw. Extruderabschnitts (11, 30, 31, 40, 41, 42, 50, 55, 61, 62. 158)und auslaufseitig im zur Entgasung bestimmten Extrudermodul bzw. Extruderabschnitt(11, 30, 31, 40, 41, 42, 50, 55, 61, 62. 158).

24. . Extruder nach einem der Ansprüche 16 bis 23, **gekennzeichnet durch** einen temperierten Adapter(47,50).

25. Extruder nach einem der Ansprüche 13 bis 18, **dadurch gekennzeichnet, daß** der Adapter(47,50) allein oder mit anderen Teilen zugleich einen Anlaufring und/oder einen Stauring und/oder einen Entgasungsring und/oder einen Ring für Meßstellen und/oder eine Zentrierung bildet.

26. Extruder nach einem der Ansprüche 1 bis 25, **dadurch gekennzeichnet, daß** die Planetspindeln (72, 88, 98, 102, 106, 152, 172) zur Erzeugung eines auslaufseitigen, dichtend wirkenden Materialstaus auslaufseitig mehr Förderwirkung als einlaufseitig aufweisen.

27. Extruder nach Anspruch 25, **dadurch gekennzeichnet, daß** auslaufseitig zusätzlich kurze Planetspindeln (72, 88, 98, 102, 106, 152, 172) vorgesehen sind und/oder zahnreduzierte Planetspindeln (72, 88, 98, 102, 106, 152, 172) auslaufseitig weniger zahnreduziert sind als einlaufseitig.

## Claims

1. Extruder for producing and processing polymers and polymer mixtures or other substances,
with at least one planetary roller extruder or planetary roller extruder section (11, 30, 31, 40, 41, 42, 50, 55, 61, 62. 158) or planetary roller extruder module, wherein the planetary roller extruder/section/module (11, 30, 31, 40, 41, 42, 50, 55, 61, 62. 158) is equipped with a housing, in which an externally toothed central spindle (71, 100, 151) and various externally toothed planetary spindles (72, 88, 98, 102, 106, 152, 172) rotate, which at the same time mesh with the toothing of the toothed planetary spindle (71, 100, 151) and an inner toothing of a sleeve that sits in the housing (74, 76, 80,89,108, 176, 185),
wherein between the sleeve(1, 77, 86, 97, 99, 107, 154, 160, 175) and thesurroundinghousing(74, 76 80, 89, 108, 176, 185)there is provided a temperature control means,
in particular with a temperature control means by channels that run like a screw thread on the outer surface of the housing and thetemperature control means run in the axial direction,
- wherein the polymers and polymer mixtures melt in the extruder and are subsequently degassed in the planetary roller extruder section (11, 30, 31, 40, 41, 42, 50, 55, 61, 62,158) or planetary roller extruder module,
- wherein the planetary roller extruder section (11, 30, 31, 40, 41, 42, 50, 55, 61, 62. 158) defined for the degassing is arranged before a planetary roller extruder section (11, 30, 31, 40, 41, 42, 50, 55, 61, 62,158) and both planetary roller extruder sections (11, 30, 31, 40, 41, 42, 50, 55, 61, 62, 158) possess a common central spindle,
- wherein for the degassing a reduced pressure is applied to one degassing opening of the planetary roller extruder section (11, 30, 31, 40, 41, 42, 50, 55, 61, 62, 158) or to the planetary roller extruder module,
- with a planetary roller extruder or planetary roller extruder section (11, 30, 31, 40, 41, 42, 50, 55, 61, 62, 158), which is filled up to 70 to 90% or less with the material to be degassed
- wherein the material-filled cavity of the planetary roller extruder section (11, 30, 31, 40, 41, 42, 50, 55, 61, 62, 158) designated for the degassing is enlarged,
**characterised by**
- the material-filled cavity of the planetary roller extruder section (11, 30, 31, 40, 41, 42, 50, 55, 61, 62, 158) designated for the degassing is enlarged,
- wherein at the end of the planetary roller extruder section (11, 30, 31, 40, 41, 42, 50, 55, 61, 62,158) designated for the degassing and before the entry into the (11, 30, 31, 40, 41, 42, 50, 55, 61, 62,158) planetary roller extruder section (11, 30, 31, 40, 41, 42, 50, 55, 61, 62, 158) designated for the degassing, there occurs a melt compression,
- wherein the compressed melt is caused by compression rings,
- wherein each compression ring on the central spindle (71, 100, 151) forms a gap which counters such a resistance to the flowing extrusion material,such that a material layer is built up that prevents the passing through of air and/orgas,

2. Extruder according to Claim 1, **characterised in that** by a radial enlargement the central spindle (71, 100, 151) is retained and the planetary spindles (72, 88, 98, 102, 106, 152, 172) and the housing (74, 76, 83, 80, 89,108, 176, 185) with the housing sleeve (1, 77, 86, 97, 99, 107, 154, 160, 175) are radially enlarged, wherein the planetary spindles (1, 77, 86, 97, 99, 107, 154, 160, 175) and the housing sleeve (1, 77, 86, 97, 99, 107, 154, 160, 175) are provided with greater numbers of teeth on the retained toothing module of the central spindle (71, 100, 151).

3. Extruder according to Claim 2, **characterised in that** the planetary spindles (72, 88, 98, 102, 106, 152, 172) for central spindles (71, 100, 151) in a machine size of at least 120 mm exhibit a tooth number of at least 8, preferably at least 9, even more preferably at least 10 and most preferably at least 11.

4. Extruder according to Claim 2, **characterised in that** the planetary spindles (72, 88, 98, 102, 106, 152, 172) for central spindles in a machine size of at most 100 mm exhibit a tooth number of at least 7, preferably of at least 8, even more preferably at least 9, and most preferably at least 10.

5. Extruder according to Claim 2, **characterised in that** the planetary spindles (72, 88, 98, 102, 106, 152, 172) for the central spindles (71, 100, 151) in a machine size of at least70 mm, exhibit a tooth number of at least 6, preferably at least 7, even more preferably of at least 8 and most preferably of at least 9.

6. Extruder according to one of claims 2 to 5, **characterised in that** the planetary spindles (72, 88, 98, 102, 106, 152, 172) of the larger machine size mesh directly with the central spindle (71, 100, 151) of the smaller machine sizeor mesh with an inner and exterior toothed sleeve that is screwed onto the central spindle (71, 100, 151).

7. Extruder according to Claim 2, **characterised in that**
- for the radial enlargement the central spindle (71, 100, 151) is retained and
- a housing and a sleeve are used with a greater size with another toothing module and
- the planetary spindles (72, 88, 98, 102, 106, 152, 172) are radially enlarged by retaining the toothing module of the sleeve (1, 77, 86, 97, 99, 107, 154, 160, 175) and
- an inner and exterior toothed sleeve is screwed onto the central spindle (71, 100, 151),
- wherein the planetary spindles (72, 88, 98, 102, 106, 152, 172) mesh with the exterior toothing of the screwed-on sleeve.

8. Extruder according to one of claims 2 to 7, **characterised in that** thecentral spindle (71, 100, 151) and/or the planetary spindles (72, 88, 98, 102, 106, 152, 172) and/or the sleeve (1, 77, 86, 97, 99, 107, 154, 160, 175) areselected from the following design series:
| MS | TM |
|---|---|
| 30 | 1 |
| 50 | 1,5 |
| 70 | 2,5 |
| 100 | 3 |
| 120 | 3 |
| 150 | 3 |
| 180 | 3; 3,5 |
| 200 | 3; 3,5 |
| 250 | 3; 3,5 |
| 280 | 3,5 |
| 300 | 3,5 |
| 350 | 3,5 |
| 400 | 3,5 |
| LMS | LTM |
|---|---|
| 150 | 5,5 |
| 200 | 5,5 |
| 280 | 5,5 |
| 300 | 5,5 |
| 400 | 5,5 |
| 500 | 5,5 |
wherein machine sizes in standard versions are designated as MS and the toothing data are designated for both the pitch circle of the inner toothing of the sleeve (1, 77, 86, 97, 99, 107, 154, 160, 175) and/or the inner toothing of the housing and LTM for the toothing module.

9. Extruder according to one of claims 1 to 8, **characterised in that** the radially enlarged extruder section/module (11, 30, 31, 40, 41, 42, 50, 55, 61, 62,158) for an upstream extruder section with a housing (74, 76 86 80, 89, 108, 176, 185), to which belongs the utilised central spindle (71, 100, 151), provided on the entry side with an enlarged opening.

10. Extruder according to one of claims 1 to 9, **characterised in that** the radially enlarged extruder section/module (11, 30, 31, 40, 41, 42, 50, 55, 61, 62,158) for a downstream extruder section with a housing (74, 76 80, 89, 108, 176, 185), to which belongs the utilised central spindle (71, 100, 151)provided on the outlet side with a tapering opening.

11. Extruder according to claim 9 or 10, **characterised in that** the entry opening and/or the output opening is formed by means of a ring.

12. Extruder according to Claim 11, **characterised in that** degassing openings are provided in the entry side of the ring, and which are connected over at least one channel with at least one degassing line.

13. Extruder according to Claim 12, **characterised in that** the degassing openings on the ring lie closer on the housing (1, 77, 86, 97, 99, 107, 154, 160, 175) than on the central spindle (71, 100, 151), preferably on a ring surface in the external third of the cavity between thecentral spindle and the housing (1, 77, 86, 97, 99, 107, 154, 160, 175).

14. Extruder according to one of claims 1 to 13, **characterised in that** one of the planetary spindles (72, 88, 98, 102, 106, 152, 172) is formed as a wiper.

15. Extruder according to Claim 14, **characterised in that** the planetary spindle (72, 88, 98, 102, 106, 152, 172) utilised as the wiper consists of two parts, wherein one part with a central pin engages into a bore of the other part and wherein a spring is present in the bore.

16. Extruder according to one of claims 1 to15, **characterised by** the use of adapters (47, 50) between the radially enlarged section/module according to the invention (11, 30, 31, 40, 41, 42, 50, 55, 61, 62, 158) and an upstream section/module (11, 30, 31, 40, 41, 42, 50, 55, 61, 62, 158) having a smaller diameter and/or a downstream section/module (11, 30, 31, 40, 41, 42, 50, 55, 61, 62, 158) having a smaller diameter.

17. Extruder according to Claim 16, **characterised by** a one-piece or multi-piece adapter (47, 50).

18. Extruder according to Claim 16 or 17, **characterised by** a ring-shaped adapter (47, 50).

19. Extruder according to one of claims 16 to 18, **characterised by** an adapter (47, 50) arranged between the mounting flanges on the extruder section housing.

20. Extruder according to one of claims 16 to 18, **characterised in that** the adapter (47, 50) externally surrounds at least the smaller housing (74, 76 80, 89,108, 176, 185).

21. Extruder according to one of claims 16 to 20, **characterised in that** the adapter (47, 50) and the flange engage centrally into one another, wherein the one part is preferably provided with a cylindrical protrusion and the corresponding other part is provided with a corresponding hollow.

22. Extruder according to one of claims 1 to 21, **characterised by** a seal at the joint between the extruder module and/orextruder section (11, 30, 31, 40, 41, 42, 50, 55, 61, 62,158) designated for the degassing, and to an upstream and/or downstream extruder module orextruder section (11, 30, 31, 40, 41, 42, 50, 55, 61, 62,158).

23. Extruder according to Claim 22, **characterised by** a seal on the joint of the associated housing (74, 76 80, 89, 108, 176, 185) and a material accumulation before the entry of the extruder module or extruder section (11, 30, 31, 40, 41, 42, 50, 55, 61, 62,158) designated for the degassingand on the discharge side in the extruder module or extruder section (11, 30, 31, 40, 41, 42, 50, 55, 61, 62, 158) designated for the degassing.

24. . Extruder according to one of claims 16 to 23, **characterised by** a temperature controlled adapter (47/50)

25. Extruder according to one of claims 13 to 18, **characterised in that** the adapter (47, 50) at the same time forms alone or with other parts an accumulation ringand/or a thrust ring and/or a degassing ring and/or a ring for measuring points and/or a centering ring.

26. Extruder according to one of claims 1 to 25, **characterised in that** the planetary spindles (72, 88, 98, 102, 106, 152, 172) for generating a sealed material build-up at the discharge side possess a greater conveying effect than on the discharge side.

27. Extruder according to Claim 25, **characterised in that** on the discharge side there are provided additional short planetary spindles (72, 88, 98, 102, 106, 152, 172) and/or planetary spindles (72, 88, 98, 102, 106, 152, 172) having a reduced tooth count,said tooth count being less on the discharge side than on the input side.

## Revendications

1. Extrudeuse pour la fabrication et le traitement de polymères et de mélanges de polymères ou d'autres matières,
avec au moins une extrudeuse à rouleaux planétaires ou une section d'extrudeuse à rouleaux planétaires (11, 30, 31, 40, 41, 42, 50, 55, 61, 62, 158) ou un module d'extrudeuse à rouleaux planétaires, l'extrudeuse à rouleaux planétaires/la section/le module (11, 30, 31, 40, 41, 42, 50, 55, 61, 62, 158) possédant un boîtier dans lequel circulent une broche centrale dentée extérieurement (71, 100, 151) et différentes broches planétaires (72, 88, 98, 102, 106, 152, 172) dentées extérieurement qui s'engrènent simultanément avec la denture de la broche centrale (71, 100, 151) et une denture intérieure d'un connecteur qui est installé dans le boîtier (74, 76, 80, 89, 108, 176, 185),
un dispositif de régulation de température étant prévu entre le connecteur (1, 77, 86, 97, 99, 107, 154, 160, 175) et le boîtier (74, 76, 80, 89, 108, 176, 185),
en particulier avec un agent de régulation de température traversant des canaux qui courent comme des filets sur la surface extérieure du connecteur et conduisent l'agent de régulation de température dans la direction axiale,
les polymères et mélanges de polymères fondant dans l'extrudeuse et étant ensuite dégazés dans la section d'extrudeuse à rouleaux planétaires (11, 30, 31, 40, 41, 42, 50, 55, 61, 62, 158) ou le module d'extrudeuse à rouleaux planétaires,
- une section d'extrudeuse à rouleaux planétaires (11, 30, 31, 40, 41, 42, 50, 55, 61, 62, 158) étant disposée en amont de la section d'extrudeuse à rouleaux planétaires (11, 30, 31, 40, 41, 42, 50, 55, 61,62, 158) destinée au dégazage et les deux sections d'extrudeuse à rouleaux planétaires (11, 30, 31, 40, 41, 42, 50, 55, 61, 62, 158) possédant une broche centrale commune,
- une dépression étant appliquée pour le dégazage à un orifice de dégazage de la section d'extrudeuse à rouleaux planétaires (11, 30, 31, 40, 41, 42, 50, 55, 61, 62, 158) ou du module d'extrudeuse à rouleaux planétaire,
- avec une extrudeuse à rouleaux planétaire ou une section d'extrudeuse à rouleaux planétaires (11, 30, 31, 40, 41, 42, 50, 55, 61, 62, 158) qui est remplie au maximum entre 70 et 90%, voire moins, avec un produit à dégazer et
- la cavité remplie de produit de la section d'extrudeuse à rouleaux planétaires (11, 30, 31, 40, 41, 42, 50, 55, 61, 62, 158) destinée au dégazage étant agrandie,
**caractérisée par**
- un agrandissement radial de la cavité de la section d'extrudeuse à rouleaux planétaires (11, 30, 31, 40, 41, 42, 50, 55, 61, 62, 158) destinée au dégazage,
- une retenue de matière fondue se produisant à l'extrémité de la section d'extrudeuse à rouleaux planétaires (11, 30, 31, 40, 41, 42, 50, 55, 61, 62, 158) destinée au dégazage et avant l'entrée dans la section d'extrudeuse à rouleaux planétaires (11, 30, 31, 40, 41, 42, 50, 55, 61, 62, 158) destinée au dégazage,
- les retenues de matière fondue étant provoquées par des bagues de retenue,
- chaque bague de retenue formant par rapport à la broche centrale (71, 100, 151) une fente qui oppose au produit d'extrusion s'écoulant une telle résistance qu'il se forme une couche de produit qui empêche la circulation d'air ou de gaz.

2. Extrudeuse selon la revendication 1, **caractérisée en ce que**, lors d'un agrandissement radial, la broche centrale (71, 100, 151) est maintenue et les broches planétaires (72, 88, 98, 102, 106, 152, 172) et le boîtier (74, 76, 80, 89, 108, 176, 185) sont agrandis radialement avec le connecteur de boîtier (1, 77,86, 97, 99, 107, 154, 160, 175), les broches planétaires (72, 88, 98, 102, 106, 152, 172) et le connecteur de boîtier (1, 77, 86, 97, 99, 107, 154, 160, 175) étant dotés de plus grands nombres de dents en conservant le module de denture de la broche centrale (71, 100, 151).

3. Extrudeuse selon la revendication 2, **caractérisée en ce que** les broches planétaires (72, 88, 98, 102, 106, 152, 172) pour des broches centrales (71, 100, 151) d'une taille de 120 mm présentent un nombre de dents d'au moins 8, de préférence d'au moins 9, encore plus préférablement d'au moins 10 et le plus préférablement d'au moins 11.

4. Extrudeuse selon la revendication 2, **caractérisée en ce que** les broches planétaires (72, 88, 98, 102, 106, 152, 172) pour des broches centrales (71, 100, 151) d'une taille de 100 mm maximum présentent un nombre de dents d'au moins 7, de préférence d'au moins 8, encore plus préférablement d'au moins 9 et le plus préférablement d'au moins 10.

5. Extrudeuse selon la revendication 2, **caractérisée en ce que** les broches planétaires (72, 88, 98, 102, 106, 152, 172) pour des broches centrales (71, 100, 151) d'une taille de 70 mm maximum présentent un nombre de dents d'au moins 6, de préférence d'au moins 7, encore plus préférablement d'au moins 8 et le plus préférablement d'au moins 9.

6. Extrudeuse selon une des revendications 2 à 5, **caractérisée en ce que** les broches planétaires (72, 88, 98, 102, 106, 152, 172) de la plus grande taille s'engrènent directement avec la broche centrale (71, 100, 151) de la plus petite taille ou s'engrènent avec une douille dentée à l'intérieur et à l'extérieur qui est vissée sur la broche centrale (71, 100, 151).

7. Extrudeuse selon la revendication 2, **caractérisée en ce que**,
- lors d'un agrandissement radial, la broche centrale (71, 100, 151) est maintenue,
- un boîtier et un connecteur d'une plus grande taille avec un autre module de denture sont utilisés,
- les broches planétaires (72, 88, 98, 102, 106, 152, 172) sont agrandies radialement en conservant le module de denture du connecteur (1, 77, 86, 97, 99, 107, 154, 160, 175) et
- une douille dentée intérieurement et extérieurement est vissée sur la broche centrale (71, 100, 151),
- les broches planétaires (72, 88, 98, 102, 106, 152, 172) d'engrenant avec la denture extérieure de la douille vissée.

8. Extrudeuse selon une des revendications 2 à 7, **caractérisée en ce que** la broche centrale (71, 100, 151) et/ou les broches planétaires (72, 88, 98, 102, 106, 152, 172) et/ou le connecteur (1, 77, 86, 97, 99, 107, 154, 160, 175) sont sélectionnés parmi la gamme suivante :
| BG | SVM |
|---|---|
| 30 | 1 |
| 50 | 1,5 |
| 70 | 2,5 |
| 100 | 3 |
| 120 | 3 |
| 150 | 3 |
| 180 | 3 ; 3,5 |
| 200 | 3 ; 3,5 |
| 250 | 3 ; 3,5 |
| 280 | 3,5 |
| 300 | 3,5 |
| 350 | 3,5 |
| 400 | 3,5 |
| SBG | SVM |
|---|---|
| 150 | 5,5 |
| 200 | 5,5 |
| 280 | 5,5 |
| 300 | 5,5 |
| 400 | 5,5 |
| 500 | 5,5 |
les tailles en version standard étant désignées par BG et les tailles en version lourde étant désignées par SBG, les données chiffrées correspondant au diamètre primitif de la denture intérieure du connecteur (1, 77, 86, 97, 99, 107, 154, 160, 175) ou de la denture intérieure du boîtier et SVM désignant le module de denture.

9. Extrudeuse selon une des revendications 1 à 8, **caractérisée en ce que** la section/le module d'extrudeuse agrandi(e) radialement (11, 30, 31, 40, 41, 42, 50, 55, 61, 62, 158), avec en amont une section d'extrudeuse avec un boîtier (74, 76, 80, 89, 108, 176, 185) auquel appartient la broche centrale (71, 100, 151) utilisée, est dotée du côté entrée d'un orifice s'élargissant.

10. Extrudeuse selon une des revendications 1 à 9, **caractérisée en ce que** la section/le module d'extrudeuse agrandi(e) radialement (11, 30, 31, 40, 41, 42, 50, 55, 61, 62, 158), avec en aval une section d'extrudeuse avec un boîtier (74, 76, 80, 89, 108, 176, 185) auquel appartient la broche centrale (71, 100, 151) utilisée, est dotée du côté sortie d'un orifice se rétrécissant.

11. Extrudeuse selon la revendication 9 ou 10, **caractérisée en ce que** l'orifice d'entrée et/ou l'orifice de sortie sont constitués par une bague.

12. Extrudeuse selon la revendication 11, **caractérisée en ce que** dans la bague du côté entrée sont prévus des orifices de dégazage qui sont reliés par au moins un canal à au moins une conduite de dégazage.

13. Extrudeuse selon la revendication 12, **caractérisée en ce que** les orifices de dégazage sur la bague sont situés plus près du connecteur (1, 77, 86, 97, 99, 107, 154, 160, 175) que de la broche centrale (71, 100, 151), de préférence sont situés sur une surface annulaire dans le tiers extérieur de la cavité entre la broche centrale et le connecteur (1, 77, 86, 97, 99, 107, 154, 160, 175).

14. Extrudeuse selon une des revendications 1 à 13, **caractérisée en ce qu'**une des broches planétaires (72, 88, 98, 102, 106, 152, 172) est configurée comme un dispositif de nettoyage.

15. Extrudeuse selon la revendication 14, **caractérisée en ce que** la broche planétaire (72, 88, 98, 102, 106, 152, 172) faisant office de dispositif de nettoyage est constituée de deux parties, une partie pénétrant avec un tenon central dans un trou de l'autre partie et un ressort se trouvant dans le trou.

16. Extrudeuse selon une des revendications 1 à 15, **caractérisée par** l'utilisation d'adaptateurs (47, 50) entre la section/le module agrandi(e) radialement (11, 30, 31, 40, 41, 42, 50, 55, 61, 62, 158) selon l'invention et une section/un module (11, 30, 31, 40, 41, 42, 50, 55, 61, 62, 158) de plus petit diamètre disposé(e) en amont et/ou une section/un module de plus petit diamètre disposé(e) en aval.

17. Extrudeuse selon la revendication 16, **caractérisée par** un adaptateur (47, 50) constitué d'une partie ou de plusieurs parties.

18. Extrudeuse selon la revendication 16 ou 17, **caractérisée par** un adaptateur (47, 50) annulaire.

19. Extrudeuse selon une des revendications 16 à 18, **caractérisée par** un adaptateur (47, 50) disposé entre les brides de fixation sur des boîtiers de section d'extrudeuse.

20. Extrudeuse selon une des revendications 16 à 18, **caractérisée en ce que** l'adaptateur (47, 50) comprend au moins le plus petit boîtier (74, 76, 80, 89, 108, 176, 185) extérieurement.

21. Extrudeuse selon une des revendications 16 à 20, **caractérisée en ce que** l'adaptateur (47, 50) et la bride s'imbriquent l'un dans l'autre de façon centrée, une pièce étant dotée de préférence d'une protubérance cylindrique et l'autre partie correspondante d'un creux correspondant.

22. Extrudeuse selon une des revendications 1 à 21, **caractérisée par** un joint d'étanchéité au niveau de la liaison entre le module d'extrudeuse ou la section d'extrudeuse (11, 30, 31, 40, 41, 42, 50, 55, 61, 62, 158) destiné(e) au dégazage et un module d'extrudeuse ou une section d'extrudeuse (11, 30, 31, 40, 41, 42, 50, 55, 61, 62, 158) disposé(e) en amont et/ou en aval.

23. Extrudeuse selon la revendication 22, **caractérisée par** un joint d'étanchéité au niveau de la liaison du boîtier (74, 76, 80, 89, 108, 176, 185) associé et une retenue de matière devant l'entrée du module d'extrudeuse ou la section d'extrudeuse (11, 30, 31, 40, 41, 42, 50, 55, 61, 62, 158) destiné(e) au dégazage et du côté sortie dans le module d'extrudeuse ou la section d'extrudeuse (11, 30, 31, 40, 41, 42, 50, 55, 61, 62, 158) destiné(e) au dégazage.

24. Extrudeuse selon une des revendications 16 à 23, **caractérisée par** un adaptateur régulé en température.

25. Extrudeuse selon une des revendications 13 à 18, **caractérisée en ce que** l'adaptateur (47, 50) forme seul ou avec d'autres pièces à la fois une bague de roulement et/ou une bague de retenue et/ou une bague de dégazage et/ou une bague pour des points de mesure et/ou un centrage.

26. Extrudeuse selon une des revendications 1 à 25, **caractérisée en ce que** les broches planétaires (72, 88, 98, 102, 106, 152, 172) présentent un effet d'entraînement plus important du côté sortie que du côté entrée pour produire une retenue de matière étanche du côté sortie.

27. Extrudeuse selon la revendication 25, **caractérisée en ce que** de courtes broches planétaires (72, 88, 98, 102, 106, 152, 172) sont en outre prévues du côté sortie et/ou que des broches planétaires (72, 88, 98, 102, 106, 152, 172) à dents réduites ont des dents moins réduites du côté sortie que du côté entrée.
